(19) Europäisches Patentamt
European Patent Office
Office européen des brevets

(11) EP 3 627 880 B1

# (12) EUROPEAN PATENT SPECIFICATION

(45) Date of publication and mention of the grant of the patent:
**13.10.2021 Bulletin 2021/41**

(21) Application number: **18801952.5**

(22) Date of filing: **26.03.2018**

(51) Int Cl.:
***H04W 24/10*** *(2009.01)* ***H04B 17/24*** *(2015.01)*
***H04L 27/26*** *(2006.01)*

(86) International application number:
**PCT/JP2018/012087**

(87) International publication number:
**WO 2018/211821 (22.11.2018 Gazette 2018/47)**

## (54) COMMUNICATION DEVICE, BASE STATION, METHOD AND RECORDING MEDIUM

KOMMUNIKATIONSVORRICHTUNG, BASISSTATION, VERFAHREN UND AUFZEICHNUNGSMEDIUM

DISPOSITIF DE COMMUNICATION, STATION DE BASE, PROCÉDÉ, ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2017 JP 2017098801**

(43) Date of publication of application:
**25.03.2020 Bulletin 2020/13**

(73) Proprietor: **Sony Group Corporation**
**Tokyo 108-0075 (JP)**

(72) Inventors:
- **KIMURA, Ryota**
  **Tokyo 108-0075 (JP)**
- **MATSUDA, Hiroki**
  **Tokyo 108-0075 (JP)**
- **KUSASHIMA, Naoki**
  **Tokyo 108-0075 (JP)**
- **TANG, Yifu**
  **Tokyo 108-0075 (JP)**
- **SANADA, Yukitoshi**
  **Yokohama-shi**
  **Kanagawa 223-8522 (JP)**

(74) Representative: **Witte, Weller & Partner Patentanwälte mbB**
**Postfach 10 54 62**
**70047 Stuttgart (DE)**

(56) References cited:
**EP-A1- 3 282 632 WO-A1-2013/051089**

- **"3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.0.0, 29 September 2016 (2016-09-29), pages 1-314, XP051172664, [retrieved on 2016-09-29]**
- **ERICSSON: "On measurement capacity in NR", 3GPP DRAFT; R4-1705609 ON MEASUREMENT CAPACITY IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Hangzhou; 20170515 - 20170519 14 May 2017 (2017-05-14), XP051277669, Retrieved from the Internet: URL:http://www.3gpp.org/ftp/Meetings_3GPP_SYNC/RAN4/Docs/ [retrieved on 2017-05-14]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- CATT: "Limited numerology set for NR", 3GPP DRAFT; R1-1611361_NR_LIMITED_NUMEROLOGY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, NV, USA; 20161114 - 20161118 13 November 2016 (2016-11-13), XP051175342, Retrieved from the Internet: URL:http://www.3gpp.org/ftp/Meetings_3GPP_SYNC/RAN1/Docs/ [retrieved on 2016-11-13]
- CATT: "NR UL control channel structure", 3GPP TSG RAN WG1 #87 R1-1611394, 14 November 2016 (2016-11-14), XP051175375, Retrieved from the Internet: URL:http://www.3gpp.org/ftp/tsg_ran/WG1_RL1/TSGR1_ 87/Docs/RI-1611394.zip
- "Resource Partitioning with Mixed Numerology", 3GPP TSG RAN WG1 #87 R1-1612363, 14 November 2016 (2016-11-14), XP051176311, Retrieved from the Internet: URL:http://www.3gpp.org/ftp/tsg_ran/WGI_RLI/TSGRI_ 87/Docs/RI-1612363.zip

## Description

[Technical Field]

The present disclosure relates to a communication apparatus, a base station, methods, and recording media.

[Background Art]

Recently, as representative techniques of the multicarrier modulation technique (that is, multiplexing technique or multiple access technique), OFDM (Orthogonal Frequency Division Multiplexing) and OFDMA (Orthogonal Frequency Division Multiple Access) have been put into practical use in diverse wireless systems. Practical examples of the OFDM and OFDMA include digital broadcasting, a wireless LAN, and a cellular system. The OFDM exhibits multipath resistance and can avoid occurrence of an intersymbol interference arising from multipath delay waves by adopting a CP (Cyclic Prefix). On the other hand, disadvantages of the OFDM include high level out-of-band radiation. In addition, the disadvantages of the OFDM include tendency to have a high PAPR (Peak-to-Average Power Ratio) and vulnerability to a distortion generated in a transmitting/receiving apparatus.

Examples of a method of reducing the PAPR that is one disadvantage of the OFDM and ensuring the multipath resistance include adoption of SC-FDE that is a combination of SC (Single-Carrier) modulation and FDE (Frequency Domain Equalization). The SC-FDE is often referred to as "SC-FDMA (Single Carrier. Frequency Division Multiple Access)" or "DFT-S-OFDMA (Discrete Fourier Transform)-Spread OFDMA)."

Furthermore, a new modulation technique capable of suppressing the out-of-band radiation that is the disadvantage of the OFDM has emerged. The present modulation technique is intended to suppress the out-of-band radiation by applying a Pulse Shape Filter to symbols after S/P (Serial-to-Parallel) conversion in the OFDM. Symbols as an object to be filtered may include those in an entire band, those corresponding to a predetermined number of subcarriers (for example, per resource block in LTE), those per subcarrier, and the like. The present modulation technique is variously referred to as, for example, UF-OFDM (Universal Filtered-OFDM), UFMC (Universal Filtered Multi-Carrier), FBMC

(Filter Bank Multi-Carrier), GOFDM (Generalized OFDM), and GFDM (Generalized Frequency Division Multiplexing). The present modulation technique will be referred to as "GFDM" in the present specification; however, needless to say, the nominal designation GFDM is not used in a narrow sense.

As an example of a GFDM-related technique, PTL 1 discloses, for example, a technique related to a communication system that holds communication by a mixture of a plurality of communication parameter sets so that the communication system can accommodate a terminal compatible with GFDM and a legacy terminal incompatible with GFDM. Specifically, PTL 1 discloses the technique related to the communication system that enables a mixture of a plurality of subcarrier spacings and a plurality of subsymbol periods.

[Citation List]

[Patent Literature]

[PTL 1] PCT Patent Publication No. WO2017/056796

In EP 3 282 632 A1, a measurement method is described where a UE is configured with a first numerology for data reception and performs measurement with a second numerology.

The technical specification TS 36.300 V 14.0.0 describes measurement procedures and defines respective measurement reports generated by an UE.

The 3GPP draft R4-1705609: "On measurement capacity in NR" discusses measurements to be configured in parallel based on different numerologies.

A general discussion on New Radio (NR) numerologies can be found in the 3GPP draft RI-1611361: "Limited numerology set for NR".

[Summary]

[Technical Problem]

It is not long since the technique disclosed in PTL 1 was developed, and it is hard to say that a sufficient study has been conducted with regard to a communication system for holding communication with a mixture of a plurality of communication parameter sets. For example, one of viewpoints that are not studied sufficiently is a measurement report process in the communication system that holds communication with the mixture of the plurality of communication parameter sets.

The present disclosure, therefore, provides a framework of an appropriate measurement report process in a communication system that holds communication using a mixture of a plurality of communication parameter sets.

[Solution to Problem]

According to the present disclosure, apparatuses, methods and recording media as defined in the claims are provided.

[Advantageous Effect of Invention]

As described above, the present disclosure provides a framework of an appropriate measurement report process in a communication system holding communication using a mixture of a plurality of communication parameter sets. It is noted that advantages of the present disclosure are not always limited to the advantages described above and the present disclosure may exhibit any of advantages described in the present specification or other advantages that can be grasped from the present specification in addition to or as an alternative to the above advantages.

[Brief Description of Drawings]

[FIG. 1] FIG. 1 is an explanatory diagram for explaining an example of a configuration of a transmitting apparatus that supports GFDM.

[FIG. 2] FIG. 2 is an explanatory diagram for explaining an example of a configuration of a transmitting apparatus that supports OFDM.

[FIG. 3] FIG. 3 is an explanatory diagram for explaining an example of a configuration of a transmitting apparatus that supports SC-FDE.

[FIG. 4] FIG. 4 is an explanatory diagram depicting an example of a schematic configuration of a system according to an embodiment of the present disclosure.

[FIG. 5] FIG. 5 is a block diagram depicting an example of a configuration of a base station according to the embodiment of the present disclosure.

[FIG. 6] FIG. 6 is a block diagram depicting an example of a configuration of a terminal apparatus according to the embodiment of the present disclosure.

[FIG. 7] FIG. 7 is an explanatory diagram for explaining an example of a configuration of a frequency resource and a time resource in the GFDM according to the present embodiment.

[FIG. 8] FIG. 8 is an explanatory diagram for explaining an example of a configuration of a first transmitting apparatus that supports GFDM according to the present embodiment.

[FIG. 9] FIG. 9 is an explanatory diagram for explaining the example of the configuration of the first transmitting apparatus that supports GFDM according to the present embodiment.

[FIG. 10] FIG. 10 is an explanatory diagram for explaining the example of the configuration of the first transmitting apparatus that supports GFDM according to the present embodiment.

[FIG. 11] FIG. 11 is an explanatory diagram for explaining the example of the configuration of the first transmitting apparatus that supports GFDM according to the present embodiment.

[FIG. 12] FIG. 12 is an explanatory diagram for explaining an example of a configuration of a second transmitting apparatus that supports GFDM according to the present embodiment.

[FIG. 13] FIG. 13 is an explanatory diagram for explaining the example of the configuration of the second transmitting apparatus that supports GFDM according to the present embodiment.

[FIG. 14] FIG. 14 is a diagram depicting an example of a resource configuration according to the present embodiment.

[FIG. 15] FIG. 15 is a diagram depicting an example of a relationship between a CP length and a time domain channel impulse response in a radio wave propagation path.

[FIG. 16] FIG. 16 is a diagram depicting an example of a first communication parameter set in each frequency range in a frequency channel.

[FIG. 17] FIG. 17 is a sequence diagram depicting an example of a flow of a measurement report process executed by the system according to the present embodiment.

[FIG. 18] FIG. 18 is a sequence diagram depicting another example of the flow of the measurement report process executed by the system according to the present embodiment.

[FIG. 19] FIG. 19 is a diagram depicting a case in which an assumed measurement frequency range is the same as an assumed DFT-spread frequency range.

[FIG. 20] FIG. 20 is a diagram depicting a case in which an assumed measurement frequency range is different from an assumed DFT-spread frequency range.

[FIG. 21] FIG. 21 is a diagram depicting an example of a block diagram of a measurement process by a terminal apparatus.

[FIG. 22] FIG. 22 is a diagram depicting an example of a flow of a measurement process executed by the terminal apparatus according to the present embodiment.

[FIG. 23] FIG. 23 is a diagram depicting an example of a flow of a measurement process executed per waveform by the terminal apparatus according to the present embodiment.

[FIG. 24] FIG. 24 is a diagram depicting an example of a flow of a CQI measurement process per CP length executed by the terminal apparatus according to the present embodiment.

[FIG. 25] FIG. 25 is a diagram depicting an example of a flow of a report process executed by the terminal apparatus according to the present embodiment.

[FIG. 26] FIG. 26 is a block diagram depicting a first example of a schematic configuration of an eNB.

[FIG. 27] FIG. 27 is a block diagram depicting a second example of the schematic configuration of the eNB.

[FIG. 28] FIG. 28 is a block diagram depicting an example of a schematic configuration of a smart phone.

[FIG. 29] FIG. 29 is a block diagram depicting an example of a schematic configuration of a car navigation system.

[Description of Embodiment]

A preferred embodiment of the present disclosure will be described hereinafter in detail with reference to the accompanying drawings. In the present specification and the drawings, constituent elements having substantially the same functional configuration are denoted by the same reference signs to omit repetitive description.

Furthermore, in the present specification and the drawings, constituent elements having substantially the same functional configuration are often described while different alphabets are added after the same reference sign to distinguish the constituent elements. For example, a plurality of elements having substantially the same functional configuration are distinguished by being denoted by terminal apparatuses 200A, 200B, and 200C as needed. It is noted, however, that a plurality of elements having substantially the same functional configuration are denoted only by the same reference sign in a case of no need to distinguish the plurality of elements. For example, in the case of no need to particularly distinguish the terminal apparatuses 200A, 200B, and 200C, the terminal apparatuses are simply denoted by 200.

It is noted that the present disclosure will be described in the following order.

1. Introduction
    - 1.1. Communication quality measurement and resource scheduling
    - 1.2. Waveform modulation scheme
    - 1.3. Physical layer parameter
    - 1.4. Technical problem
2. Configuration example
    - 2.1. Overall configuration
    - 2.2. Configuration of base station
    - 2.3. Configuration of terminal apparatus
3. Technical features
    - 3.1. GFDM
    - 3.2. Mixture of communication parameter sets
    - 3.3. Measurement report process
4. Application example
5. Conclusion

<<1. Introduction>>

The technique associated with one embodiment of the present disclosure will be described hereinafter.

<1.1. Communication quality measurement and resource scheduling>

It is desirable that a communication system typically accommodates communication apparatuses of a plurality of users and enables multiple access. To realize the multiple access, the communication system makes setting such that what communication apparatus uses what radio resource. Examples of the radio resource include a frequency resource (for example, resource block), a time resource (for example, slot and frame), a space resource (antenna, antenna port, precoding matrix, and the like), and other non-orthogonal resources (for example, spread code, interleaving pattern, and power level). Carrying out the setting is also referred to as "resource scheduling" or "resource allocation" or "resource assignment."

In a case of taking a cellular system by way of example, typically, a base station carries out scheduling and notifies each terminal apparatus of a scheduling result (that is, radio resource allocation result). Typically, the base station dynamically notifies the terminal apparatus of a scheduling result per allocated unit time (for example, frame or slot) using a physical control channel and control information. The base station may skip notifying a terminal apparatus to which no radio resources are allocated of the scheduling result. A control information format and IE (Information Elements) are defined in the intended system in advance.

For the base station to highly efficiently carry out scheduling, it is important for the base station to grasp a communication quality in the light of a radio wave propagation status, an interference status, and the like between the base station and the terminal apparatus that is a communication partner. As one of methods of grasping the communication quality, there is known a method of measuring, by a terminal apparatus, the communication quality and feeding back a measurement result to a base station. This measurement is often referred to simply as "measurement" or particularly referred to as "CSI (Channel State Information)." Items to be measured are defined in the intended system in advance. In LTE, for example, an RI (Rank Indicator), a PMI (Precoding Matrix Indicator), and a CQI (Channel Quality Indicator) are defined as the items to be mainly measured in CSI measurement.

The RI is an indicator of an appropriate number of spatial layers that can be multiplexed (number of spatial streams, a rank of a MIMO radio wave propagation path matrix) in the light of characteristics of a MIMO (multiple-input and multiple-output) radio wave propagation path and the like. The PMI is an appropriate indicator of a precoding matrix in the light of characteristics of the MIMO radio wave propagation path and the like. The CQI is an indicator of a digital modulation scheme that enables appropriate transmission and reception, a code rate or coding rate of an error-correcting code (FEC (Forward Error Correction)), or a combination thereof in the light of a SINR (Signal to Noise plus Interference Ratio) and the like. A digital modulation scheme that enables appropriate transmission and reception is defined as, for example, a digital modulation scheme at a block error rate that satisfies a criterion (for example, BLER (Block Error Rate) = 10%). Examples of the digital modulation scheme include BPSK, QPSK, 16QAM, 64QAM, 256QAM, 1024QAM, and 4096QAM.

<1.2. Waveform modulation scheme>

As examples of a waveform modulation scheme, GFDM, OFDM, and SC-FDE will be described hereinafter.

(GFDM)

FIG. 1 is an explanatory diagram for explaining an example of a configuration of a transmitting apparatus that supports GFDM. With reference to FIG. 1, a bit sequence (for example, transport block) from an upper layer is processed and an RF (radio frequency) signal is output. As depicted in FIG. 1, FEC (Forward Error Correction) encoding, rate matching, scrambling, interleaving, and mapping from a bit sequence to symbols (which may be, for example, complex symbols and can be also referred to as "signal point") (Bit-to-Complex Constellation Mapping) are performed on the bit sequence, and modulation is then performed. In the mapping from the bit sequence to the symbols, various constellations such as BPSK, QPSK, 8PSK, 16QAM, 64QAM, and 256QAM can be used. In the modulation, S/P conversion is performed first, a plurality of signals obtained by division are each subjected to resource element mapping, oversampling, and pulse shaping, and then frequency-to-time conversion (for example, IDFT (Inverse Discrete Fourier Transform) or IFFT (Inverse Fast Fourier Transform)), thereby combining the plurality of signals into one time domain signal (that is, time waveform). After the modulation, a CP (Cyclic Prefix) is added to the signal, and an analog process and an RF process are performed on the signal.

In GFDM, symbols on subcarriers are subjected to oversampling for performing filtering (that is, pulse shaping) in predetermined units. The symbols after oversampling are then subjected to filtering. The frequency-to-time conversion is performed on the filtered symbols. The GFDM can suppress, by filtering, out-of-band radiation that is one disadvantage of the OFDM. Furthermore, combining the GFDM with MIMO (multiple-input and multiple-output) or the like also enables the receiving apparatus to perform all processes in a frequency domain. It is noted, however, that the receiving apparatus uses an interference canceller because of occurrence of an intersymbol interference to each element due to an influence of the filtering. In this respect, the OFDM and the SC-FDE can realize suppression of an interference by simple FDE.

In this way, the GFDM has a problem that the receiving apparatus is complicated as a trade-off with overcoming the disadvantage of the out-of-band radiation. Such a problem could be fatal in respect to an apparatus desirably holding communication at a low cost and low power consumption such as an MTC (Machine Type Communication) apparatus and an IoT (Internet of Things) apparatus.

(OFDM)

FIG. 2 is an explanatory diagram for explaining an example of a configuration of a transmitting apparatus that supports OFDM. With reference to FIG. 2, the transmitting apparatus that supports OFDM differs in a modulation part surrounded by a broken line from the transmitting apparatus that supports GFDM described with reference to FIG. 1. This difference will be described. First, S/P conversion is performed and a plurality of signals obtained by division are each subjected to resource element mapping. The symbols are thereby deployed on predetermined subcarriers. The frequency-to-time conversion (e.g., IDFT or IFFT) is performed on a predetermined number of subcarriers, thereby combining the signals into one time domain signal.

As described above, the OFDM has the multipath resistance and can avoid occurrence of the intersymbol interference arising from multipath delay waves. On the other hand, the disadvantages of the OFDM include the high level out-of-band radiation. The disadvantages of the OFDM also include tendency to have a high PAPR and vulnerability to a distortion generated in a transmitting/receiving apparatus.

(SC-FDE)

FIG. 3 is an explanatory diagram for explaining an example of a configuration of a transmitting apparatus that supports SC-FDE. With reference to FIG. 3, the transmitting apparatus that supports SC-FDE differs in a modulation part surrounded by a broken line from the transmitting apparatus that supports GFDM described with reference to FIG. 1. This difference will be described. First, time-to-frequency conversion (e.g., DFT (Discrete Fourier Transform) or FFT (Inverse Fast Fourier Transform)) is performed. Subsequently, resource element mapping is performed in the frequency domain, and frequency-to-time conversion is performed, thereby combining the signals into one time domain signal. A CP is then added to the signal; thus, the receiving apparatus can easily perform FDE.

As described above, the SC-FDE can exhibit multipath resistance while achieving a reduction in the PAPR. On the other hand, in a case of combining the SC-FDE with the MIMO, the SC-FDE has a disadvantage of making complicated a decoding process performed by the receiving apparatus (for example, turbo equalization and iterative interference cancellation are performed).

<1.3. Physical layer parameters>

A plurality of physical layer parameters (also referred to as "Numerologies") associated with waveforms are present in the communication system. Examples of such physical layer parameters include a Subcarrier Spacing (SCS), a Symbol Length, a Frame Length (Transmission Time Interval (TTI)), a Slot Length, a Cyclic Prefix (CP) Length, and a Guard Interval (GI) Length.

Before 4G, one default value is basically defined as each of these parameter values and one or a plurality of other values are defined as optional values.

On the other hand, communication systems compatible with 5G and subsequent communication systems are required to accommodate a plurality of use cases having different requirement conditions therein. Examples of such use cases include eMBB (Enhanced mobile broadband), mMTC (Massive machine type communications), and URLLC (Ultra reliable and low latency communications). PTL 1 discloses the technique that makes it possible to simultaneously accommodate/support a plurality of subcarrier spacings and a plurality of subsymbol periods in one frequency channel and in one time resource in the light of such a requirement. According to the technique, it is possible to construct a GFDM system capable of simultaneously accommodating data services having diverse communication qualities (throughputs, delays, movement resistances, and the like). For example, it is possible to simultaneously support communications such as IoT and M2M in addition to a general data download service and a general streaming service.

<1.4. Technical problem>

The communication system is required to be able to provide diverse services with higher efficiency. To meet the requirement, the present disclosure proposes a communication system capable of simultaneously accommodating/supporting a plurality of waveforms and values of a plurality of physical layer parameters within one resource. Specifically, the present disclosure proposes a technique related to communication quality measurement and scheduling in a communication system that simultaneously accommodates/supports a plurality of waveforms and values of a plurality of physical layer parameters within one resource.

<<2. Configuration example>>

<2.1. Overall configuration>

A schematic configuration of a system 1 according to one embodiment of the present disclosure will next be described with reference to FIG. 4. FIG. 4 is an explanatory diagram depicting an example of a schematic configuration of the system 1 according to the embodiment of the present disclosure. With reference to FIG. 4, the system 1 has a base station 100 and a terminal apparatus 200. The terminal apparatus 200 refers herein to a communication apparatus also referred to as "user." The user can be also referred to as user equipment (UE). The UE may be herein UE defined in LTE or LTE-A or may signify a more general communication apparatus.

(1) Base station 100

The base station 100 is a communication apparatus that functions as a base station of a cellular system (or mobile communication system). The base station 100 holds wireless communication with a terminal apparatus located within a cell 10 of the base station 100 (for example, terminal apparatus 200). For example, the base station 100 transmits a downlink signal to the terminal apparatus and receives an uplink signal from the terminal apparatus.

(2) Terminal apparatus 200

The terminal apparatus 200 can hold communication in the cellular system (or mobile communication system). The terminal apparatus 200 holds wireless communication with a base station (for example, base station 100) of the cellular system. For example, the terminal apparatus 200 receives a downlink signal from the base station and transmits an uplink signal to the base station.

(3) Multiplexing/multiple access

Particularly in the embodiment of the present disclosure, the base station 100 holds wireless communication with a plurality of terminal apparatuses by orthogonal multiple access/non-orthogonal multiple access. More specifically, the base station 100 holds wireless communication with a plurality of terminal apparatuses 200 by multiplexing/multiple access using the GFDM.

For example, the base station 100 holds wireless communication with the plurality of terminal apparatuses 200 by multiplexing/multiple access using the GFDM in downlink. More specifically, the base station 100 multiplexes signals to the plurality of terminal apparatuses 200 using, for example, the GFDM. In this case, for example, each terminal apparatus 200 removes one or more other signals as an interference from a multiplexed signal containing a desired signal (that is, signal to the terminal apparatus 200), and decodes the desired signal.

It is noted that the base station 100 may hold wireless communication with the plurality of terminal apparatuses by multiplexing/multiple access using the GFDM in uplink as an alternative to or in addition to downlink. In this case, the base station 100 may decode each of the signals from a multiplexed signal including a signal transmitted from the plurality of terminal apparatuses.

(4) Supplementation

The present technique is also applicable to a multicell system such as a HetNet (Heterogeneous Network) or SCE (Small Cell Enhancement). Furthermore, the present technique is also applicable to an MTC apparatus, an IoT apparatus, and the like.

<2.2. Configuration of base station>

FIG. 5 is a block diagram depicting an example of a configuration of the base station 100 according to the embodiment of the present disclosure. With reference to FIG. 5, the base station 100 includes an antenna section 110, a wireless communication section 120, a network communication section 130, a storage section 140, and a processing section 150.

(1) Antenna section 110

The antenna section 110 radiates a signal output from the wireless communication section 120 into a space as a radio wave. In addition, the antenna section 110 converts a radio wave in the space into a signal and outputs the signal to the wireless communication section 120.

(2) Wireless communication section 120

The wireless communication section 120 transmits and receives signals. For example, the wireless communication section 120 transmits a downlink signal to one terminal apparatus and receives an uplink signal from the terminal apparatus.

(3) Network communication section 130

The network communication section 130 transmits and receives information. For example, the network communication section 130 transmits information to another node and receives information from another node. Examples of another node include another base station and a core network node.

(4) Storage section 140

The storage section 140 stores a program and various data for the base station 100 to operate either temporarily or permanently.

(5) Processing section 150

The processing section 150 provides various functions of the base station 100. The processing section 150 has a communication control section 151 and a measurement report processing section 153. The communication control section 151 has a function to control communication with the terminal apparatus 200 using a first communication parameter set to be described later. The measurement report processing section 153 has a function to control a measurement report process such as setting of a second communication parameter set and the like to be described later by the terminal apparatus 200. It is noted that the processing section 150 can further have constituent elements other than these constituent elements. In other words, the processing section 150 can perform operations other than those performed by these constituent elements.

<2.3. Configuration of terminal apparatus>

FIG. 6 is a block diagram depicts an example of a configuration of the terminal apparatus 200 according to the embodiment of the present disclosure. With reference to FIG. 6, the terminal apparatus 200 includes an antenna section 210, a wireless communication section 220, a storage section 230, and a processing section 240.

(1) Antenna section 210

The antenna section 210 radiates a signal output from the wireless communication section 220 into the space as a radio wave. In addition, the antenna section 210 converts a radio wave in the space into a signal and outputs the signal to the wireless communication section 220.

(2) Wireless communication section 220

The wireless communication section 220 transmits and receives signals. For example, the wireless communication section 220 receives a downlink signal from the base station and transmits an uplink signal to the base station.

(3) Storage section 230

The storage section 230 stores a program and various data for the terminal apparatus 200 to operate either temporarily or permanently.

(4) Processing section 240

The processing section 240 provides various functions of the terminal apparatus 200. The processing section 240 has a communication control section 241 and a measurement report processing section 243. The communication control section 241 has a function to control communication with the base station 100 using the first communication parameter set to be described later. The measurement report processing section 243 has a function to control a measurement report process on the basis of the second communication parameter set to be described later. It is noted that the processing section 240 can further have constituent elements other than these constituent elements. In other words, the processing section 240 can perform operations other than those performed by these constituent elements.

<<3. Technical features>>

Technical features of the system 1 will next be described. More specifically, the technical features related to a transmitting apparatus and a receiving apparatus included in the system 1 will be described. While the technical features will be described on the assumption of downlink and on the assumption that the transmitting apparatus is the base station 100 and the receiving apparatus is each terminal apparatus 200, the same thing is true for a case of assumption of uplink.

<3.1. GFDM>

(1) Radio resource

FIG. 7 is an explanatory diagram for explaining an example of a configuration of a frequency resource and a time resource in the GFDM according to the present embodiment. It is assumed that a component carrier (CC) depicted in FIG. 7 is allocated to the system 1 according to the present embodiment. It is assumed that a bandwidth of the component carrier is $B_{cc}$. The component carrier may be herein a component carrier defined in LTE or LTE-A or may signify a more general unit frequency band. In this component carrier, a frequency resource is divided into $N_{RB}$ blocks referred to as "resource blocks (RBs)" and each having a predetermined bandwidth $B_{RB}$. In a case of realizing multiple access, it is desirable to allocate the frequency resource to each user with this resource block assumed as a unit. Each resource block is further divided into units called subcarriers.

It is noted that in ordinary GFDM (or OFDM), a fixed value is set to a spacing between the subcarriers (hereinafter, also referred to as "subcarrier spacing") in a system of interest. For example, in the OFDM of LTE, 15 kHz is fixedly set as the subcarrier spacing. A subcarrier bandwidth may be regarded as the subcarrier spacing.

In this respect, one feature of the present embodiment is that the transmitting apparatus can variably set the subcarrier spacing. Furthermore, another feature of the present embodiment is that different values can be set to the subcarrier spacing depending on the resource blocks within the component carrier or that different values can be further set to the subcarrier spacing within the resource block. By so setting, it is possible to set an appropriate subcarrier spacing for a propagation path. Furthermore, in a case in which the transmitting apparatus communicates with a plurality of receiving apparatuses, it is possible to set an appropriate subcarrier spacing in response to a performance and a requirement of each receiving apparatus. Owing to this, the system 1 can accommodate variety types of receiving apparatuses.

Moreover, as for a resource in a time direction, a unit called subframe is set as a reference unit. The subframe may be herein a subframe defined in LTE or LTE-A or may signify more general unit time. Basically, it is desired that a length of this subframe is set to a fixed value. The subframe is further demarcated into units called GFDM symbols. A CP is added to each GFDM symbol. Basically, it is also desired that a GFDM symbol length is set to a fixed value. The GFDM symbol is then further demarcated into units called subsymbols. A time length of this subsymbol (hereinafter, also referred to as "subsymbol period") is set to a fixed value in the ordinary GFDM.

In this respect, one feature of the present embodiment is that the transmitting apparatus can variably set the subsymbol period. Furthermore, another feature of the present embodiment is, similarly to the case of the subcarrier, that different values can be set to the subsymbol period depending on the resource blocks or that different values can be further set to the subsymbol period within the resource block.

[Table 1]

Table 1. Example of parameters related to resources

| Parameter | Value | Remarks for reference |
|---|---|---|
| $B_{cc}$<br>Component carrier bandwidth | 1, 4, 3, 5, 10, 15, 20 MHz | |
| $N_{RB}$<br><br>Number of resource blocks per component carrier | 6, 15, 25, 50, 75, 100 | Fixed number for component carrier bandwidth or subcarrier spacing |
| $B_{RB}$<br>RB bandwidth | 180×2^n kHz | Increase or decrease in proportion to subcarrier spacing, where n is positive or negative integer |
| Nsc<br>Number of subcarriers per RB | 12 | Positive integer |
| Bsc<br>Subcarrier spacing | 15×2^n kHz | *n is a positive or negative integer |
| $T_{SF}$<br>Subframe (SF) length | 1 msec | Fixed |
| $T_{GFDM}$<br>GFDM symbol length | 66.7 microseconds | CP length not inclusive |
| $N_{GFDM}$<br>Number of GFDM symbols per subframe | 12, 14 | Positive integer |
| Tss<br>Subsymbol period | Variable | $T_{GFDM}/N_{SS}$ |
| $N_{SS}$<br>Number of subsymbols per GFDM symbols | Variable | Positive integer |
| $T_{CP}$<br>CP length | 4.7/(2^n) μsec, 16.67/(2^n) μsec | Increase or decrease in inverse proportion to subcarrier spacing, where n is positive or negative integer |

Here, the transmitting apparatus can set parameters for ensuring compatibility to OFDM or SC-FDE. For example, the transmitting apparatus can ensure backward compatibility by making setting of the subcarrier spacing and the subsymbol period similar to setting of those in the OFDM or SC-FDE. The system 1 can thereby accommodate therein a legacy terminal incompatible with the GFDM.

(2) Transmitted signal process

A transmitted signal process in a case of setting variable the subcarrier spacing and the subsymbol time length will be described. The transmitting apparatus refers herein to, for example, the wireless communication section 120 that operates under control of the communication control section 151. In addition, a receiving apparatus refers herein to, for example, the wireless communication section 220 that operates under control of the communication control section 241. Furthermore, a multicell system such as HetNet and SCE is supposed as the system 1.

It is to be noted that an index corresponding to a subframe is omitted without otherwise specified. Moreover, indexes i or u of a transmitting apparatus i or a receiving apparatus u may indicate an ID of a cell to which the apparatus belongs or may indicate an ID of a cell managed by the apparatus.

It is assumed that a bit sequence transmitted from the transmitting apparatus i to the receiving apparatus u in one subframe t is $b_{i,u}$. The bit sequence bi,u may configure one transport block. Furthermore, while a case in which the transmitting apparatus i transmits one bit sequence to the receiving apparatus u is described below, the transmitting apparatus i may transmit a plurality of bit sequences to the receiving apparatus u and the bit sequences may configure a plurality of transport blocks at that time.

(2.1) First example

FIGS. 8 to 11 are explanatory diagrams for explaining an example of a configuration of a first transmitting apparatus that supports GFDM according to the present embodiment. First, the transmitting apparatus performs a process depicted in FIG. 8 and then a process depicted in FIG. 9 per user. The transmitting apparatus then performs processes depicted in FIGS. 10 and 11 per transmit antenna port. These drawings depict an example of a configuration in a case of supposing that the transmitting apparatus transmits a GFDM signal to one or more users by multi-antenna transmission. In other words, the number of users (or number of receiving apparatuses) is $N_U \geq 1$, and the number of transmit antenna ports (or number of transmit antennas) is $N_{AP} \geq 1$. It is noted that the number of users is denoted by U and the number of transmit antenna ports is denoted by P in the drawings.

In a first example, an OFDM transmitted signal process depicted in FIG. 2 is extended to realize a GFDM transmitted signal process. A transmission process will be described hereinafter with reference to FIGS. 8 to 11.

As depicted in FIG. 8, first, the transmitting apparatus performs, on each bit sequence to be transmitted, CRC encoding, FEC encoding (for example, convolution encoding, turbo encoding, or LDPC encoding), rate matching for adjusting an encoding rate, bit scrambling, and bit interleaving, and the like. These processes are expressed by the following Expression.

[Math. 1]

$$\begin{aligned}
\mathbf{b}_{CRC,i,u} &= CRC_{ENC}\left(\mathbf{b}_{i,u}, u, i, t\right) \\
\mathbf{b}_{FEC,i,u} &= FEC_{ENC}\left(\mathbf{b}_{CRC,i,u}, u, i, t\right) \\
\mathbf{b}_{RM,i,u} &= RM\left(\mathbf{b}_{FEC,i,u}, u, i, t\right) \qquad \cdots (1) \\
\mathbf{b}_{SCR,i,u} &= SCR\left(\mathbf{b}_{RM,i,u}, u, i, t\right) \\
\mathbf{b}_{INT,i,u} &= \pi\left(\mathbf{b}_{SCR,i,u}, u, i, t\right)
\end{aligned}$$

Process configurations of the processes may change depending on the receiving apparatus u, the transmitting apparatus i, or a subframe t. It is noted, in the above Expression (1), that each process is regarded as a function and a process result in a former stage is dealt with as an argument of a process of a later stage.

Next, as depicted in FIG. 9, after a bit process, the transmitting apparatus maps (that is, converts) each bit sequence onto (into) complex symbols s and further maps the complex symbols s onto spatial layers 1. These processes are expressed by the following Expression.

[Math. 2]

$$\begin{aligned}
\mathbf{s}_{i,u} &= \begin{bmatrix} \mathbf{s}_{i,u,0} \\ \vdots \\ \mathbf{s}_{i,u,N_{SL,i,u}-1} \end{bmatrix} \qquad \cdots (2) \\
\mathbf{s}_{i,u,l} &= \begin{bmatrix} s_{i,u,l,0} & \cdots & s_{i,u,l,N-1} \end{bmatrix}
\end{aligned}$$

Here, in the mapping onto the complex symbols s, various constellations such as BPSK, QPSK, 8PSK, 16QAM, 64QAM, and 256QAM can be used. In addition, $N_{SL,i,u}$ denotes the number of spatial layers for the receiving apparatus u.

After mapping onto the spatial layers, the transmitting apparatus performs power allocation and precoding on the symbols as expressed by the following Expression.

[Math. 3]

$$\mathbf{x}_{i,u} = \mathbf{W}_{i,u}\mathbf{P}_{i,u}\mathbf{s}_{i,u} = \begin{bmatrix} x_{i,u,0,0} & \cdots & x_{i,u,0,N_{EL,TTL}-1} \\ \vdots & \ddots & \vdots \\ x_{i,u,N_{AP}-1,0} & \cdots & x_{i,u,N_{AP}-1,N_{EL,TTL}-1} \end{bmatrix} = \begin{bmatrix} \mathbf{x}_{i,u,0} \\ \vdots \\ \mathbf{x}_{i,u,N_{AP}-1} \end{bmatrix} \quad \cdots (3)$$

[Math. 4]

$$\mathbf{x}_{i,u,p} = \begin{bmatrix} x_{i,u,p,0} & \cdots & x_{i,u,p,N_{EL,TTL}-1} \end{bmatrix} \quad \cdots (4)$$

[Math. 5]

$$\mathbf{W}_{i,u} = \begin{bmatrix} w_{i,u,0,0} & \cdots & w_{i,u,0,N_{SL,i,u}-1} \\ \vdots & \ddots & \vdots \\ w_{i,u,N_{AP,i}-1,0} & \cdots & w_{i,u,N_{AP,i}-1,N_{SL,i,u}-1} \end{bmatrix} \quad \cdots (5)$$

[Math. 6]

$$\mathbf{P}_{i,u} = \begin{bmatrix} P_{i,u,0,0} & \cdots & P_{i,u,0,N_{SL,i,u}-1} \\ \vdots & \ddots & \vdots \\ P_{i,u,N_{SL,i,u}-1,0} & \cdots & P_{i,u,N_{SL,i,u}-1,N_{SL,i,u}-1} \end{bmatrix} \quad \cdots (6)$$

In Expressions, $N_{AP,i}$ denotes the number of transmit antenna ports (or transmit antennas) of the transmitting apparatus i, and it is desirable that $N_{AP,i}$ basically satisfies a relationship of $N_{SL,i,u} \leq N_{AP,i}$. $N_{EL,TLL}$ denotes the number of elements to be described later. W is a precoding matrix and elements in the precoding matrix W are desirably either complex numbers or real numbers. P is a power allocation matrix, and it is desired that elements in the power allocation matrix P are real numbers and configure a diagonal matrix as expressed by the following Expression.

[Math. 7]

$$\mathbf{P}_{i,u} = \begin{bmatrix} P_{i,u,0,0} & 0 & \cdots & 0 \\ 0 & P_{i,u,1,1} & \ddots & \vdots \\ \vdots & \ddots & \ddots & 0 \\ 0 & \cdots & \cdots & P_{i,u,N_{SL,u}-1,N_{SL,u}-1} \end{bmatrix} \quad \cdots (7)$$

After power allocation and precoding, the transmitting apparatus multiplexes signals per transmit antenna port as expressed by the following Expression. Examples of signal multiplexing that can be adopted include superimposed multiplex, SPC (Superposition Coding), MUST (Multiuser Superposition Transmission), or NOMA (Non-Orthogonal Mul-

tiple Access).
[Math. 8]

$$\mathbf{x}_i = \sum_{u \in U_i} \mathbf{x}_{i,u} \quad \cdots (8)$$

In Expression (8), Ui denotes a set of indexes of the receiving apparatuses u for which the transmitting apparatus i multiplexes the signals.

The subsequent processes are signal processes per transmit antenna port p and per GFDM symbol g. As depicted in FIG. 11, first, the transmitting apparatus expands the symbols in a frequency direction by S/P conversion, and deploys the symbols onto elements of predetermined subcarriers and predetermined subsymbols by resource element mapping. A rule of this deployment may be either determined by the transmitting apparatus i or by the receiving apparatus u for which the signals are multiplexed.

The elements deployed in the subcarriers within each resource block r ($0 \leq r < N_{RB}$) as a result of the resource element mapping will be described.

The number of subcarriers in the intended resource block and the intended GFDM symbol is denoted by $N_{SC,r,g}$ and the number of subsymbols is denoted by $N_{SS,r,g}$. In this case, the number of elements in the GFDM symbol of interest is expressed by $N_{EL,r,g} = N_{SC,r,g} \times N_{SS,r,g}$.

The elements deployed in a subcarrier $k_{r,g}$ and a subsymbol $m_{r,g}$ is denoted by $x_{p,kr,g,mr,g}$. The transmitting apparatus first performs oversampling on the elements (that is, those for subcarriers and those for subsymbols) at a sampling rate $N_{SR,r,g}$, and then filtering thereon at a filter factor $h_{p,kr,g,mr,g}(n)$. n is an index of a sample. It is noted that k in FIGS. 10 and 11 denotes an index of a subcarrier and K denotes a total number of subcarriers.

The sample after filtering is expressed by the following Expression. It is noted that an oversampling effect is contained in a term of the filter factor.
[Math. 9]

$$\begin{aligned} \mathbf{d}_{p,k_{r,g},m_{r,g}} &= \left[ d_{p,k_{r,g},m_{r,g}}(0) \quad \cdots \quad d_{p,k_{r,g},m_{r,g}}\left(N_{SS,r,g}N_{SR,r,g}-1\right) \right] \\ d_{p,k_{r,g},m_{r,g}}(n) &= x_{p,k_{r,g},m_{r,g}} h_{p,k_{r,g},m_{r,g}}\left(n - m_{r,g}N_{SR,r,g}\right) \end{aligned} \quad \cdots (9)$$

After filtering, the transmitting apparatus modulates the symbols at a frequency f(k) for each subcarrier and multiplexes the symbols. When a set of subcarrier indexes contained in the resource block r and the GFDM symbol g is denoted by $k_{r,g}$, a GFDM symbol c(n) after multiplexing is expressed by the following Expression.
[Math. 10]

$$\begin{aligned} \mathbf{c}_{p,g} &= \left[ c_{p,g}(0) \quad \cdots \quad c_{p,g}\left(N_{SS,g}N_{SR,g}-1\right) \right] \\ c_{p,g}(n) &= \sum_{r=0}^{N_{RB}-1} \sum_{m_{r,g}=0}^{N_{SS,r,g}-1} \sum_{k \in K_{r,g}} d_{p,k,m_{r,g}}(n) \exp\left\{ j2\pi f(k) n \frac{T_{SS,r,g}}{N_{SR,r,g}} \right\} \end{aligned} \quad \cdots (10)$$

As depicted in FIG. 11, the transmitting apparatus performs similar processes to those after precoding in the transmitted signal process described above on a reference signal. First, in the transmitted signal process, upon generating a reference signal, the transmitting apparatus performs precoding, S/P conversion, and resource element mapping, and then performs oversampling and filtering on each element. Subsequently, as depicted in FIG. 10, the transmitting apparatus multiplexes the elements of the reference signal after filtering with each GDFM symbol.

The transmitting apparatus adds a CP and a CS (Cyclic Sufix) to each GFDM symbol after multiplexing. The GFDM symbols after addition of the CP and CS are expressed by the following Expression.
[Math. 11]

$$\mathbf{c}_{CP,p,g} = \left[ c_{p,g}\left(N_{SS,g}N_{SR,g} - N_{CP,g}\right) \;\cdots\; c_{p,g}\left(N_{SS,g}N_{SR,g} - 1\right) \;\; c_{p,g}(0) \;\cdots\; c_{p,g}\left(N_{SS,g}N_{SR,g} - 1\right) \right] \quad \cdots (11)$$

In Expression (11), $N_{CP,g}$ denotes the number of CP samples added to the GFDM symbols g.

(2.2) Second example

FIGS. 12 and 13 are explanatory diagrams for explaining an example of a configuration of a second transmitting apparatus that supports GFDM according to the present embodiment. Similarly to the first example, the transmitting apparatus according to a second example performs the process depicted in FIG. 8 and the process depicted in FIG. 9 per user. The transmitting apparatus according to the second example then performs processes depicted in FIGS. 12 and 13 per transmit antenna port. A difference of the second example from the first example is that domains of signal processing are in order of time, frequency, and time domains. Specifically, a part regarded as the process per user in the first example is a process in the time domain in the second example.

In the second example, an SC-FDE transmitted signal process depicted in FIG. 3 is extended to realize the GFDM transmitted signal process. The present transmitted signal process is particularly characterized in that a process for converting a time domain signal to be processed into a frequency domain signal before oversampling. The transmission process will be described below with reference to FIGS. 12 and 13.

As depicted in FIG. 12, the transmitting apparatus first performs time-to-frequency conversion (for example, DFT or FFT) on a time symbol sequence to convert the time symbol sequence into a frequency component. When the time symbol sequence allocated to the subcarrier k and the GFDM symbol g in the resource block r is denoted by $x_{p,r,g}$, a frequency component after the frequency conversion

[Math. 12]

$$\overline{\mathbf{x}}_{p,r,k,g} \quad \cdots (12)$$

is expressed by the following Expressions.

[Math. 13]

$$\begin{aligned} \overline{\mathbf{x}}_{p,r,k,g} &= \mathbf{F}_{N_{SS,r,k,g}} \mathbf{x}^{T}_{p,r,g} \\ &= \left[ \overline{x}_{p,r,k,g,0} \;\cdots\; \overline{x}_{p,r,k,g,N_{SS,r,k,g}-1} \right]^{T} \end{aligned} \quad \cdots (13)$$

[Math. 14]

$$\mathbf{x}_{p,r,g} = \left[ x_{p,r,g,0} \;\cdots\; x_{p,r,g,N_{SS,r,k,g}-1} \right] \quad \cdots (14)$$

[Math. 15]

$$\mathbf{F}_{N} = \begin{bmatrix} \exp\left(-j2\pi \frac{0\cdot 0}{N}\right) & \cdots & \exp\left(-j2\pi \frac{0\cdot (N-1)}{N}\right) \\ \vdots & \ddots & \vdots \\ \exp\left(-j2\pi \frac{(N-1)\cdot 0}{N}\right) & \cdots & \exp\left(-j2\pi \frac{(N-1)\cdot (N-1)}{N}\right) \end{bmatrix} \quad \cdots (15)$$

In Expression (15), $F_N$ denotes a Fourier transform matrix at a size of N.

After the conversion into the frequency component, the transmitting apparatus performs oversampling per subcarrier. Since an oversampling process corresponds to repetition of the frequency component in the frequency domain, the frequency component after the frequency conversion is expressed by the following Expressions.
[Math. 16]

$$\begin{aligned}\tilde{\mathbf{x}}_{p,r,k,g} &= \mathbf{I}_{OS,N_{SS,r,k,g},N_{SR,r,k,g}} \bar{\mathbf{x}}^{T}_{p,r,k,g} \\ &= \left[\tilde{x}_{p,r,k,g,0} \quad \cdots \quad \tilde{x}_{p,r,k,g,N_{SS,r,k,g}N_{SR,r,k,g}-1}\right]^{T} \\ &= \left[\underbrace{\bar{x}_{p,r,k,g,0} \quad \cdots \quad \bar{x}_{p,r,k,g,N_{SS,r,k,g}-1}}_{0-th} \quad \cdots \quad \underbrace{\bar{x}_{p,r,k,g,0} \quad \cdots \quad \bar{x}_{p,r,g,N_{SS,r,k,g}-1}}_{\left(N_{SR,r,k,g}-1\right)-th}\right]^{T}\end{aligned} \quad \cdots (16)$$

[Math. 17]

$$\mathbf{I}_{OS,N,M} = \left[\underbrace{\mathbf{I}_N}_{0-th} \quad \cdots \quad \underbrace{\mathbf{I}_N}_{(M-1)-th}\right]^{T} \quad \cdots (17)$$

In Expression (17), a matrix $I_N$ is a unit matrix at the size N. In other words, $I_{OS,N,M}$ is a matrix in which M matrices $I_N$ are aligned.

After the oversampling, the transmitting apparatus performs filtering per predetermined number of subcarriers. For example, the transmitting apparatus realize filtering by multiplying each frequency component by a frequency filter factor. It is noted that the predetermined number may be either 1 or an arbitrary number equal to or greater than 1. The arbitrary number equal to or greater than 1 may be, for example, the number of subcarriers contained in a unit resource to be described later. A signal after filtering is expressed by the following Expression.
[Math. 18]

$$\begin{aligned}\bar{\mathbf{d}}_{p,r,k,g} &= \bar{\mathbf{\Gamma}}_{p,r,k,g} \tilde{\mathbf{x}}_{p,r,k,g} \\ &= \left[\bar{d}_{p,r,k,g}(0) \quad \cdots \quad \bar{d}_{p,r,k,g}\left(N_{SS,r,k,g}N_{SR,r,k,g}-1\right)\right]^{T} \\ \bar{\mathbf{\Gamma}}_{p,r,k,g} &= \begin{bmatrix} \bar{\gamma}_{p,r,k,g,0,0} & \cdots & \bar{\gamma}_{p,r,k,g,0,N_{SS,p,r,k,g}N_{SR,p,r,k,g}-1} \\ \vdots & \ddots & \vdots \\ \bar{\gamma}_{p,r,k,g,N_{SS,p,r,k,g}N_{SR,p,r,k,g}-1,0} & \cdots & \bar{\gamma}_{p,r,k,g,N_{SS,p,r,k,g}N_{SR,p,r,k,g}-1,N_{SS,p,r,k,g}N_{SR,p,r,k,g}-1} \end{bmatrix}\end{aligned} \quad \cdots (18)$$

In Expression (18), a matrix Γ denotes the filter factor. This matrix can be normally set as a diagonal matrix. In other words, the matrix Γ may be expressed by the following Expression.
[Math. 19]

$$\bar{\mathbf{\Gamma}}_{p,r,k,g} = \begin{bmatrix} \bar{\gamma}_{p,r,k,g,0,0} & 0 & \cdots & 0 & 0 \\ 0 & \ddots & \ddots & \ddots & 0 \\ \vdots & \ddots & \ddots & \ddots & \vdots \\ 0 & \ddots & \ddots & \ddots & 0 \\ 0 & 0 & \cdots & 0 & \bar{\gamma}_{p,r,k,g,N_{SS,p,r,k,g}N_{SR,p,r,k,g}-1,N_{SS,p,r,k,g}N_{SR,p,r,k,g}-1} \end{bmatrix} \quad \cdots (19)$$

After filtering, the transmitting apparatus performs mapping on the frequency component in accordance with a predetermined rule and performs frequency-to-time conversion (for example, IDFT or IFFT). The processes are expressed by the following Expressions.

[Math. 20]

$$\tilde{\mathbf{d}}_{p,r,g} = \sum_{k \in K_{r,g}} \bar{\mathbf{A}}_{p,r,k,g} \bar{\mathbf{d}}_{p,r,k,g} = \left[ \tilde{d}_{p,r,g}(0) \ \cdots \ \tilde{d}_{p,r,g}(N_{IDFT}-1) \right]^T \quad \cdots (20)$$

[Math. 21]

$$\mathbf{c}_{p,g} = \mathbf{F}^H_{N_{IDFT}} \sum_{r=0}^{N_{RB}-1} \tilde{\mathbf{d}}_{p,r,g} = \left[ c_{p,g}(0) \ \cdots \ c_{p,g}(N_{IDFT}-1) \right]^T \quad \cdots (21)$$

In Expression (21), $F^H$ denotes an Hermitian matrix of F. In addition, A denotes a frequency mapping matrix at a size of $N_{IDFT} \times N_{SS,r,k,g} \times N_{SR,r,k,g}$. In a case in which a frequency component k' after filtering per subcarrier is deployed on a final frequency component k, component (k,k') in the frequency mapping matrix A is 1. In a case in which the frequency component k' after filtering per subcarrier is not deployed in the final frequency component k, the component (k,k') in the frequency mapping matrix A is 0. It is desirable that a sum of elements in rows in the frequency mapping matrix A is equal to or smaller than 1 and a sum of elements in columns therein is equal to or smaller than 1.

As depicted in FIG. 13, the transmitting apparatus performs similar processes to those after precoding in the transmitted signal process described above on the reference signal. First, in the transmitted signal process, upon generating the reference signal, the transmitting apparatus performs precoding, time-to-frequency conversion, and resource element mapping, and then performs oversampling, filtering, and frequency mapping on each element. Subsequently, as depicted in FIG. 12, the transmitting apparatus multiplexes the elements of the reference signal after frequency mapping with each GDFM symbol.

The transmitting apparatus adds a CP to each GFDM symbol after having been subjected to the frequency-to-time conversion. The GFDM symbols after addition of the CP are expressed by the following Expression.

[Math. 22]

$$\mathbf{c}_{CP,p,g} = \left[ c_{p,g}(N_{SS,g}N_{SR,g} - N_{CP,g}) \ \cdots \ c_{p,g}(N_{SS,g}N_{SR,g} - 1) \ \ c_{p,g}(0) \ \cdots \ c_{p,g}(N_{SS,g}N_{SR,g} - 1) \right] \quad \cdots (22)$$

In Expression (22), $N_{CP,g}$ denotes the number of CP samples added to the GFDM symbols g.

(2.3) Comparison of first example with second example

It may be said that the transmitting apparatuses according to the first and second examples generate the same waveforms in theory. However, in a case of multiplexing subsymbols at different lengths and/or subcarriers having different spacings, there is a difference between the first and second example in simplicity of implementation, as described hereinafter.

Specifically, in the first example, in a case of a mixture of subcarriers having different spacings, it is difficult to use fast computing such as IDFT or IFFT to multiplex subcarriers. This is due to difficulty in inputting signals that are not fixed in resolution in the IDFT and IFFT.

On the other hand, in the second example, appropriately setting parameters makes it possible to use fast computing such as IDFT or IFFT for frequency-to-time conversion. In other words, the transmitting apparatus according to the second example is more useful than that according to the first example from the viewpoint of simplicity of implementation.

(3) Parameter setting

Parameter setting made by the transmitting apparatus according to the present embodiment will be described hereinafter.

(3.1) Setting of filtering parameters

The transmitting apparatus according to the present embodiment variably sets at least either the spacing of subcarriers or the time length of subsymbols contained in the unit resource including one or more subcarriers or one or more subsymbols. The unit resource may be herein a frequency resource unit (for example, resource block or component carrier), a time resource unit (for example, GFDM symbol or subframe), or a unit of a combination of the frequency resource and the time resource. The transmitting apparatus then performs filtering on the basis of this setting. Specifically, the transmitting apparatus variably sets a bandwidth of a filter on the basis of the set subcarrier spacing. With the first or second configuration described above, the transmitting apparatus can perform filtering on a predetermined number of subcarriers; thus, it is possible to realize a resource configuration realizing the variably set subcarrier spacing and the variably set subsymbol time length. For example, the transmitting apparatus according to the present embodiment can multiplex subsymbols at different time lengths and/or subcarriers at different spacings within the same GFDM symbol time period. FIG. 14 depicts an example of a configuration of such GFDM symbols.

As depicted in FIG. 14, the transmitting apparatus can set different values to the subsymbol period and the subcarrier spacing depending on unit resources. It is noted, however, that the transmitting apparatus sets the same values to the subcarrier spacing and the subsymbol period within the unit resource. For example, in the example depicted in FIG. 14, the same subcarrier spacing and the same subsymbol period are set within each resource block. In a case of using the resource block as a unit of allocating the frequency resource in a multiuser system, such setting makes it possible to set predetermined values to the subsymbol period and the subcarrier spacing for one user. This makes a transmission process and a receiving process simple. Furthermore, the transmitting apparatus can set different values to the subsymbol period and the subcarrier spacing depending on the GFDM symbol unit or the subframe unit.

It is also desirable that a value of a product between the number of subcarriers and the number of subsymbols is the same among the different unit resources. For example, in the example depicted in FIG. 14, the product between the number of subcarriers and the number of subsymbols is equally eight in a plurality of resource blocks multiplexed within the same GFDM symbol time period. By so setting, it is possible to simplify configurations of the transmitting apparatus and the receiving apparatus (that is, the transmission process and the receiving process) in a case of introducing variable parameters.

The transmitting apparatus can variably set the subcarrier spacing. For example, the transmitting apparatus can set the subcarrier spacing to an integer multiple of a minimum value that can be set and specified in the system 1. In addition, the transmitting apparatus can set the subcarrier spacing to a value by which the bandwidth of the unit resource is divisible. Setting in this way enables the transmitting apparatus to make full use of all available frequency resources without waste. It is noted that the minimum value of the subcarrier spacing is desirably equal to the subcarrier spacing in a case in which the number of subsymbols within the GFDM symbol is one.

The transmitting apparatus can variably set the subsymbol period. For example, the transmitting apparatus can set the subsymbol period to an integer multiple of a minimum value that can be set and specified in the system 1. In addition, the transmitting apparatus can set the subsymbol period to a value by which the time length of the unit resource is divisible. Setting in this way enables the transmitting apparatus to make full use of all available time resources without waste. It is noted that the minimum value of the subsymbol period is desirably equal to the subsymbol period in a case in which the number of subcarriers within the resource block is one.

The following table depicts an example of a range of parameters related to resources that can be taken in the system 1 according to the present embodiment.

[Table 2]

Table 2. Example of range of parameters related to resources

| Parameter | Value | | Remarks for reference |
|---|---|---|---|
| Subsymbol period | Minimum value | Equal to the subsymbol period when the number of subcarriers is 1 | |
| | Maximum value | Equal to the GFDM symbol length | |
| Number of subsymbols | Minimum value | 1 | Value of the product between the number of subsymbols and the number of subcarriers is constant |
| | Maximum value | Maximum value of the number of subcarriers | Value of the product between the number of subsymbols and the number of subcarriers is constant |
| Subcarrier spacing | Minimum value | Equal to the subcarrier spacing when the number of subsymbols is 1 | |
| | Maximum value | Equal to the resource block bandwidth (or equal to the value of the product between the resource block bandwidth and a total number of resource blocks allocated to an intended signal) | |
| Number of subcarriers | Minimum value | 1 | Value of the product between the number of subsymbols and the number of subcarriers is constant |
| | Maximum value | Maximum value of the number of subsymbols | Value of the product between the number of subsymbols and the number of subcarriers is constant |

It is noted that FIG. 14 depicts a state before addition of a CP. The transmitting apparatus adds a CP of the same time length to one or more unit resources to which the CP is to be added.

(3.2) Setting of oversampling parameters

Oversampling parameters may be set in response to the transmission process.

For example, with respect to the first transmitting apparatus depicted in FIGS. 8 to 11, it is desirable that a sampling rate $N_{SR,r,g}$ is equal to or higher than the total number of subcarriers. Furthermore, in a case in which the subsymbol period and the subcarrier spacing are variable, an actual number of subcarriers may be set to the total number of subcarriers (that is, a guard interval may be ignored). Alternatively, the number of subcarriers in a case in which all subcarrier spacings are set to the minimum value that can be taken in the system 1 (that is, the largest number of subcarriers that can be taken by the system 1) may be set to the total number of subcarriers. Furthermore, in a case of multiplexing subcarriers by IDFT or IFFT, a size of the IDFT or a size of the IFFT may be set to an oversampling parameter $N_{SR,r,g}$.

For example, in a case of the second transmitting apparatus depicted in FIGS. 12 and 13, smaller values than those in the case of the first transmitting apparatus can be set to the oversampling parameters. For example, in a case of adopting a transmission filter factor corresponding to an RC filter (Raised-Cosine filter) or an RRC filter (Root-Raised-Cosine Filter), it may be said that an oversampling factor is two at the greatest. Needless to say, the oversampling factor may be two or more even in that case.

<3.2. Mixture of communication parameter sets>

The base station 100 can hold communication using a plurality of communication parameter sets each containing one or more communication parameters in a unit resource. In other words, the base station 100 can communicate with each terminal apparatus 200 using a mixture of a plurality of communication parameter sets in the unit resource.

The unit resource is a resource including a predetermined number of frequency resources and a predetermined number of time resources. The unit resource includes, for example, one or a plurality of component carriers, resource blocks, or subcarriers, and one or a plurality of frames, subframes, slots, or symbols.

The communication parameter sets used in actual communication in the system 1 will be also referred to as "first communication parameter sets," hereinafter. The first communication parameter set is used to, for example, transmit the reference signal and a shared channel (physical shared channel). The second communication parameter set will be described later. In a case in which there is no need to particularly distinguish the first communication parameter set from the second communication parameter set, these will be generically referred to as "communication parameter sets."

• Example of first communication parameter set

Various communication parameters are considered to be contained in the first communication parameter set. By way of example, Table 3 below depicts an example of the communication parameters contained in the first communication parameter set. The base station 100 and each terminal apparatus 200 can hold communication using a plurality of candidates mentioned in a plurality of items depicted in Table 3. It is to be noted that the items and candidates depicted in Table 3 are given as an example only and items and candidates are not limited to those depicted in Table 3.

[Table 3]

Table 3. Example of communication parameter candidates contained in first communication parameter set

| Item | Example of candidate |
|---|---|
| Waveform | OFDM, DFT-S-OFDMA, GFDMA |
| Frequency range | Wideband, Specific RBs |
| Subcarrier spacing | 15 kHz, 60 kHz |
| CP length | Normal CP: 4.7 · sec for 15 kHz SCS, 1.2 · sec for 60 kHz SCS Extended CP: 16.67 · sec for 15 kHz SCS, 4.17 · sec for 60 kHz SCS |
| Slot length<br>(unit of time resource allocated once) | 7 Symbols, 14 Symbols<br>(* This Symbol means OFDMA symbol, GFDMA symbol, or the like) |
| Target BLER | 10%, 0.001% |

As depicted in Table 3 above, the first communication parameter set contains a waveform and physical layer parameters. It is noted that the physical layer parameters refer to a frequency range, a subcarrier spacing, a CP length, a slot length, and a target BLER among the items depicted in Table 3. Moreover, the first communication parameter set may contain a transport block size, a codeword size, and a code block size. The first communication parameter set may contain at least one or more communication parameters described above and may further contain other arbitrary communication parameters.

Waveforms generated by, for example, OFDMA, DFT-S-OFDMA (SC-FDMA), and GFDMA are considered to be candidates. An effect of obtained frequency diversity possibly varies depending on a type of waveform. In other words, it is considered that the type of waveform affects conversion of BLER and CQI. It is noted that the OFDMA, the DFT-S-OFDMA (SC-FDMA), and the GFDMA are techniques normally classified into the modulation scheme or a multiple access scheme. In the present specification, attention is paid to waveforms generated by these techniques and these techniques are regarded as waveforms.

As a value of a subcarrier spacing is larger, a symbol length is made shorter. In other words, in a case of the same number of symbols, the TTI is made shorter as the subcarrier spacing is larger. Shortening the TTI (or reducing the number of symbols) makes it possible to shorten time of exchange between the transmitting apparatus and the receiving apparatus (for example, data transmission, ACK/NACK of the data, and the like), and to contribute to realizing a use case for low delay communication.

The system 1 supports a normal CP and an extended CP having a larger CP length than that of the normal CP. The CP length is a length in response to a subcarrier spacing or a symbol length, and the CP length is typically inversely proportional to the subcarrier spacing and proportional to the symbol length. The CP length may be a predetermined value in response to the subcarrier spacing or the symbol length. The CP length affects a resistance of the radio wave propagation path against multipath delay waves, and the larger CP length can enhance the resistance against up to delay waves having longer delay time. This respect will be described with reference to FIG. 15.

FIG. 15 is a diagram depicting an example of a relationship between the CP length and a time domain channel impulse response in the radio wave propagation path. In FIG. 15, four CP lengths are exemplarily depicted and lengths of double-ended arrows correspond to the four CP lengths, respectively. A first CP length is a normal CP length in a case in which the subcarrier spacing is 15 kHz. A second CP length is an extended CP length in a case in which the subcarrier spacing is 15 kHz. A third CP length is a normal CP length in a case in which the subcarrier spacing is 60 kHz. A fourth CP length is an extended CP length in a case in which the subcarrier spacing is 60 kHz. Delay waves accommodated within each double-ended arrow can be handled as desired signal components (S (signal components) in SINR). On the other hand, delay waves present outside of each double-ended arrow serve as interference signal components (I (interference components) in SINR). As depicted in FIG. 15, the SINR varies depending on the CP length and eventually affects the conversion of the BLER and the CQI.

A slot length is a unit of a time resource allocated once and defined by the number of symbols. Examples of the symbol herein include an OFDMA symbol, a DFT-S-OFDMA symbol, and a GFDMA symbol. Since the number of symbols is associated with the TTI, the number of symbols contributes to realizing the use case for low delay communication. In addition, if the number of symbols varies, a data size (for example, the number of bits such as Transport Block Size, Codeword Size, or Payload Size) at which data can be transmitted and received during the TTI varies; thus, as a result, the number of symbols affects the conversion of the BLER and the CQI.

A target BLER is a parameter that affects the conversion of the CQI. It is often desirable to set a lower target BLER than before depending on the use case. Owing to this, a plurality of candidates are desirably present for the target BLER. For example, it is desirable to set a low target BLER in a use case required to guarantee safety in V2X (Vehicle-to-Everything) communication or the like.

• Mixture of first communication parameters

The base station 100 holds communication using a plurality of first communication parameter sets in the unit resource. At that time, the base station 100 demarcates the unit resource by, for example, at least either a frequency range or a time range, and holds communication using the first communication parameter sets different among the demarcated unit resources.

As an example, the first communication parameter sets may vary depending on predetermined frequency ranges within a frequency channel (for example, component carrier). In that case, it is assumed that the same first communication parameter set is used for the shared channel and the reference signal in each frequency range. In this case, it is desirable that the base station 100 notifies the terminal apparatus 200 of the frequency ranges and the first communication parameter set used in the frequency ranges separately from the second communication parameter set to set the frequency ranges and the first communication parameter set to the terminal apparatus 200. It is desirable to statically, quasi-statically, or dynamically notify the terminal apparatus 200 of setting information for this setting as values unique to the cell (that is, unique to the base station 100) or unique to the user (unique to the terminal apparatus 200) via a downlink physical broadcast channel (PBCH) or a physical downlink shared channel (PDSCH).

FIG. 16 is a diagram depicting an example of the first communication parameter set in each frequency range in the frequency channel. In the example depicted in FIG. 16, different first communication parameter sets are used in three frequency ranges. In four resource blocks at a lowest frequency, for example, a waveform A, a subcarrier spacing $SCS_A$, and a CP length $CP_A$ are used. In four resource blocks at a next lowest frequency, a waveform B, a subcarrier spacing $SCS_B$, and a CP length $CP_B$ are used. In four resource blocks at a highest frequency, a waveform C, a subcarrier spacing $SCS_C$, and a CP length CPc are used. The same first communication parameter set is used for the shared channel and the reference signal in each frequency range. The terminal apparatus 200 can grasp what first communication parameter set is used in what frequency range by setting made in advance by the base station 100. It is to be noted that while the frequency ranges, in each of which the same first communication parameter set is used, are demarcated in units of four resource blocks in FIG. 16, it is not always necessary to demarcate the frequency ranges in units of the same number of resource blocks.

As another example, the same first communication parameter set may be used in the frequency channel (for example, component carrier). In a case of using a default communication parameter set corresponding to the frequency channel as the first communication parameter set, notification and setting of the first communication parameter set may be omitted. In a case, for example, in which the waveform is generated by OFDMA, the subcarrier spacing is 15 kHz or is the same value as that of the PBCH in the same frequency channel or that of a synchronizing signal, and the CP length is that of the normal CP, the notification and the setting of the first communication parameter set may be omitted. Different first communication parameter sets may be used among different frequency channels.

<3.3 Measurement report process>

(1) Overall flow of measurement report process

The terminal apparatus 200 measures a communication quality between the terminal apparatus 200 and the base station 100 on the basis of the signal transmitted from the base station 100. The signal for use in this measurement is typically the reference signal. An arbitrary signal, for example, a data signal other than the reference signal may be used for measurement. Description will be given hereinafter on the assumption that the reference signal is used as the signal for measurement.

The base station 100 transmits the reference signal to the terminal apparatus 200. The reference signal may be, for example, a CSI-RS (Channel State Information Reference Signal). On the other hand, the terminal apparatus 200 measures the reference signal received from the base station 100. The terminal apparatus 200 then reports (that is, transmits) information indicating a measurement result (hereinafter, also referred to as "measurement report") to the base station 100.

A series of these processes are also referred to as "measurement report process." The measurement report process can be classified into a measurement process for measuring the reference signal and a report process for reporting the measurement result by the measurement process.

An example of an overall flow of the measurement report process will be described hereinafter with reference to FIGS. 17 and 18.

FIG. 17 is a sequence diagram depicting an example of the flow of the measurement report process executed by the system 1 according to the present embodiment. The base station 100 and one terminal apparatus 200 are engaged with the present sequence. It is assumed that the base station 100 notifies the terminal apparatus 200 of the first communication parameter set (that is, transmits the first communication parameter set to the terminal apparatus 200) to set the first communication parameter set to the terminal apparatus 200 ahead of the present sequence.

As depicted in FIG. 17, first, the terminal apparatus 200 transmits a CSI request to the base station 100 (Step S100). The CSI request is a request to carry out the measurement report process. Examples of the CSI request can include an indication that the measurement report process is to be carried out, items to be measured, a request to transmit the reference signal, and a request of resource allocation for report. The terminal apparatus 200 can transmit the CSI request via, for example, a PUCCH (Physical Uplink Control Channel) or a PUSCH (Physical Uplink Shared Channel).

Next, the base station 100 makes measurement-related setting to the terminal apparatus 200 (Step S102). For example, the base station 100 notifies the terminal apparatus 200 of a second communication parameter set, to be described later, to set the second communication parameter set to the terminal apparatus 200. Furthermore, the terminal apparatus 200 notifies the terminal apparatus 200 of timing of carrying out the measurement process and timing of carrying out the report process to be described later, to set the timing to the terminal apparatus 200. This setting can be made via the Physical Broadcast Channel (PBCH) or the Physical Downlink Shared Channel (PDSCH).

Next, the base station 100 transmits the reference signal to the terminal apparatus 200 (Step S104). The reference signal is, for example, the CSI-RS. The base station 100 transmits the CSI-RS to the terminal apparatus 200 using the first communication parameter set.

The terminal apparatus 200 then performs measurement on the basis of the reference signal received from the base station 100 (Step S106). At this time, the terminal apparatus 200 performs the measurement on the assumption that the second communication parameter set is used for transmission of the CSI-RS.

Next, the terminal apparatus 200 reports the information indicating the measurement result (measurement report) to the base station 100 (Step S108). The terminal apparatus 200 can transmit the measurement report via, for example, the PUCCH or the PUSCH. Next, the base station 100 performs scheduling on the basis of the measurement report (Step S110).

FIG. 18 is a sequence diagram depicting another example of the flow of the measurement report process executed by the system 1 according to the present embodiment. The base station 100 and one terminal apparatus 200 are engaged with the present sequence. Processes in Steps S202 to S210 in the present sequence are similar to those in Steps S102 to S110 in the sequence depicted in FIG. 17. The sequence depicted in FIG. 17 illustrates a case in which the terminal apparatus 200 applies a trigger of the measurement report process. On the other hand, the sequence depicted in FIG. 18 illustrates a case in which the base station 100 applies a trigger of the measurement report process.

(2) Timing of carrying out process

• Timing of carrying out measurement

Timing of carrying out measurement may be set by the base station 100. For example, the base station 100 statically or quasi-statically sets measurement timing or a measurement cycle unique to the cell in advance using system information (for example, SIB (System Information Block) or MIB (Master Information Block)). Alternatively, the base station 100 may statically, quasi-statically, or dynamically set measurement timing or measurement cycle unique to the user (that is, unique to the terminal apparatus 200) using an RRC configuration or an RRC reconfiguration. In these cases, the base station 100 notifies the terminal apparatus 200 of the system information, the RRC configuration, or the RRC reconfiguration via the Physical Broadcast Channel (PBCH) or the Physical Downlink Shared Channel (PDSCH).

The timing of carrying out measurement may be set by the terminal apparatus 200.

• Timing of carrying out report

Timing of carrying out a report (that is, feedback) by the terminal apparatus 200 may be set by the base station 100. For example, the base station 100 statically or quasi-statically sets report timing or a report cycle unique to the cell in advance using system information (for example, SIB or MIB). Alternatively, the base station 100 may statically, quasi-statically, or dynamically set the report timing or the report cycle unique to the user (that is, unique to the terminal apparatus 200) using the RRC configuration or the RRC reconfiguration. In these cases, the base station 100 notifies the terminal apparatus 200 of the system information, the RRC configuration, or the RRC reconfiguration via the Physical Broadcast Channel or the Physical Downlink Shared Channel.

The timing of carrying out a report may be set by the terminal apparatus 200.

• Trigger of carrying out measurement report process

A trigger of carrying out the measurement report process may be applied by the base station 100 or the terminal apparatus 200. In a case in which the terminal apparatus 200 applies the trigger, the terminal apparatus 200 notifies the base station 100 of trigger information regarding the measurement report process. The trigger information is at least any of a request to carry out the measurement report process (for example, the CSI request depicted in FIG. 17), a signal receiving response (ACK/NACK) from the base station 100, or the measurement report.

The base station 100 makes measurement-related setting to the terminal apparatus 200 on the basis of notification of the trigger information from the terminal apparatus 200. The base station 100 makes the measurement-related setting on the basis of, for example, a CSI request, stability of the ACK/NACK, or a content of the measurement report. The measurement-related setting includes setting of the second communication parameter set to be described later, and setting of timing of carrying out the measurement process to be described later and timing of carrying out the report process.

(3) Second communication parameter set

The base station 100 sets a communication parameter set used in the measurement report process to the terminal apparatus 200. The communication parameter set used in the measurement report process is the communication parameter set to be used in the measurement report process on the assumption that the communication parameter set is used for transmission of the reference signal. The communication parameter set used in the measurement report process may be interpreted as the communication parameter set used in the measurement. Furthermore, the communication parameter set used in the measurement report process may be interpreted as the communication parameter set used in the report (that is, feedback).

Here, the base station 100 may separately set the communication parameter set used in the measurement and the communication parameter set used in the report as the communication parameter sets used in the measurement report process. In other words, the communication parameter set used in the measurement may differ from the communication parameter set used in the report. For example, out of a plurality of communication parameter sets used in the measurement, part of the communication parameter sets may be the communication parameter set used in the report. Furthermore, the communication parameter sets may be set such that out of the plurality of communication parameter sets used in the measurement, only a measurement report regarding the communication parameter set that satisfies a predetermined condition such as received power equal to or higher than a threshold is used as the report.

The communication parameter set used in the measurement report process will be also referred to as "second communication parameter set."

The second communication parameter set contains a waveform and physical layer parameters similarly to the first communication parameter set. In other words, the second communication parameter set contains, for example, a waveform, a frequency range, a subcarrier spacing, a CP length, a slot length, and a target BLER. Moreover, the second communication parameter set may contain a transport block size, a codeword size, and a code block size. It is noted that the frequency range can include a frequency range used in the measurement report process and a DFT-spread frequency range. It is particularly desirable to set the waveform individually and independently of the other communication parameters. The second communication parameter set may contain at least one or more communication parameters described above and may further contain other arbitrary communication parameters.

The first communication parameter set may be the same as the second communication parameter set. Conversely, the first communication parameter set may differ in part or in entirety from the second communication parameter set. For example, the measurement report process may be performed on the assumption of a waveform different from the waveform used for actual transmission of the reference signal. In this case, the base station 100 can receive a report of the measurement result related to the communication parameter set that is not actually used for transmission.

The base station 100 may set a plurality of second communication parameter sets to the terminal apparatus 200. In this case, the terminal apparatus 200 performs the measurement report process on the basis of each set of the plurality of second communication parameter sets. The base station 100 thereby enables the terminal apparatus 200 to measure the communication quality in a case of using a plurality of communication parameter sets that can be used, by one transmission of the reference signal for the plurality of communication parameter sets. It is, therefore, possible to suppress overhead of the measurement report process in the system 1.

The base station 100 notifies the terminal apparatus 200 of the second communication parameter set via, for example, the physical broadcast channel (PBCH) or the physical downlink shared channel (PDSCH).

• Relationship between first communication parameter set and second communication parameter set

A relationship between the first communication parameter set and the second communication parameter set will be described hereinafter.

The base station 100 transmits the reference signal to the terminal apparatus 200 using the first communication parameter set in predetermined frequency resources and predetermined time resources. The terminal apparatus 200 assumes the second communication parameter set for this reference signal and performs the measurement report process. It is desirable that the first communication parameter set is the same as the second communication parameter set. Nevertheless, it is permitted that the first communication parameter set differs from the second communication parameter set. The relationship between the first communication parameter set and the second communication parameter set is depicted in Table 4 below. Table 4 below depicts the relationship between the first communication parameter set actually used for transmission of the reference signal and the second communication parameter set.

[Table 4]

Table 4. Relationship between first communication parameter set and second communication parameter set

| Case | Relationship between actual subcarrier spacing $f_{CSI-RS}$ of reference signal and assumed subcarrier spacing $f_{CSZ-mes}$ in measurement report process | Relationship between actual waveform of reference signal and assumed waveform in measurement report process | Relationship between actual CP length $CP_{CSI-RS}$ of reference signal and assumed CP length $CP_{CSI-mes}$ in measurement report process | Particularly desirable case |
|---|---|---|---|---|
| C1 | $f_{CSI-RS} == f_{CSI-mes}$ | Same | $CP_{CSI-RS} == CP_{CSI-mes}$ | o |
| C2 | $f_{CSI-RS} == f_{CSI-mes}$ | Same | $CP_{CSI-RS} >= CP_{CSI-mes}$ | o |
| C3 | $f_{CSI-RS} == f_{CSI-mes}$ | Same | $CP_{CSI-RS} <= CP_{CSI-mes}$ | |
| C4 | $f_{CSI-RS} == f_{CSI-mes}$ | Different | $CP_{CSI-RS} == CP_{CSI-mes}$ | o |
| C5 | $f_{CSI-RS} == f_{CSI-mes}$ | Different | $CP_{CSI-RS} >= CP_{CSI-mes}$ | o |
| C6 | $f_{CSI-RS} == f_{CSI-mes}$ | Different | $CP_{CSI-RS} <= CP_{CSI-mes}$ | |
| C7 | $f_{CSI-RS} >= f_{CSI-mes}$ | Same | $CP_{CSI-RS} == CP_{CSI-mes}$ | |
| C8 | $f_{CSI-RS} >= f_{CSI-mes}$ | Same | $CP_{CSI-RS} >= CP_{CSI-mes}$ | |
| C9 | $f_{CSI-RS} >= f_{CSI-mes}$ | Same | $CP_{CSI-RS} <= CP_{CSI-mes}$ | |
| C10 | $f_{CSI-RS} >= f_{CSI-mes}$ | Different | $CP_{CSI-RS} == CP_{CSI-mes}$ | |
| C11 | $f_{CSI-RS} >= f_{CSI-mes}$ | Different | $CP_{CSI-RS} >= CP_{CSI-mes}$ | |
| C12 | $f_{CSI-RS} >= f_{CSI-mes}$ | Different | $CP_{CSI-RS} <= CP_{CSI-mes}$ | |
| C13 | $f_{CSI-RS} <= f_{CSI-mes}$ | Same | $CP_{CSI-RS} == CP_{CSI-mes}$ | o |
| C14 | $f_{CSI-RS} <= f_{CSI-mes}$ | Same | $CP_{CSI-RS} >= CP_{CSI-mes}$ | o |
| C15 | $f_{CSI-RS} <= f_{CSI-mes}$ | Same | $CP_{CSI-RS} <= CP_{CSI-mes}$ | |

(continued)

| Case | Relationship between actual subcarrier spacing $f_{CSI-RS}$ of reference signal and assumed subcarrier spacing $f_{CSZ-mes}$ in measurement report process | Relationship between actual waveform of reference signal and assumed waveform in measurement report process | Relationship between actual CP length $CP_{CSI-RS}$ of reference signal and assumed CP length $CP_{CSI-mes}$ in measurement report process | Particularly desirable case |
|---|---|---|---|---|
| C16 | $f_{CSI-RS}$ <= $f_{CSI-mes}$ | Different | $CP_{CSI-RS}$ == $CP_{CSI-mes}$ | o |
| C17 | $f_{CSI-RS}$ <= $f_{CSI-mes}$ | Different | $CP_{CSI-RS}$ >= $CP_{CSI-mes}$ | o |
| C18 | $f_{CSI-RS}$ <= $f_{CSI-mes}$ | Different | $CP_{CSI-RS}$ <= $CP_{CSI-mes}$ | |

(4) Measurement report process based on second communication parameter set

The terminal apparatus 200 performs the measurement report process on the basis of the second communication parameter set. More specifically, the terminal apparatus 200 measures the reference signal received from the base station 100 on the basis of the second communication parameter set that is set by the base station 100, and reports information indicating a measurement result to the base station 100.

A plurality of second communication parameter sets are often set. In that case, the terminal apparatus 200 measures one received reference signal on the basis of each set of the plurality of set second communication parameter sets. More specifically, the terminal apparatus 200 measures one reference signal for each of the communication parameter sets assumed to be used for transmission of the reference signal, and obtains a plurality of measurement results. It is noted herein that the first communication parameter set used for transmission of the reference signal may differ from at least one assumed second communication parameter set.

In this case, the terminal apparatus 200 can obtain the measurement result based on the second communication parameter set different from the first communication parameter set used for transmission of the reference signal by one reception of the reference signal. It is, therefore, possible to suppress overhead of the measurement report process in the system 1.

In a case of setting the plurality of second communication parameter sets, it is desirable to perform the measurement report process on the basis of all of the set second communication parameter sets. Alternatively, only the measurement report process based on part of the second communication parameter sets may be performed out of the plurality of set second communication parameter sets.

It is conceivable that the base station 100 does not set the second communication parameter set. In that case, the terminal apparatus 200 sets the second communication parameter set on its own. At this time, the terminal apparatus 200 may set one second communication parameter set or a plurality of second communication parameter sets.

The measurement process performed by the terminal apparatus 200 based on the second communication parameter set will be described in detail.

(4.1) Measurement process

• Setting of assumed waveform

The terminal apparatus 200 performs measurement while assuming the waveform indicated by the second communication parameter set. In a case of assuming a plurality of waveforms, the terminal apparatus 200 performs measurement for each of the assumed waveforms. Alternatively, the terminal apparatus 200 may assume only one waveform per measurement.

First, the terminal apparatus 200 estimates a channel response in a radio wave propagation path between the transmitting and receiving apparatuses. The path between the transmitting and receiving apparatuses may be that between the base station 100 and one terminal apparatus 200 or may be that between one terminal apparatus 200 and another terminal apparatus 200. The terminal apparatus 200 desirably estimates channel responses in both the frequency domain and the time domain. It is also desirable that the channel responses in the domains are estimated in such a manner that each channel response contains a MIMO (multiple-input and multiple-output) space domain and a feature of a multi-antenna. After estimating the channel responses, the terminal apparatus 200 estimates a length of the channel response particularly from an estimated value of the channel response in the time domain. The length of the channel response to be estimated corresponds herein to, for example, a maximum value of differences between delay time of delay waves satisfying a predetermined condition in the channel response in the time domain.

• Measurement of RI

The terminal apparatus 200 performs measurement in response to a feature of the assumed waveform. For example, the terminal apparatus 200 measures the RI in response to the feature of the assumed waveform.

The terminal apparatus 200 may perform measurement on the basis of whether or not the waveform has a feature of a single carrier waveform. Table 5 below depicts an example of waveforms with and without the feature of the single carrier waveform.

[Table 5]

Table 5. Example of waveforms with and without feature of single carrier waveform

| | |
|---|---|
| Example of waveform with feature of single carrier waveform | SC-FDMA |
| | DFT-S-OFDMA |
| | GFDMA (GFDMA using DFT-Spread on transmitting side) |
| Example of waveform without feature of single carrier waveform | OFDMA |
| | Filtered OFDMA |
| | UF-OFDMA |
| | FBMC |
| | GFDMA (GFDMA not using DFT-Spread on transmitting side) |

An example of a criterion as to whether or not a waveform has the feature of a single carrier includes whether or not the transmitting side performs DFT spread or FFT spread. The transmitting apparatus depicted in, for example, FIGS. 3, 12, and 13 performs DFT spread or FFT spread in the time-to-frequency conversion process. Owing to this, a waveform subjected to SC-FDMA, DFT-S-OFDMA, or GFDMA (GFDMA using DFT spread) can be interpreted as a waveform with the feature of the single carrier waveform. On the other hand, a waveform not subjected to DFT spread or FFT spread can be interpreted as a waveform without the feature of the single carrier waveform.

In a case of assuming the waveform without the feature of the single carrier waveform, the terminal apparatus 200 measures a value of the RI (Rank Indicator) from spatial features of the channel responses and the feature of the MIMO. In a case of expressing a MIMO channel by a matrix, it is desirable that the measurement of the RI is to measure a rank of the matrix.

On the other hand, in a case of assuming the waveform with the feature of the single carrier waveform, it is desirable that the terminal apparatus 200 fixes a measurement value of the RI to a predetermined value. For example, the terminal apparatus 200 fixes the rank of the MIMO in the channel responses to one. In this case, RI = 0. As another example, the terminal apparatus 200 may set different maximum values assumed in the RI between the case of assuming the waveform with the feature of the single carrier waveform and the case of assuming the waveform without the feature of the single carrier waveform. For example, it is desirable that the maximum value in the case of the waveform with the feature of the single carrier waveform is set to be equal to or smaller than the maximum value in the case of the waveform without the feature of the single carrier waveform.

The terminal apparatus 200 may perform measurement on the basis of whether the waveform has a feature of an orthogonal waveform or a feature of a non-orthogonal waveform. Table 6 below depicts an example of waveforms with the feature of the orthogonal waveform and waveforms with the feature of the non-orthogonal waveform.

[Table 6]

Table 6. Example of waveforms with feature of orthogonal waveform and waveforms with feature of non-orthogonal waveform

| | |
|---|---|
| Example of waveforms with feature of orthogonal waveform (example of waveforms without feature of non-orthogonal waveform) | SC-FDMA |
| | DFT-S-OFDMA |
| | OFDMA |
| Example of waveforms with feature of non-orthogonal waveform | Filtered OFDMA |
| | UF-OFDMA |
| | FBMC |
| | GFDMA |
| | FTN |

As depicted in Table 6, examples of waveforms with the feature of the orthogonal waveform include those by SC-FDMA, DFT-S-OFDMA, and OFDMA. These can be said as waveforms characterized by not subjected to oversampling and filtering in the transmitted signal process as described above with reference to FIGS. 2 and 3.

On the other hand, as depicted in Table 6, examples of the waveforms with the feature of the non-orthogonal waveform include Filtered OFDMA, UF (Universal Filtered)-OFDMA, FBMC (Filterbank Multicarrier), GFDMA (Generalized Frequency Division Multiple Access), and FTN (Faster-Than-Nyquist). These can be said as waveforms characterized by being subjected to oversampling and filtering in the transmitted signal process as described with reference to FIGS. 1 and 8 to 12.

• Measurement of PMI

The terminal apparatus 200 measures a PMI. A population of precoding matrices that become PMI candidates are desirably determined on the basis of the measured value of the RI.

• Measurement of CQI

The terminal apparatus 200 measures a CQI. The terminal apparatus 200 measures the CQI particularly on the basis of the assumed CP length and the assumed target BLER.

The terminal apparatus 200 first estimates an effective SINR for measuring the CQI. The interference and noise components (I and N in SINR) contain a thermal noise of the terminal apparatus 200, a cochannel interference and an adjacent channel interference from the other cells in a multicell environment, an intersymbol interference resulting from a multipath delay on the radio wave propagation path and the CP length, an interference resulting from the waveform, and the other interferences. The terminal apparatus 200 estimates the SINR on the basis of the assumed CP length for the intersymbol interference among these components.

It is noted that a CP length measured by the terminal apparatus 200 may be adopted as the assumed CP length instead of setting of the assumed CP length by the base station 100. Alternatively, a plurality of CP lengths other than the measured CP length may be adopted as the assumed CP lengths. In another alternative, a value of a CP length independent of the measured CP length may be adopted as the CP length to be measured.

In a case of assuming the plurality of CP lengths, the terminal apparatus 200 measures the CQI on the basis of each of the assumed CP lengths. This is because the SINR possibly varies depending on the CP length.

In a case of assuming a plurality of target BLERs, the terminal apparatus 200 measures the CQI on the basis of each of the assumed target BLERs. Specifically, the terminal apparatus 200 measures the CQI on the basis of each assumed target BLER. This is because the CQI possibly varies depending on the target BLER. The terminal apparatus 200 measures the CQI by comparing the estimated effective SINR with a value of a BLER curve corresponding to the waveform. It is desirable to prepare the BLER curve per candidate CQI. It is desirable to determine the CQI having highest frequency utilization efficiency as a result of measurement of the CQI among the CQIs satisfying the target BLER from comparison of the BLER curve with the effective SINR.

• Measurement based on assumption of frequency ranges

The terminal apparatus 200 performs measurement on the basis of assumption of frequency ranges.

Particularly in a case of assuming a waveform subjected to DFT spread on the transmitting side (that is, waveform with the feature of the single carrier waveform), the terminal apparatus 200 performs measurement on the basis of assumption of the frequency ranges. Assumed frequency ranges include a measurement (that is, measurement target) frequency range and a DFT-spread frequency range. These frequency ranges are typically set by the base station 100 as the second communication parameter set. It is noted that the assumed DFT-spread frequency range is desirably set only in a case of using the waveform subjected to the DFT spread on the transmitting side. In other words, in a case of using the waveform not subjected to the DFT spread on the transmitting side, it is unnecessary to set the assumed DFT-spread frequency range.

Two types of a relationship between the assumed measurement frequency range and the assumed DFT-spread frequency range are conceivable as depicted in FIGS. 19 and 20. FIG. 19 is a diagram depicting a case in which the assumed measurement frequency range is the same as the assumed DFT-spread frequency range. FIG. 20 is a diagram depicting a case in which the assumed measurement frequency range is different from the assumed DFT-spread frequency range. It is to be noted that the measurement frequency range is not necessarily the bandwidth of the frequency channel (for example, bandwidth of component carrier). It is desirable that the DFT-spread frequency range is equal to or smaller than the measurement frequency range. It is desirable that the relationship between the measurement frequency range and the DFT-spread frequency range is an integer multiple relationship. It is desirable that the DFT-spread frequency range is an integer multiple of the bandwidth of the resource block.

The terminal apparatus 200 performs measurement on the basis of which of the two relationships is held between the assumed frequency ranges. The terminal apparatus 200 can thereby more accurately incorporate the effect of the frequency diversity into an estimation result at a time of, for example, estimating the effective SINR.

(4.2) Specific processes related to measurement process

FIG. 21 is a diagram depicting an example of a block diagram of the measurement process by the terminal apparatus 200. Information input to blocks in FIG. 21 as indicated by broken arrows is the assumed second communication parameter set. As depicted in FIG. 21, the terminal apparatus 200 first receives signals in the frequency domain and extracts reference signal components (for example, resource elements of the reference signal). The terminal apparatus 200 then performs channel estimation using the extracted reference signal.

Next, the terminal apparatus 200 estimates an appropriate rank of the MIMO radio wave propagation path between the transmitting and receiving apparatuses and an appropriate precoding matrix using at least any of the assumed waveform, the assumed frequency range, or the assumed subcarrier spacing, and a channel estimated value (desirably in the frequency domain). The precoding matrix is desirably selected from among a combination of a plurality of preset precoding matrices (that is, Codebook). The rank and the precoding matrix are converted into the RI and the PMI for a report.

The channel estimated value is also used to estimate the SINR for derivation of the CQI. The terminal apparatus 200 estimates desired signal components and interference components on the basis of at least any of the assumed waveform, the assumed frequency range, the assumed subcarrier spacing, or the assumed CP length. First, the terminal apparatus 200 estimates the CP length. Next, the terminal apparatus 200 converts the channel estimated value into channel impulse responses in the time domain, and then reflects total electric power of the channel impulse responses within a range of the CP length and total electric power of the channel impulse responses out of the range of the CP length in the SINR. This process is already described above with reference to FIG. 15. It is noted that the CP length is converted, for a report, into a CPI (Cyclic Prefix Indicator) that is an indicator corresponding to the CP length.

After estimating the SINR, the terminal apparatus 200 estimates the BLER using an SINR estimated value. It is desirable herein that the terminal apparatus 200 stores a BLER reference value corresponding to each of types of assumed waveforms (for example, SINR-to-BLER table per CQI). It is also desirable that the terminal apparatus 200 stores a BLER reference value for each slot length and each data size (Transport Block Size or the like).

After estimating the BLER, the terminal apparatus 200 compares the SINR estimated value with the BLER estimated value and enumerates one or more CQIs satisfying the target BLER. The terminal apparatus 200 selects one CQI to be actually fed back from among the enumerated CQIs. The terminal apparatus 200 desirably selects the CQI with highest frequency utilization efficiency from among the CQIs satisfying the target BLER. In a case of assuming a plurality of target BLERs, the terminal apparatus 200 selects one CQI per assumed target BLER.

Furthermore, the terminal apparatus 200 converts the assumed waveform into a WI (Waveform Indicator) that is an indicator corresponding to the waveform for a report.

(4.3) Report process

The terminal apparatus 200 prepares a report on the basis of the second communication parameter set. In a case in which a plurality of second communication parameter sets are set, the terminal apparatus 200 prepares a report on information indicating the measurement result about each set of the plurality of second communication parameter set of the terminal apparatus 200 (that is, measurement report). The information indicating the measurement result includes, for example, at least any of the CQI, the RI, the PMI, the CPI, or the WI.

It is desirable herein that the information indicating the measurement result includes at least information indicating the waveform (that is, WI) used in the measurement report process. This is because the waveform greatly affects the other measurement results such as the CQI. Receiving the report on at least the information indicating the waveform used in the measurement report process enables the base station 100 to interpret the measurement report from the terminal apparatus 200 in the light of the influence of the waveform.

Resources for use in reporting the measurement report by the terminal apparatus 200 may be set by the base station 100. For example, the base station 100 allocates resources for the report to the terminal apparatus 200 in response to a CSI request. Furthermore, the terminal apparatus 200 may report the report information using resources selected from a resource pool set by the base station 100 in advance.

The terminal apparatus 200 may report a plurality of measurement reports in one measurement report process. For example, in the case in which the plurality of second communication parameter sets are set, the terminal apparatus 200 reports the result of measuring one received reference signal on the basis of each set of the plurality of second communication parameter sets to the base station 100. As described above, the second communication parameter set used in the measurement may differ from the second communication parameter set used in the report, that is, the terminal apparatus 200 may report a result of part of the measurement to the base station 100.

(4.4) Cycle and frequency of measurement process and report process

A frequency of carrying out the measurement process is desirably low from the viewpoint of reductions in a load and power consumption of the terminal apparatus 200. In addition, a frequency of carrying out the report process is desirably low from the viewpoint of a reduction in overhead of the overall system 1.

The RI, the PMI, the CQI, the WI, and the CPI that are items to be measured and reported possibly differ in a temporal behavior of a fluctuation. In general, it is considered that the PMI and the CQI are low in a temporal granularity of the fluctuation. It is considered that the RI is next to the PMI and the CQI and low in the temporal granularity of the fluctuation. It is considered that the CPI is next to the RI and low in the temporal granularity of the fluctuation, and the WI is the longest in the temporal granularity among these items.

From features described above, it is desirable to set the measurement and the report to be carried out per intended item. Specifically, it is desirable to set shorter a cycle of carrying out the measurement and the report and set higher a frequency thereof for the item having a lower temporal granularity in fluctuation. It is also desirable to set longer the cycle of carrying out the measurement and the report and set lower the frequency thereof for the item having a higher temporal granularity in fluctuation. Qualitatively, the cycle of carrying out the measurement and the report and the frequency thereof desirably have the following relationships.

Cycle of carrying out measurement and report
$CQI \leq PMI \leq RI \leq CPI \leq WI$
Frequency of carrying out measurement and report
$CQI \geq PMI \geq RI \geq CPI \geq WI$

The terminal apparatus 200 may report measurement results of a plurality of intended items either collectively or individually. For example, in a case of reporting the measurement result of the intended item having a long cycle of carrying out the measurement and the report and a low frequency thereof, the terminal apparatus 200 may report the measurement result together with the measurement result of the intended item having a shorter cycle of carrying out the measurement and the report and a higher frequency thereof. In other words, in a case of reporting the measurement result of the intended item having a short cycle of carrying out the measurement and the report and a low frequency thereof, the terminal apparatus 200 does not need to report the measurement result together with the measurement result of the intended item having a longer cycle of carrying out the measurement and the report and a lower frequency thereof. In addition, the terminal apparatus 200 does not need to report the measurement result of the intended item having a short cycle of carrying out the measurement and the report and a low frequency thereof whenever carrying out measurement, and may collectively report the measurement result at a time of reporting the measurement result of the intended item having a longer cycle and a higher frequency.

It is noted that the waveform possibly affects all the measurement results of the other intended items. Owing to this, in a case of reporting the WI, it is desirable to collectively report the measurement results of the other intended items. This is desirably realized independently of the cycle and frequency of carrying out the measurement and the report described above.

Furthermore, there is a probability that the waveform with the feature of the single carrier waveform such as the waveform generated by the DFT-S-OFDMA, the SC-FDMA, or the GFDMA is often not suited for spatial multiplexing for multiplexing different information or a different signal with a spatial layer or spatial stream in the MIMO. Owing to this, in a case in which the WI is reported and the WI has a waveform with the feature of the single carrier waveform, it is desirable to fix the RI to zero, that is, RI = 0 (number of spatial layers = 1 or number of spatial streams = 1). RI = 0 may be reported explicitly. Alternatively, the RI = 0 may indicate implicitly that the WI has the waveform with the feature of the single carrier waveform, and in this case, a report of the RI may be omitted. In the latter case, it is possible to reduce an amount of information to be reported and reduce overhead of the report.

(4.5) Control based on measurement report

The base station 100 controls the first communication parameter set on the basis of the measurement report based on the second communication parameter set by the terminal apparatus 200. In other words, to control the first communication parameter set, the base station 100 sets the second communication parameter set and causes the terminal apparatus 200 to carry out the measurement report process. This enables the base station 100 to efficiently carry out control over the first communication parameters and communication efficiency of the system 1 to be improved.

The base station 100 controls the second communication parameter set on the basis of the measurement report based on the second communication parameter set by the terminal apparatus 200. In other words, to control the second communication parameter set, the base station 100 sets the second communication parameter set and causes the terminal apparatus 200 to carry out the measurement report process. This enables the base station 100 to efficiently carry out control over the second communication parameters.

The base station 100 performs scheduling on the basis of the measurement report based on the second communication parameter set by the terminal apparatus 200. In other words, to perform scheduling, the base station 100 sets the second communication parameter set and causes the terminal apparatus 200 to carry out the measurement report process. This enables the base station 100 to efficiently carry out scheduling.

The base station 100 controls the timing of carrying out the measurement process and/or the report process by the terminal apparatus 200 on the basis of the measurement report based on the second communication parameter set by the terminal apparatus 200. This enables the base station 100 to suppress overhead related to the measurement report process.

(4.6) Supplementation

The terminal apparatus 200 may measure and report information other than the RI, the PMI, the CQI, the WI, and the CPI. For example, in a case in which the base station 100 can hold communication using a plurality of beams, the terminal apparatus 200 may measure and report information indicating a desirable beam. Furthermore, the terminal apparatus 200 may measure and report information (CSI-RS Resource Indicator) indicating resources to be used for transmission of the reference signal.

As described above, the measurement report process on the assumption of a plurality of waveforms can be performed on the basis of the reference signal modulated by a certain waveform. At that time, the waveform of the reference signal may be associated with a waveform to be assumed in the measurement report process. Furthermore, the reference signal may be transmitted in different resources fixedly set to waveforms used for modulation of the reference signal, or may be transmitted in a resource common to the different waveforms.

The waveforms will be supplementarily described. A difference in waveform can be rephrased by a difference in transmission process or a difference in receiving process. Examples of the former difference include a difference in subcarrier spacing, a difference in CP length or presence/absence of the CP length, presence/absence of the DFT conversion process, presence/absence of a filter bank, presence/absence of a subband filtering process, presence/absence of a subcarrier filtering process, and presence/absence of a Faster-Than-Nyquist process. Examples of the latter difference include presence/absence of interference canceller setting.

<4.7> Process flow

• Measurement process

An example of a flow of the measurement process will be described hereinafter with reference to FIGS. 22 to 24.

FIG. 22 is a diagram depicting an example of the flow of the measurement process executed by the terminal apparatus 200 according to the present embodiment. As depicted in FIG. 22, the terminal apparatus 200 first determines whether or not it is timing to carry out measurement (Step S300). The terminal apparatus 200 waits until determining that it is timing to carry out measurement (Step S300/NO). On the other hand, in a case of determining that it is timing to carry out measurement (Step S300/YES), the terminal apparatus 200 determines whether or not a waveform used in measurement is set by the base station 100 (Step S302). In a case of determining that a waveform used in measurement is set by the base station 100 (Step S302/YES), the terminal apparatus 200 carries out measurement per waveform used in measurement and set by the base station 100 (Step S306). On the other hand, in a case of determining that a waveform used in measurement is not set by the base station 100 (Step S302/NO), the terminal apparatus 200 selects one or more waveforms used in measurement (Step S304) and carries out measurement per selected waveform used in measurement (Step S306).

Subsequently, the measurement per waveform used in measurement in Step S306 will be described with reference to FIGS. 23 and 24.

FIG. 23 is a diagram depicting an example of a flow of the measurement process executed per waveform by the terminal apparatus 200 according to the present embodiment. As depicted in FIG. 23, the terminal apparatus 200 first estimates a frequency domain channel response (Step S400). Next, the terminal apparatus 200 estimates a time domain channel response and a length of the channel response (Step S402). Next, the terminal apparatus 200 measures the CPI (Step S404). Next, the terminal apparatus 200 determines whether or not the waveform used in measurement has the feature of the single carrier waveform (Step S406). In a case of determining that the waveform used in measurement has the feature of the single carrier waveform (Step S406/YES), the terminal apparatus 200 sets the RI to a predetermined value (for example, RI = 0) (Step S408). On the other hand, in a case of determining that the waveform used in measurement does not have the feature of the single carrier waveform (Step S406/NO), the terminal apparatus 200 measures the RI (Step S410). The terminal apparatus 200 then measures the PMI (Step S412). Next, the terminal apparatus 200 determines whether or not the CP length used in measurement is set by the base station 100 (Step S414). In a case of determining that the CP length used in measurement is set by the base station 100 (Step S414/YES), the terminal apparatus 200 measures the CQI per CP length set by the base station 100 (Step S422). On the other hand, in a case of determining that the CP length used in measurement is not set by the base station 100 (Step S414/NO), the terminal apparatus 200 determines whether or not to select a CP length used in measurement on the basis of a measurement value of the CPI (Step S416). In a case of determining to select a CP length used in measurement on the basis of the measurement value of the CPI (Step S416/YES), the terminal apparatus 200 selects one or more CP lengths based on the measured CPI as CP lengths used in measurement (Step S418). The terminal apparatus 200 then measures the CQI per CP length used in measurement out of the one or more CP lengths selected on the basis of the measured CPI (Step S422). On the other hand, in a case of determining not to select the CP length used in measurement on the basis of the measurement value of the CPI (Step S416/NO), the terminal apparatus 200 selects one or more CP lengths used in measurement (Step S420). The terminal apparatus 200 then measures the CQI per CP length used in measurement out of the selected one or more CP lengths (Step S422).

Subsequently, the measurement of the CQI per CP length used in measurement in Step S422 described above will be described with reference to FIG. 24.

FIG. 24 is a diagram depicting an example of a flow of a CQI measurement process per CP length executed by the terminal apparatus 200 according to the present embodiment. As depicted in FIG. 24, the terminal apparatus 200 first determines whether or not the target BLER is set by the base station 100 (Step S500). In a case of determining that the target BLER is set by the base station 100 (Step S500/YES), the terminal apparatus 200 measures the CQI per target BLER used in measurement and set by the base station 100 (Step S504). On the other hand, in a case of determining that the target BLER is not set by the base station 100 (Step S500/NO), the terminal apparatus 200 selects one or more target BLERs used in measurement (Step S502) and measures the CQI per selected target BLER used in measurement (Step S504).

• Report process

An example of a flow of the report process will be described hereinafter with reference to FIG. 25.

FIG. 25 is a diagram depicting an example of the flow of the report process executed by the terminal apparatus 200 according to the present embodiment. As depicted in FIG. 25, the terminal apparatus 200 first determines whether or not it is timing to carry out a report (Step S600). The terminal apparatus 200 waits until determining that it is timing to carry out a report (Step S600/NO). On the other hand, in a case of determining that it is timing to carry out a report (Step S600/YES), the terminal apparatus 200 determines whether or not the waveform used in the report is set by the base station 100 (Step S602). In a case of determining that the waveform used in the report is set by the base station 100 (Step S602/YES), the terminal apparatus 200 generates a measurement report per waveform used in the report and set by the base station 100 (Step S606). On the other hand, in a case of determining that the waveform used in the report is not set by the base station 100 (Step S602/NO), the terminal apparatus 200 selects one or more waveforms used in the report (Step S604) and generates the measurement report per selected waveform used in measurement (Step S606). The terminal apparatus 200 then reports the generated measurement report to the base station 100 (Step S608).

<<4. Application examples>>

The technology according to the present disclosure can be applied to various products. For example, the base station 100 may be realized as any type of an eNB (evolved Node B) such as a macro eNB or a small eNB. The small eNB may be an eNB, such as a pico eNB, a micro eNB, or a home (femto) eNB, that covers a cell smaller than a macrocell. Alternatively, the base station 100 may be realized a base station of another type such as a NodeB or a BTS (Base Transceiver Station). The base station 100 may include a main body (also referred to as "base station apparatus") that controls wireless communication and one or more RRHs (Remote Radio Heads) disposed in a location other than a location of the main body. Furthermore, any of various types of terminals, to be described later, may operate as the base station 100 by executing a base station function either temporarily or semipermanently.

Moreover, for example, the terminal apparatus 200 may be realized as a smart phone, a tablet PC (Personal Computer), a notebook PC, a mobile terminal such as a mobile game terminal, a portable/dongle mobile router, or a digital camera, or a vehicle-mounted terminal such as a car navigation system. Furthermore, the terminal apparatus 200 may be realized as a terminal (also referred to as "MTC (Machine Type Communication) terminal") holding M2M (Machine To Machine) communication. Further, the terminal apparatus 200 may be a wireless communication module (for example, an integrated circuit module configured with one die) mounted in any of these terminals.

<4.1. Application examples related to base station>

(First application example)

FIG. 26 is a block diagram depicting a first example of a schematic configuration of an eNB to which the technique according to the present disclosure can be applied. An eNB 800 has one or more antennas 810 and a base station apparatus 820. Each antenna 810 and the base station apparatus 820 can be connected to each other via an RF cable.

Each antenna 810 has one or a plurality of antenna elements (for example, a plurality of antenna elements that configure a MIMO antenna), and is used to transmit and receive radio signals from and by the base station apparatus 820. The eNB 800 has the plurality of antennas 810 as depicted in FIG. 26, and the plurality of antennas 810 may correspond to, for example, a plurality of frequency bands used by the eNB 800. While FIG. 26 depicts an example in which the eNB 800 has the plurality of antennas 810, the eNB 800 may have a single antenna 810.

The base station apparatus 820 includes a controller 821, a memory 822, a network interface 823, and a wireless communication interface 825.

The controller 821, which may be, for example, a CPU or a DSP, actuates various functions of an upper layer of the base station apparatus 820. For example, the controller 821 generates data packets from a data within a signal processed by the wireless communication interface 825, and transfers the generated packets via the network interface 823. The controller 821 may generate bundled packets by bundling data from a plurality of baseband processors and transfer the generated bundled packets. Moreover, the controller 821 may have a logical function to execute control such as Radio Resource Control, Radio Bearer Control, Mobility Management, Admission Control, or Scheduling. In addition, the control may be executed in cooperation with peripheral eNBs or core network nodes. The memory 822 includes a RAM and a ROM, and stores a program executed by the controller 821 and various control data (for example, a terminal list, transmission power data, and scheduling data).

The network interface 823 is a communication interface for connecting the base station apparatus 820 to a core network 824. The controller 821 may communicate with the core network node or another eNB via the network interface 823. In that case, the eNB 800 may be connected to the core network node or another eNB by a logical interface (for example, an S1 interface or an X2 interface). The network interface 823 may be a wired communication interface or a wireless communication interface for a wireless backhaul. In a case in which the network interface 823 is a wireless communication interface, the network interface 823 may use, for wireless communication, a higher frequency band than a frequency band used by the wireless communication interface 825.

The wireless communication interface 825 supports a certain cellular communication scheme such as LTE (Long Term Evolution) or LTE-A (LTE-Advanced), and provides wireless connection to a terminal located within a cell of the eNB 800 via the antenna 810. Typically, the wireless communication interface 825 can include baseband (BB) processors 826, RF circuits 827, and the like. The BB processors 826 may each perform, for example, encoding/decoding, modulation/demodulation, and multiplexing/demultiplexing, and execute various signal processes of layers (for example, L1, MAC (Medium Access Control), RLC (Radio Link Control), and PDCP (Packet Data Convergence Protocol)). The BB processors 826 may each have part of or all of the logical functions described above as an alternative to the controller 821. The BB processors 826 may each be a module including a memory that stores a communication control program, a processor that executes the program, and an associated circuit, and functions of the BB processors 826 can be changed by updating the program. Furthermore, the module may be a card or a blade inserted into a slot of the base station apparatus 820, or may be a chip mounted in the card or the blade. On the other hand, the RF circuits 827 may each include a mixer, a filter, an amplifier, and the like, and each transmit and receive radio signals via the antenna 810.

As depicted in FIG. 26, the wireless communication interface 825 includes a plurality of BB processors 826, and the plurality of BB processors 826 may correspond to, for example, a plurality of frequency bands used by the eNB 800. Furthermore, as depicted in FIG. 26, the wireless communication interface 825 includes a plurality of RF circuits 827, and the plurality of RF circuits 827 may correspond to, for example, a plurality of antenna elements, respectively. While FIG. 26 depicts an example in which the wireless communication interface 825 includes the plurality of BB processors 826 and the plurality of RF circuits 827, the wireless communication interface 825 may include a single BB processor 826 or a single RF circuit 827.

In the eNB 800 depicted in FIG. 26, one or more constituent elements (communication control section 151 and/or measurement report processing section 153) included in the base station 100 described with reference to FIGS. 5 and the like may be implemented in the wireless communication interface 825. Alternatively, at least part of these constituent elements may be implemented in the controller 821. As an example, the eNB 800 may mount a module including part of (for example, BB processor 826) or all of the wireless communication interface 825 and/or the controller 821, and the one or more constituent elements may be implemented in the module. In this case, the module may store a program for causing a processor to function as the one or more constituent elements (in other words, program for causing the processor to execute operations of the one or more constituent elements), and execute the program. As another example, a program for causing a processor to function as the one or more constituent elements may be installed in the eNB 800, and the wireless communication interface 825 (for example, the BB processor 826) and/or the controller 821 may execute the program. As described above, the eNB 800, the base station apparatus 820, or the module may be provided as an apparatus configured with the one or more constituent elements, and the program for causing the processor to function as the one or more constituent elements may be provided. In addition, a readable recording medium recording the program may be provided.

Furthermore, in the eNB 800 depicted in FIG. 26, the wireless communication section 120 described with reference to FIG. 5 may be implemented in the wireless communication interface 825 (for example, RF circuit 827). Moreover, the antenna section 110 may be implemented in the antenna 810. Further, the network communication section 130 may be implemented in the controller 821 and/or network interface 823. Furthermore, the storage section 140 may be implemented in the memory 822.

(Second application example)

FIG. 27 is a block diagram depicting a second example of a schematic configuration of an eNB to which the technique according to the present disclosure can be applied. An eNB 830 has one or more antennas 840, a base station apparatus 850, and an RRH 860. Each antenna 840 and the RRH 860 can be connected to each other via an RF cable. In addition, the base station apparatus 850 and the RRH 860 can be connected to each other by a high-speed line such as an optical fiber cable.

Each antenna 840 has one or a plurality of antenna elements (for example, a plurality of antenna elements that configure a MIMO antenna), and is used to transmit and receive radio signals from and by the RRH 860. As depicted in FIG. 27, the eNB 830 has the plurality of antennas 840, and the plurality of antennas 840 may correspond to, for example, a plurality of frequency bands used by the eNB 830. While FIG. 27 depicts an example in which the eNB 830 has the plurality of antennas 840, the eNB 830 may have a single antenna 840.

The base station apparatus 850 includes a controller 851, a memory 852, a network interface 853, a wireless communication interface 855, and a connection interface 857. The controller 851, the memory 852, and the network interface 853 are similar to the controller 821, the memory 822, and the network interface 823 described with reference to FIG. 26.

The wireless communication interface 855 supports a certain cellular communication scheme such as LTE or LTE-Advanced, and provides wireless connection to a terminal located within a sector corresponding to the RRH 860 via the RRH 860 and the antenna 840. Typically, the wireless communication interface 855 can include a BB processors 856 and the like. The BB processors 856 are similar to the BB processors 826 described with reference to FIG. 26 except that the BB processors 856 are connected to RF circuits 864 in the RRH 860 via a connection interface 857. As depicted in FIG. 27, the wireless communication interface 855 includes a plurality of BB processors 856, and the plurality of BB processors 856 may correspond to, for example, a plurality of frequency bands used by the eNB 830. While FIG. 27 depicts an example in which the wireless communication interface 855 includes the plurality of BB processors 856, the wireless communication interface 855 may include a single BB processor 856.

The connection interface 857 is an interface for connecting the base station apparatus 850 (wireless communication interface 855) to the RRH 860. The connection interface 857 may be a communication module for communication on the high-speed line connecting the base station apparatus 850 (wireless communication interface 855) to the RRH 860.

Furthermore, the RRH 860 includes a connection interface 861 and a wireless communication interface 863.

The connection interface 861 is an interface for connecting the RRH 860 (wireless communication interface 863) to the base station apparatus 850. The connection interface 861 may be a communication module for communication on the high-speed line.

The wireless communication interface 863 transmits and receives radio signals via the antenna 840. Typically, the wireless communication interface 863 can include RF circuits 864 and the like. The RF circuits 864 may each include a mixer, a filter, an amplifier, and the like, and each transmit and receive radio signals via the antenna 840. As depicted in FIG. 27, the wireless communication interface 863 includes a plurality of RF circuits 864, and the plurality of RF circuits 864 may correspond to, for example, a plurality of antenna elements. While FIG. 27 depicts an example in which the wireless communication interface 863 includes the plurality of RF circuits 864, the wireless communication interface 863 may include a single RF circuit 864.

In the eNB 830 depicted in FIG. 27, one or more constituent elements (communication control section 151 and/or measurement report processing section 153) included in the base station 100 described with reference to FIGS. 5 and the like may be implemented in the wireless communication interface 855 and/or the wireless communication interface 863. Alternatively, at least part of these constituent elements may be implemented in the controller 851. As an example, the eNB 830 may mount a module including part of (for example, BB processor 856) or all of the wireless communication interface 855 and/or the controller 851, and the one or more constituent elements may be implemented in the module. In this case, the module may store a program for causing a processor to function as the one or more constituent elements (in other words, program for causing the processor to execute operations of the one or more constituent elements), and execute the program. As another example, a program for causing a processor to function as the one or more constituent elements may be installed in the eNB 830, and the wireless communication interface 855 (for example, the BB processor 856) and/or the controller 851 may execute the program. As described above, the eNB 830, the base station apparatus 850, or the module may be provided as an apparatus configured with the one or more constituent elements, and the program for causing the processor to function as the one or more constituent elements may be provided. In addition, a readable recording medium recording the program may be provided.

Furthermore, in the eNB 830 depicted in FIG. 27, the wireless communication section 120 described with reference to FIG. 5, for example, may be implemented in the wireless communication interface 863 (for example, RF circuit 864). Moreover, the antenna section 110 may be implemented in the antenna 840. Further, the network communication section 130 may be implemented in the controller 851 and/or network interface 853. Furthermore, the storage section 140 may be implemented in the memory 852.

<4.2. Application example related to terminal apparatus>

(First application example)

FIG. 28 is a block diagram depicting an example of a schematic configuration of a smart phone 900 to which the technique according to the present disclosure is applicable. The smart phone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a SoC (System on Chip), and controls functions of an application layer and the other layers of the smart phone 900. The memory 902 includes a RAM and a ROM and stores a program executed by the processor 901 and data. The storage 903 can include a storage medium such as a semiconductor memory or a hard disk. The external connection interface 904 is an interface for connecting an external device such as a memory card or a USB (Universal Serial Bus) to the smart phone 900.

The camera 906 has an imaging element, for example, a CCD (Charge Coupled Device) or a CMOS (Complementary Metal Oxide Semiconductor), and generates a captured image. The sensor 907 can include a sensor group which has, for example, a positioning sensor, a gyro sensor, a geomagnetic sensor, and an acceleration sensor. The microphone 908 converts a sound input to the smart phone 900 into an audio signal. The input device 909 includes, for example, a touch sensor that detects a touch onto a screen of the display device 910, a keypad, a keyboard, a button, or a switch, and receives an operation from a user or an input of information from the user. The display device 910 has a screen such as a liquid crystal display (LCD) or an organic light emitting diode (OLED) display, and displays an output image from the smart phone 900. The speaker 911 converts the audio signal output from the smart phone 900 into a sound.

The wireless communication interface 912 supports a certain cellular communication scheme such as LTE or LTE-Advanced, and executes wireless communication. Typically, the wireless communication interface 912 can include BB processors 913, RF circuits 914, and the like. The BB processors 913 may each perform, for example, encoding/decoding, modulation/demodulation, and multiplexing/demultiplexing, and execute various signal processes for wireless communication. On the other hand, the RF circuits 914 may each include a mixer, a filter, an amplifier, and the like, and each transmit and receive radio signals via the antenna 916. The wireless communication interface 912 may be a one chip module onto which the BB processors 913 and the RF circuits 914 are integrated. As depicted in FIG. 28, the wireless communication interface 912 may include a plurality of BB processors 913 and a plurality of RF circuits 914. While FIG. 28 depicts an example in which the wireless communication interface 912 includes the plurality of BB processors 913 and the plurality of RF circuits 914, the wireless communication interface 912 may include a single BB processor 913 or a single RF circuit 914.

Furthermore, the wireless communication interface 912 may support the other types of wireless communication scheme such as a near field wireless communication scheme, a close proximity wireless communication scheme, or a wireless LAN (Local Area Network) scheme in addition to the cellular communication scheme; in that case, the wireless communication interface 912 may include the BB processor 913 and the RF circuit 914 for each wireless communication scheme.

Each of the antenna switches 915 changes over a connection destination of the antenna 916 over among a plurality of circuits (for example, circuits for different wireless communication schemes) included in the wireless communication interface 912.

Each antenna 916 has one or a plurality of antenna elements (for example, a plurality of antenna elements that configure a MIMO antenna), and is used to transmit and receive radio signals from and by the wireless communication interface 912. As depicted in FIG. 28, the smart phone 900 may have the plurality of antennas 916. While FIG. 28 depicts an example in which the smart phone 900 has the plurality of antennas 916, the smart phone 900 may have a single antenna 916.

Furthermore, the smart phone 900 may be configured with the antenna 916 for each wireless communication scheme. In that case, the antenna switches 915 may be omitted from the configuration of the smart phone 900.

The bus 917 mutually connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919. The battery 918 supplies electric power to blocks in the smart phone 900 depicted in FIG. 28 via a power feeding line partially indicated by broken lines in FIG. 28. The auxiliary controller 919 actuates minimum functions of the smart phone 900 in, for example, a sleep mode.

In the smart phone 900 depicted in FIG. 28, one or more constituent elements (communication control section 241 and/or measurement report processing section 243) included in the terminal apparatus 200 described with reference to FIG. 6 and the like may be implemented in the wireless communication interface 912. Alternatively, at least part of these constituent elements may be implemented in the processor 901 or the auxiliary controller 919. As an example, the smart phone 900 may mount a module including part of (for example, BB processor 913) or all of the wireless communication interface 912, the processor 901, and/or the auxiliary controller 919, and the one or more constituent elements may be implemented in the module. In this case, the module may store a program for causing a processor to function as the one or more constituent elements (in other words, program for causing the processor to execute operations of the one or more constituent elements), and execute the program. As another example, a program for causing a processor to function as the one or more constituent elements may be installed in the smart phone 900, and the wireless communication interface 912 (for example, the BB processor 913), the processor 901, and/or the auxiliary controller 919 may execute the program. As described above, the smart phone 900 or the module may be provided as an apparatus configured with the one or more constituent elements, and the program for causing the processor to function as the one or more constituent elements may be provided. In addition, a readable recording medium recording the program may be provided.

Furthermore, in the smart phone 900 depicted in FIG. 28, the wireless communication section 220 described with reference to FIG. 6, for example, may be implemented in the wireless communication interface 912 (for example, RF circuit 914). Moreover, the antenna section 210 may be implemented in the antenna 916. Furthermore, the storage section 230 may be implemented in the memory 902.

(Second application example)

FIG. 29 is a block diagram depicting an example of a schematic configuration of a car navigation system 920 to which the technique according to the present disclosure is applicable. The car navigation system 920 includes a processor 921, a memory 922, a GPS (Global positioning system) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or an SoC, and controls a navigation function and other functions of the car navigation system 920. The memory 922 includes a RAM and a ROM and stores a program executed by the processor 921 and data.

The GPS module 924 measures a position (for example, a longitude, a latitude, and an altitude) of the car navigation system 920 using a GPS signal received from a GPS satellite. The sensor 925 can include a sensor group which has, for example, a gyro sensor, a geomagnetic sensor, and an air pressure sensor. The data interface 926 is connected to, for example, a vehicle-mounted network 941 via a terminal that is not depicted, and acquires data generated by a vehicle side such as a vehicle speed.

The content player 927 reproduces a content stored in a storage medium (for example, CD or DVD) inserted into the storage medium interface 928. The input device 929 includes, for example, a touch sensor that detects a touch onto a screen of the display device 930, a button, or a switch, and receives an operation from a user or an input of information from the user. The display device 930 has a screen such as an LCD or an OLED display, and displays the navigation function or an image of the reproduced content. The speaker 931 outputs the navigation function or a sound of the reproduced content.

The wireless communication interface 933 supports a certain cellular communication scheme such as LTE or LTE-Advanced, and executes wireless communication. Typically, the wireless communication interface 933 can include BB processors 934, RF circuits 935, and the like. The BB processors 934 may each perform, for example, encoding/decoding, modulation/demodulation, and multiplexing/demultiplexing, and execute various signal processes for wireless communication. On the other hand, the RF circuits 935 may each include a mixer, a filter, an amplifier, and the like, and each transmit and receive radio signals via the antenna 937. The wireless communication interface 933 may be a one chip module onto which the BB processors 934 and the RF circuits 935 are integrated. As depicted in FIG. 29, the wireless communication interface 933 may include a plurality of BB processors 934 and a plurality of RF circuits 935. While

FIG. 29 depicts an example in which the wireless communication interface 933 includes the plurality of BB processors 934 and the plurality of RF circuits 935, the wireless communication interface 933 may include a single BB processor 934 or a single RF circuit 935.

Furthermore, the wireless communication interface 933 may support the other types of wireless communication scheme such as the near field wireless communication scheme, the close proximity wireless communication scheme, or the wireless LAN scheme in addition to the cellular communication scheme; in that case, the wireless communication interface 933 may include the BB processor 934 and the RF circuit 935 for each wireless communication scheme.

Each of the antenna switches 936 changes over a connection destination of the antenna 937 over among a plurality of circuits (for example, circuits for different wireless communication schemes) included in the wireless communication interface 933.

Each antenna 937 has one or a plurality of antenna elements (for example, a plurality of antenna elements that configure a MIMO antenna), and is used to transmit and receive radio signals from and by the wireless communication interface 933. As depicted in FIG. 29, the car navigation system 920 may have the plurality of antennas 937. While FIG. 29 depicts an example in which the car navigation system 920 has the plurality of antennas 937, the car navigation system 920 may have a single antenna 937.

Furthermore, the car navigation system 920 may be configured with the antenna 937 for each wireless communication scheme. In that case, the antenna switches 936 may be omitted from the configuration of the car navigation system 920.

The battery 938 supplies electric power to blocks in the car navigation system 920 depicted in FIG. 29 via a power feeding line partially indicated by broken lines in FIG. 29. Moreover, the battery 938 stores electric power fed from the vehicle side.

In the car navigation system 920 depicted in FIG. 29, one or more constituent elements (communication control section 241 and/or measurement report processing section 243) included in the terminal apparatus 200 described with reference to FIGS. 6 and the like may be implemented in the wireless communication interface 933. Alternatively, at least part of these constituent elements may be implemented in the processor 921. As an example, the car navigation system 920 may mount a module including part of (for example, BB processor 934) or all of the wireless communication interface 933 and/or the processor 921, and the one or more constituent elements may be implemented in the module. In this case, the module may store a program for causing a processor to function as the one or more constituent elements (in other words, program for causing the processor to execute operations of the one or more constituent elements), and execute the program. As another example, a program for causing a processor to function as the one or more constituent elements may be installed in the car navigation system 920, and the wireless communication interface 933 (for example, the BB processor 934) and/or the processor 921 may execute the program. As described above, the car navigation system 920 or the module may be provided as an apparatus configured with the one or more constituent elements, and the program for causing the processor to function as the one or more constituent elements may be provided. In addition, a readable recording medium recording the program may be provided.

Furthermore, in the car navigation system 920 depicted in FIG. 29, the wireless communication section 220 described with reference to FIG. 6, for example, may be implemented in the wireless communication interface 933 (for example, RF circuit 935). Moreover, the antenna section 210 may be implemented in the antenna 937. Furthermore, the storage section 230 may be implemented in the memory 922.

Moreover, the technique according to the present disclosure may be realized as a vehicle-mounted system (or vehicle) 940 that includes one or more blocks in the car navigation system 920 described above, the vehicle-mounted network 941, and a vehicle-side module 942. The vehicle-side module 942 generates vehicle-side data such as a vehicle speed, an engine speed, failure information, and the like, and outputs the generated data to the vehicle-mounted network 941.

<< 5. Conclusion>>

One embodiment of the present disclosure has been described so far in detail with reference to FIGS. 1 to 29. As described above, the system 1 according to the present embodiment can hold communication using a mixture of a plurality of communication parameter sets in a unit resource. In such a system 1, the base station 100 sets the second communication parameter set, which is used by the terminal apparatus 200 to perform the measurement report process, to the terminal apparatus 200. The terminal apparatus 200 reports, to the terminal apparatus 200, the information indicating the measurement result of measuring the signal received from the base station 100 on the basis of the second communication parameter set which is set by the base station 100. In this way, the base station 100 can set the second communication parameter set used to perform the measurement report process, and the terminal apparatus 200 can perform the measurement report process on the basis of the setting. Setting the second communication parameter set and performing the measurement report process based on the setting of the second communication parameter set make it possible to appropriately perform the measurement report process in the communication system that holds communication using a mixture of a plurality of communication parameter sets.

While the preferred embodiment of the present disclosure has been described in detail with reference to the accompanying drawings, the technical scope of the present disclosure is not limited to these examples. It is obvious that persons having ordinary skill in the art to which the present disclosure pertains can conceive of various change examples or modification examples within the scope of the technical concept set forth in the claims, and it is understood that these examples naturally belong to the technical scope of the present disclosure.

For example, while the measurement report process based on the downlink signal reference signal has been mainly described above, the present technique is also applicable to a measurement report process based on an uplink reference signal. In that case, the reference signal may be, for example, an SRS (Sounding Reference Signal).

Moreover, the advantages described in the present specification are given as an example only, and the advantages are not limited to those described in the present specification. In other words, the technique according to the present disclosure can exhibit advantages obvious to persons having ordinary skill in the art from the present specification in addition to or as an alternative to the advantages described above.

[Reference Signs List]

| | |
|---|---|
| 1 | System |
| 100 | Base station |
| 102 | Component |
| 110 | Antenna section |
| 120 | Wireless communication section |
| 130 | Network communication section |
| 140 | Storage section |
| 150 | Processing section |
| 151 | Communication control section |
| 153 | Measurement report processing section |
| 200 | Terminal apparatus |
| 210 | Antenna section |
| 220 | Wireless communication section |
| 230 | Storage section |
| 240 | Processing section |
| 241 | Communication control section |
| 243 | Measurement report processing section |

## Claims

**1.** A communication apparatus (200) comprising:
a measurement report processing section (243) configured to notify (S100) a base station (200), the base station (100) being able to hold communication using a plurality of first communication parameter sets in a unit resource, the unit resource including a predetermined number of frequency resources and a predetermined number of time resources, of trigger information to carry out a measurement report process, and to report (S108), to the base station (100), information indicating a measurement result of measuring a signal received from the base station (100) on a basis of a second communication parameter set used to perform the measurement report process, wherein each of the first and second communication parameter sets includes a waveform and a physical layer parameter.

**2.** The communication apparatus (200) according to claim 1, wherein
the measurement report processing section (200) measures the one received signal on a basis of each of a plurality of the set second communication parameter sets.

**3.** The communication apparatus (200) according to claim 2, wherein
at least one of the second communication parameter sets differs from the first communication parameter sets used for transmitting the signal.

**4.** The communication apparatus (200) according to any of the preceding claims, wherein
the second communication parameter set includes at least one or more parameters out of the waveform, a frequency range, a CP (Cyclic Prefix) length, a slot length, or a target BLER (Block Error Rate).

**5.** The communication apparatus (200) according to any of the preceding claims, wherein
the information indicating the measurement result includes information indicating a waveform used to perform the measurement report process.

**6.** The communication apparatus (200) according to any of the preceding claims, wherein
the trigger information is at least any of a request to carry out the measurement report process; a signal receiving response, ACK/NACK, from the base station (100); or the information indicating the measurement result.

**7.** A base station (100) comprising:

a communication control section (151) configured to communicate with a communication apparatus (200) using a plurality of first communication parameter sets in a unit resource, the unit resource including a predetermined number of frequency resources and a predetermined number of time resources; and
a measurement report processing section (153) configured to set a second communication parameter set, the second communication parameter set being used by the communication apparatus (200) to perform a measurement report process, to the communication apparatus (200) on a basis of a notification (S100) of trigger information to carry out the measurement report process that is received from the communication apparatus (200); wherein each of the first and second communication parameter sets includes a waveform and a physical layer parameter.

**8.** The base station (100) according to claim 7, wherein
the communication control section (241) is configured to control the first communication parameter sets on a basis of information indicating a result of measurement by the communication apparatus (200) based on the second communication parameter set.

**9.** The base station (100) according to claim 7 or 8, wherein
the measurement report processing section (143) is configured to control the second communication parameter set on a basis of information indicating a result of measurement by the communication apparatus (200) based on the second communication parameter set.

**10.** The base station (100) according to of claims 7 to 9, wherein
the measurement report processing section (143) is configured to set, to the communication apparatus (200), a resource used to report information indicating a result of measurement by the communication apparatus (200) .

**11.** A method executed by a processor (240) of a communication apparatus, the method comprising:
notifying (S100) a base station (100), the base station (100) being able to hold communication using a plurality of first communication parameter sets in a unit resource, the unit resource including a predetermined number of frequency resources and a predetermined number of time resources, of trigger information to carry out a measurement report process, and reporting (S108), to the base station (100), information indicating a measurement result of measuring a signal received from the base station (100) on a basis of a second communication parameter set used to perform the measurement report process, wherein each of the first and second communication parameter sets includes a waveform and a physical layer parameter.

**12.** A method executed by a processor (150) of a base station, the method comprising:

communicating with a communication apparatus (200) using a plurality of first communication parameter sets in a unit resource, the unit resource including a predetermined number of frequency resources and a predetermined number of time resources; and
setting a second communication parameter set, the second communication parameter set being used by the communication apparatus (200) to perform a measurement report process, to the communication apparatus (200) on a basis of a notification (S100) of trigger information to carry out the measurement report process that is received from the communication apparatus (200);
wherein each of the first and second communication parameter sets includes a waveform and a physical layer parameter.

**13.** A recording medium recording a program causing a processing section (240) of a communication apparatus to function as:
a measurement report processing section (243) configured to notify a base station (100), the base station (100) being able to hold communication using a plurality of first communication parameter sets in a unit resource, the unit resource including a predetermined number of frequency resources and a predetermined number of time resources, of trigger information to carry out a measurement report process, and to report (S108), to the base station (100), information indicating a measurement result of measuring a signal received from the base station (100) on a basis of a second communication parameter set used to perform the measurement report process, wherein each of the first and second communication parameter sets includes a waveform and a physical layer parameter.

**14.** A recording medium recording a program causing a processing section (150) of a base station to function as:

a communication control section (151) configured to communicate with a communication apparatus (200) using a plurality of first communication parameter sets in a unit resource, the unit resource including a predetermined number of frequency resources and a predetermined number of time resources; and
a measurement report processing section (153) configured to set a second communication parameter set, the second communication parameter set being used by the communication apparatus (200) to perform a measurement report process, to the communication apparatus (200) on a basis of a notification (S100) of trigger information to carry out the measurement report process that is received from the communication apparatus (200);
wherein each of the first and second communication parameter sets includes a waveform and a physical layer parameter.

## Patentansprüche

**1.** Kommunikationsvorrichtung (200), umfassend:
einen Messberichtverarbeitungsabschnitt (243), der so konfiguriert ist, dass er eine Basisstation (200) von Auslöseinformationen zum Durchführen eines Messberichtprozesses benachrichtigt (S100), wobei die Basisstation (100) zum Halten von Kommunikation unter Verwendung einer Mehrzahl von ersten Kommunikationsparametersätzen in einer Einheitsressource in der Lage ist, wobei die Einheitsressource eine vorbestimmte Anzahl von Frequenzressourcen und eine vorbestimmte Anzahl von Zeitressourcen umfasst, und der Basisstation (100) Informationen meldet (S108), die ein Messergebnis eines Messens eines von der Basisstation (100) empfangenen Signals auf der Basis eines zweiten Kommunikationsparametersatzes anzeigen, der zum Durchführen des Messberichtprozesses verwendet wird, wobei jeder der ersten und zweiten Kommunikationsparametersätze eine Wellenform und einen Bitübertragungsschichtparameter umfasst.

**2.** Kommunikationsvorrichtung (200) nach Anspruch 1, wobei
der Messberichtverarbeitungsabschnitt (200) das eine empfangene Signal auf der Basis eines jeden einer Mehrzahl der festgelegten zweiten Kommunikationsparametersätze misst.

**3.** Kommunikationsvorrichtung (200) nach Anspruch 2, wobei
mindestens einer der zweiten Kommunikationsparametersätze sich von den ersten Kommunikationsparametersätzen unterscheidet, die zum Senden des Signals verwendet werden.

**4.** Kommunikationsvorrichtung (200) nach einem der vorhergehenden Ansprüche, wobei
der zweite Kommunikationsparametersatz mindestens einen oder mehrere Parameter aus der Wellenform, einem Frequenzbereich, einer Länge eines zyklischen Präfixes (CP), einer Schlitzlänge oder eine Ziel-Blockfehlerrate (BLER) umfasst.

**5.** Kommunikationsvorrichtung (200) nach einem der vorhergehenden Ansprüche, wobei
die Informationen, die das Messergebnis anzeigen, Informationen umfassen, die eine Wellenform anzeigen, die zum Durchführen des Messberichtprozesses verwendet wird.

**6.** Kommunikationsvorrichtung (200) nach einem der vorhergehenden Ansprüche, wobei
es sich bei den Auslöseinformationen um mindestens eines von einer Anforderung zum Durchführen des Messberichtprozesses, einer Signalempfangsantwort, ACK/NACK, von der Basisstation (100) oder den Informationen handelt, die das Messergebnis anzeigen.

**7.** Basisstation (100), umfassend:

einen Kommunikationssteuerabschnitt (151), der zum Kommunizieren mit einer Kommunikationsvorrichtung (200) unter Verwendung einer Mehrzahl von ersten Kommunikationsparametersätzen in einer Einheitsressource konfiguriert ist, wobei die Einheitsressource eine vorbestimmte Anzahl von Frequenzressourcen und eine vorbestimmte Anzahl von Zeitressourcen umfasst; und
einen Messberichtverarbeitungsabschnitt (153), der zum Festlegen eines zweiten Kommunikationsparametersatzes für die Kommunikationsvorrichtung (200) auf der Basis einer Benachrichtigung (S100) von Auslöseinformationen zum Durchführen des Messberichtprozesses, die von der Kommunikationsvorrichtung (200) empfangen werden, konfiguriert ist, wobei der zweite Kommunikationsparametersatz durch die Kommunikationsvorrichtung (200) zum Durchführen eines Messberichtprozesses verwendet wird; wobei jeder der ersten und zweiten Kommunikationsparametersätze eine Wellenform und einen Bitübertragungsschichtparameter umfasst.

**8.** Basisstation (100) nach Anspruch 7, wobei
der Kommunikationssteuerabschnitt (241) so konfiguriert ist, dass er die ersten Kommunikationsparametersätze auf der Basis von Informationen steuert, die ein Ergebnis von Messung durch die Kommunikationsvorrichtung (200) basierend auf dem zweiten Kommunikationsparametersatz anzeigen.

**9.** Basisstation (100) nach Anspruch 7 oder 8, wobei
der Messberichtverarbeitungsabschnitt (143) so konfiguriert ist, dass er den zweiten Kommunikationsparametersatz auf der Basis von Informationen steuert, die ein Ergebnis von Messung durch die Kommunikationsvorrichtung (200) basierend auf dem zweiten Kommunikationsparametersatz anzeigen.

**10.** Basisstation (100) nach Anspruch 7 bis 9, wobei
der Messberichtsverarbeitungsabschnitt (143) so konfiguriert ist, dass er für die Kommunikationsvorrichtung (200) eine Ressource festlegt, die zum Melden von Informationen verwendet wird, die ein Ergebnis von Messung durch die Kommunikationsvorrichtung (200) anzeigen.

**11.** Verfahren, das von einem Prozessor (240) einer Kommunikationsvorrichtung ausgeführt wird, wobei das Verfahren umfasst:
Benachrichtigen (S100) einer Basisstation (100) von Auslöseinformationen zum Durchführen eines Messberichtprozesses, wobei die Basisstation (100) zum Halten von Kommunikation unter Verwendung einer Mehrzahl von ersten Kommunikationsparametersätzen in einer Einheitsressource in der Lage ist, wobei die Einheitsressource eine vorbestimmte Anzahl von Frequenzressourcen und eine vorbestimmte Anzahl von Zeitressourcen umfasst, und Melden (S108) von Informationen an die Basisstation (100), die ein Messergebnis eines Messens eines von der Basisstation (100) empfangenen Signals auf der Basis eines zweiten Kommunikationsparametersatzes anzeigen, der zum Durchführen des Messberichtprozesses verwendet wird, wobei jeder der ersten und zweiten Kommunikationsparametersätze eine Wellenform und einen Bitübertragungsschichtparameter umfasst.

**12.** Verfahren, das von einem Prozessor (150) einer Basisstation ausgeführt wird, wobei das Verfahren umfasst:

Kommunizieren mit einer Kommunikationsvorrichtung (200) unter Verwendung einer Mehrzahl von ersten Kommunikationsparametersätzen in einer Einheitsressource, wobei die Einheitsressource eine vorbestimmte Anzahl von Frequenzressourcen und eine vorbestimmte Anzahl von Zeitressourcen umfasst; und

Festlegen eines zweiten Kommunikationsparametersatzes für die Kommunikationsvorrichtung (200) auf der Basis einer Benachrichtigung (S100) von Auslöseinformationen zum Durchführen des Messberichtprozesses, die von der Kommunikationsvorrichtung (200) empfangen werden, wobei der zweite Kommunikationsparametersatz durch die Kommunikationsvorrichtung (200) zum Durchführen eines Messberichtprozesses verwendet wird;

wobei jeder der ersten und zweiten Kommunikationsparametersätze eine Wellenform und einen Bitübertragungsschichtparameter umfasst.

**13.** Aufzeichnungsmedium, das ein Programm aufzeichnet, das einen Verarbeitungsabschnitt (240) einer Kommunikationsvorrichtung veranlasst, zu fungieren als:
ein Messberichtverarbeitungsabschnitt (243), der so konfiguriert ist, dass er eine Basisstation (100) von Auslöseinformationen zum Durchführen eines Messberichtprozesses benachrichtigt, wobei die Basisstation (100) zum Halten von Kommunikation unter Verwendung einer Mehrzahl von ersten Kommunikationsparametersätzen in einer Einheitsressource in der Lage ist, wobei die Einheitsressource eine vorbestimmte Anzahl von Frequenzressourcen und eine vorbestimmte Anzahl von Zeitressourcen umfasst, und der Basisstation (100) Informationen meldet (S108), die ein Messergebnis eines Messens eines von der Basisstation (100) empfangenen Signals auf der Basis eines zweiten Kommunikationsparametersatzes anzeigen, der zum Durchführen des Messberichtprozesses verwendet wird, wobei jeder der ersten und zweiten Kommunikationsparametersätze eine Wellenform und einen Bitübertragungsschichtparameter umfasst.

**14.** Aufzeichnungsmedium, das ein Programm aufzeichnet, das einen Verarbeitungsabschnitt (150) einer Basisstation veranlasst, zu fungieren als:

ein Kommunikationssteuerabschnitt (151), der zum Kommunizieren mit einer Kommunikationsvorrichtung (200) unter Verwendung einer Mehrzahl von ersten Kommunikationsparametersätzen in einer Einheitsressource konfiguriert ist, wobei die Einheitsressource eine vorbestimmte Anzahl von Frequenzressourcen und eine vorbestimmte Anzahl von Zeitressourcen umfasst; und

ein Messberichtverarbeitungsabschnitt (153), der zum Festlegen eines zweiten Kommunikationsparametersatzes für die Kommunikationsvorrichtung (200) auf der Basis einer Benachrichtigung (S100) von Auslöseinformationen zum Durchführen des Messberichtprozesses, die von der Kommunikationsvorrichtung (200) empfangen werden, konfiguriert ist, wobei der zweite Kommunikationsparametersatz durch die Kommunikationsvorrichtung (200) zum Durchführen eines Messberichtprozesses verwendet wird;

wobei jeder der ersten und zweiten Kommunikationsparametersätze eine Wellenform und einen Bitübertragungsschichtparameter umfasst

## Revendications

**1.** Appareil de communication (200) comprenant :
une section de traitement de rapport de mesure (243) configurée pour notifier (S100) à une station de base (200), la station de base (100) étant apte à maintenir une communication en utilisant une pluralité de premiers ensembles de paramètres de communication dans une ressource unitaire, la ressource unitaire comprenant un nombre prédéterminé de ressources de fréquence et un nombre prédéterminé de ressources de temps, des informations de déclenchement afin d'effectuer un processus de rapport de mesure, et pour rapporter (S108), à la station de base (100), des informations indiquant un résultat de mesure de la mesure d'un signal reçu à partir de la station de base (100) sur la base d'un second ensemble de paramètres de communication utilisé pour réaliser le processus de rapport de mesure, dans lequel chacun des premier et second ensembles de paramètres de communication comprend une forme d'onde et un paramètre de couche physique.

**2.** Appareil de communication (200) selon la revendication 1, dans lequel
la section de traitement de rapport de mesure (200) mesure le signal reçu sur une base de chaque ensemble d'une pluralité de seconds ensembles de paramètres de communication établis.

**3.** Appareil de communication (200) selon la revendication 2, dans lequel
au moins un des seconds ensembles de paramètres de communication diffère des premiers ensembles de paramètres de communication utilisés pour émettre le signal.

**4.** Appareil de communication (200) selon l'une quelconque des revendications précédentes, dans lequel
le second ensemble de paramètres de communication comporte au moins un ou plusieurs paramètres hors de la forme d'onde, une gamme de fréquences, une longueur de préfixe cyclique (CP), une longueur de tranche ou un taux d'erreurs de bloc (BLER) cible.

**5.** Appareil de communication (200) selon l'une des revendications précédentes, dans lequel
les informations indiquant le résultat de mesure comprennent des informations indiquant une forme d'onde utilisée pour réaliser le processus de rapport de mesure.

**6.** Appareil de communication (200) selon l'une quelconque des revendications précédentes, dans lequel
les informations de déclenchement sont au moins n'importe laquelle d'une demande d'exécution du processus de rapport de mesure ; d'une réponse de réception de signal, ACK/NACK, de la station de base (100) ; ou des informations indiquant le résultat de mesure.

**7.** Station de base (100) comprenant :

une section de commande de communication (151) configurée pour communiquer avec un appareil de communication (200) en utilisant une pluralité de premiers ensembles de paramètres de communication dans une ressource unitaire, la ressource unitaire comprenant un nombre prédéterminé de ressources de fréquence et un nombre prédéterminé de ressources de temps ; et
une section de traitement de rapport de mesure (153) configurée pour établir un second ensemble de paramètres de communication, le second ensemble de paramètres de communication étant utilisé par l'appareil de communication (200) pour réaliser un processus de rapport de mesure, à l'appareil de communication (200) sur la base d'une notification (S100) d'informations de déclenchement afin d'effectuer le processus de rapport de mesure qui est reçu à partir du dispositif de communication (200) ; dans lequel chacun des premier et second ensembles de paramètres de communication comprend une forme d'onde et un paramètre de couche physique.

**8.** Station de base (100) selon la revendication 7, dans laquelle
la section de commande de communication (241) est configurée pour commander les premiers ensembles de paramètres de communication sur une base d'informations indiquant un résultat de mesure par l'appareil de communication (200) sur la base du second ensemble de paramètres de communication.

**9.** Station de base (100) selon la revendication 7 ou 8,
dans laquelle
la section de traitement de rapport de mesure (143) est configurée pour commander le second ensemble de paramètres de communication sur une base d'informations indiquant un résultat de mesure par l'appareil de communication (200) sur la base du second ensemble de paramètres de communication.

**10.** Station de base (100) selon les revendications 7 à 9, dans laquelle
la section de traitement de rapport de mesure (143) est configurée pour établir, relativement à l'appareil de communication (200), une ressource utilisée pour rapporter des informations indiquant un résultat de mesure par l'appareil de communication (200).

**11.** Procédé exécuté par un processeur (240) d'un appareil de communication, le procédé comprenant :
la notification (S100) à une station de base (100), la station de base (100) étant apte à maintenir une communication en utilisant une pluralité de premiers ensembles de paramètres de communication dans une ressource unitaire, la ressource unitaire comprenant un nombre prédéterminé de ressources de fréquence et un nombre prédéterminé de ressources de temps, d'informations de déclenchement afin d'effectuer un processus de rapport de mesure, et le rapport (S108), à la station de base (100), d'informations indiquant un résultat de mesure de la mesure d'un signal reçu à partir de la station de base (100) sur une base d'un second ensemble de paramètres de communication utilisé pour réaliser le processus de rapport de mesure, dans lequel chacun des premier et second paramètres de communication comporte une forme d'onde et un paramètre de couche physique.

**12.** Procédé exécuté par un processeur (150) d'une station de base, le procédé comprenant :

la communication avec un appareil de communication (200) en utilisant une pluralité de premiers ensembles de paramètres de communication dans une ressource unitaire, la ressource unitaire comprenant un nombre prédéterminé de ressources de fréquence et un nombre prédéterminé de ressources de temps ; et
l'établissement d'un second ensemble de paramètres de communication, le second ensemble de paramètres de communication étant utilisé par l'appareil de communication (200) pour réaliser un processus de rapport de mesure, relativement à l'appareil de communication (200) sur la base d'une notification (S100) d'informations de déclenchement pour effectuer le processus de rapport de mesure qui est reçu à partir de l'appareil de communication (200) ;
dans lequel chacun des premier et second ensembles de paramètres de communication comporte une forme d'onde et un paramètre de couche physique.

**13.** Support d'enregistrement enregistrant un programme qui amène une section de traitement (240) d'un appareil de communication à fonctionner en tant que :
section de traitement de rapport de mesure (243) configurée pour notifier à une station de base (100), la station de base (100) étant apte à maintenir une communication en utilisant une pluralité de premiers ensembles de paramètres de communication dans une ressource unitaire, la ressource unitaire comprenant un nombre prédéterminé de ressources de fréquence et un nombre prédéterminé de ressources de temps, des informations de déclenchement afin d'effectuer un processus de rapport de mesure, et pour rapporter (S108), à la station de base (100), des informations indiquant un résultat de mesure de la mesure d'un signal reçu à partir de la station de base (100) sur la base d'un second ensemble de paramètres de communication utilisé pour réaliser le processus de rapport de mesure, dans lequel chacun des premier et second ensembles de paramètres de communication comprend une forme d'onde et un paramètre de couche physique.

**14.** Support d'enregistrement enregistrant un programme qui amène une section de traitement (150) d'une station de base à fonctionner en tant que :

section de commande de communication (151) configurée pour communiquer avec un appareil de communication (200) en utilisant une pluralité de premiers ensembles de paramètres de communication dans une ressource unitaire, la ressource unitaire comprenant un nombre prédéterminé de ressources de fréquence et un nombre prédéterminé de ressources de temps ; et
section de traitement de rapport de mesure (153) configurée pour établir un second ensemble de paramètres de communication, le second ensemble de paramètres de communication étant utilisé par l'appareil de communication (200) pour réaliser un processus de rapport de mesure, relativement à l'appareil de communication (200) sur la base d'une notification (S100) d'informations de déclenchement pour effectuer le processus de rapport de mesure qui est reçu à partir de l'appareil de communication (200) ;
dans lequel chacun des premier et second ensembles de paramètres de communication comporte une forme d'onde et un paramètre de couche physique.

FIG. 1

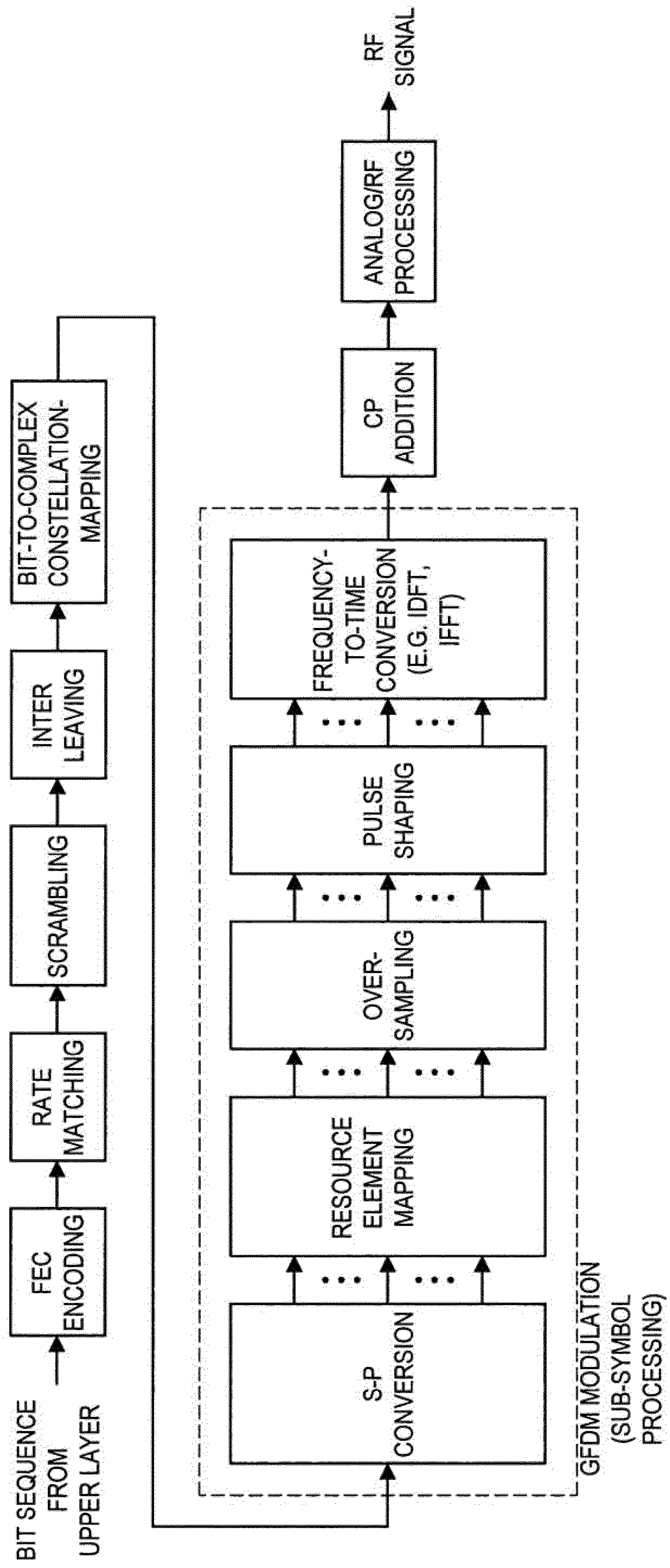
BIT SEQUENCE FROM UPPER LAYER
FEC ENCODING
RATE MATCHING
SCRAMBLING
INTER LEAVING
BIT-TO-COMPLEX CONSTELLATION-MAPPING
S-P CONVERSION
RESOURCE ELEMENT MAPPING
OVER-SAMPLING
PULSE SHAPING
FREQUENCY-TO-TIME CONVERSION (E.G. IDFT, IFFT)
GFDM MODULATION (SUB-SYMBOL PROCESSING)
CP ADDITION
ANALOG/RF PROCESSING
RF SIGNAL

FIG. 2

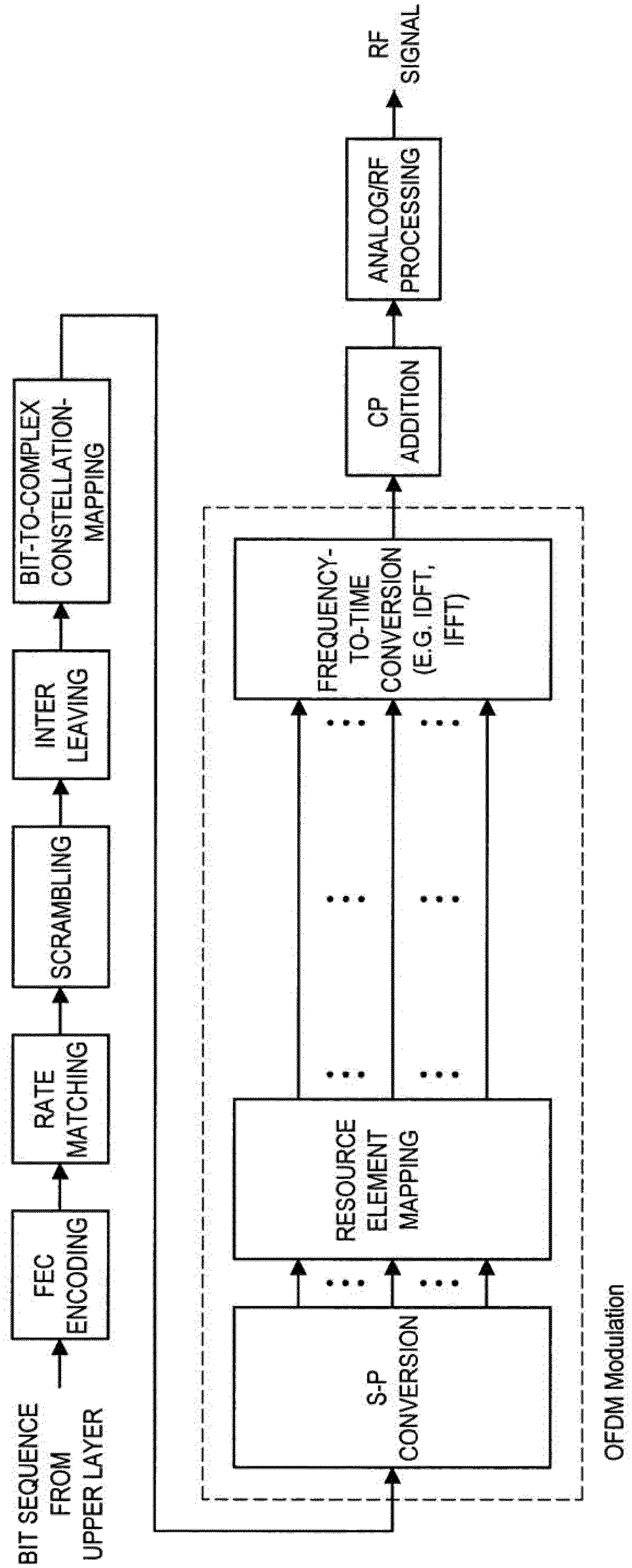
BIT SEQUENCE FROM UPPER LAYER
FEC ENCODING
RATE MATCHING
SCRAMBLING
INTER LEAVING
BIT-TO-COMPLEX CONSTELLATION-MAPPING
S-P CONVERSION
RESOURCE ELEMENT MAPPING
FREQUENCY-TO-TIME CONVERSION (E.G. IDFT, IFFT)
OFDM Modulation
CP ADDITION
ANALOG/RF PROCESSING
RF SIGNAL

FIG. 3

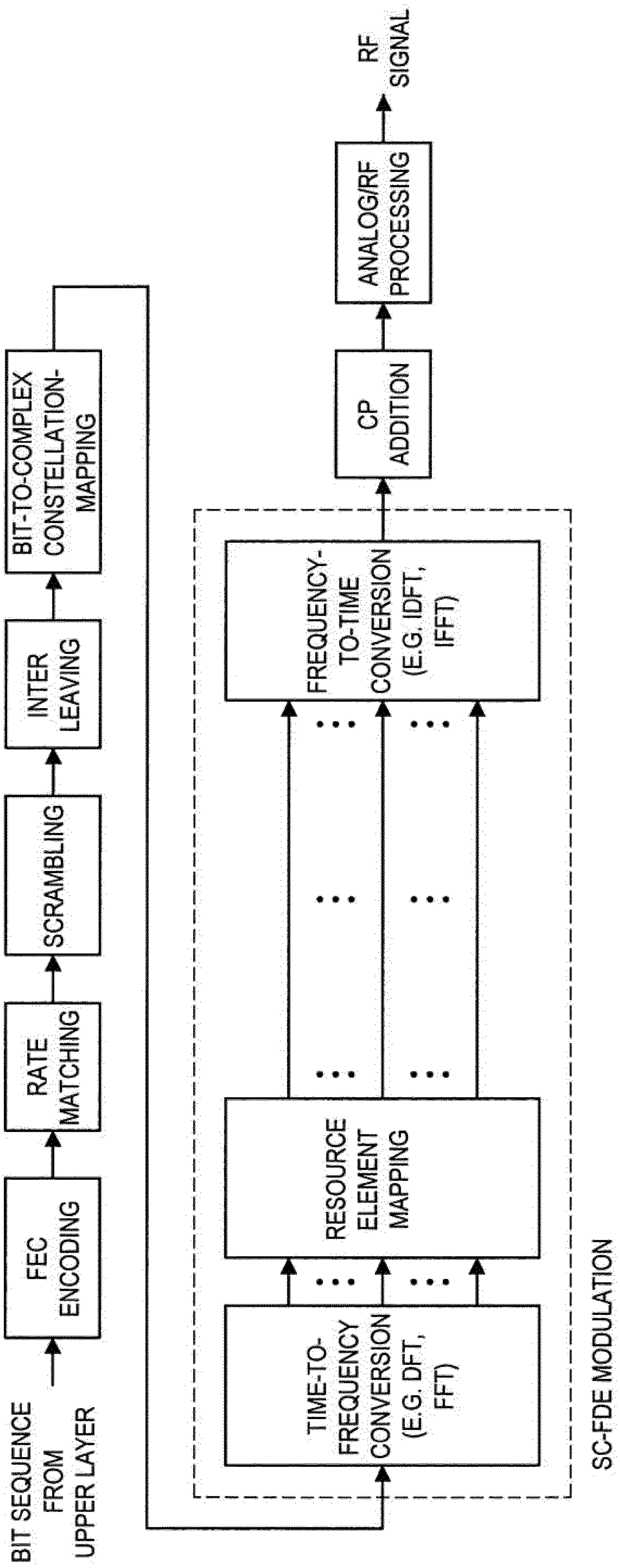

BIT SEQUENCE FROM UPPER LAYER
FEC ENCODING
RATE MATCHING
SCRAMBLING
INTER LEAVING
BIT-TO-COMPLEX CONSTELLATION-MAPPING
TIME-TO-FREQUENCY CONVERSION (E.G. DFT, FFT)
RESOURCE ELEMENT MAPPING
FREQUENCY-TO-TIME CONVERSION (E.G. IDFT, IFFT)
SC-FDE MODULATION
CP ADDITION
ANALOG/RF PROCESSING
RF SIGNAL

FIG.4

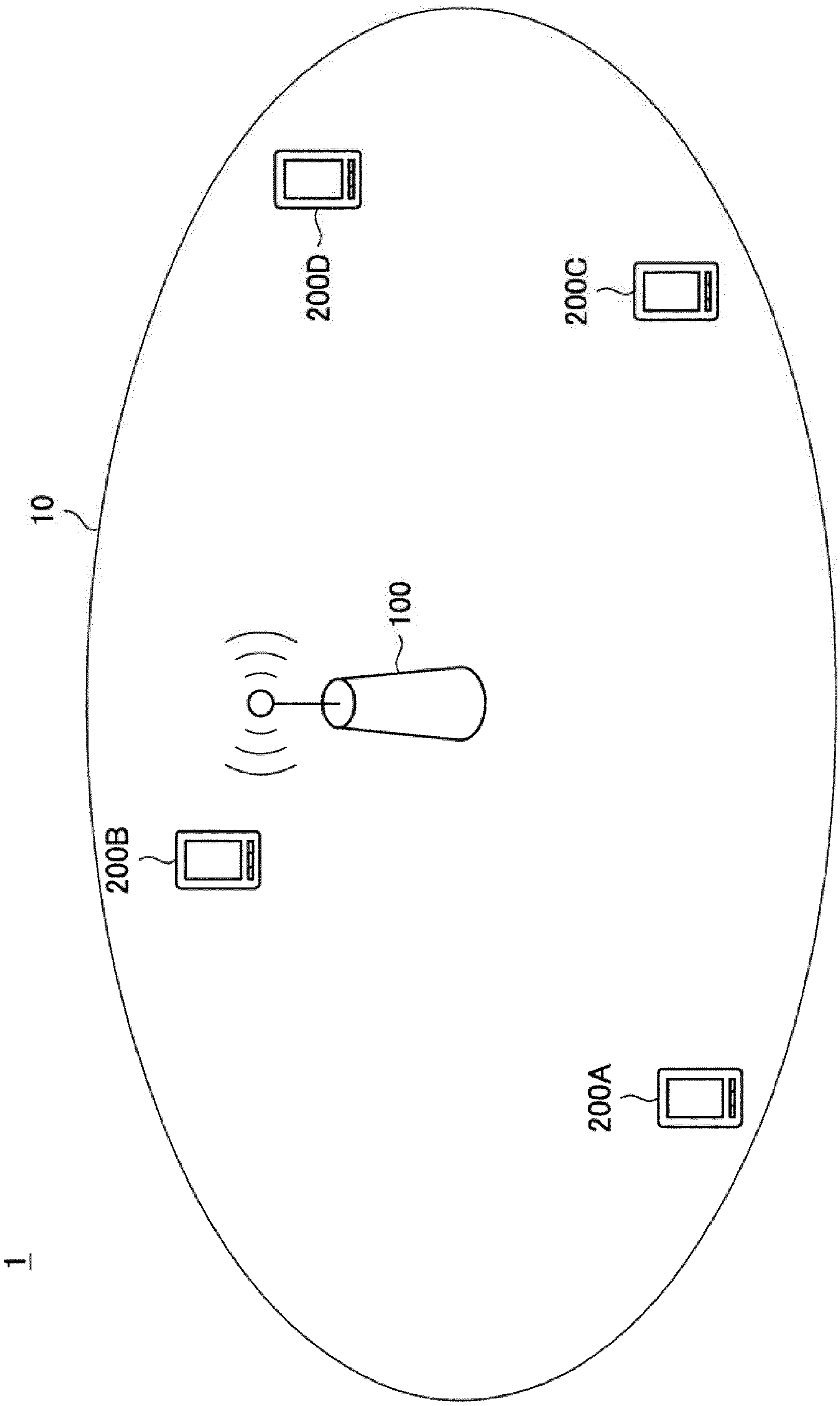

FIG.5

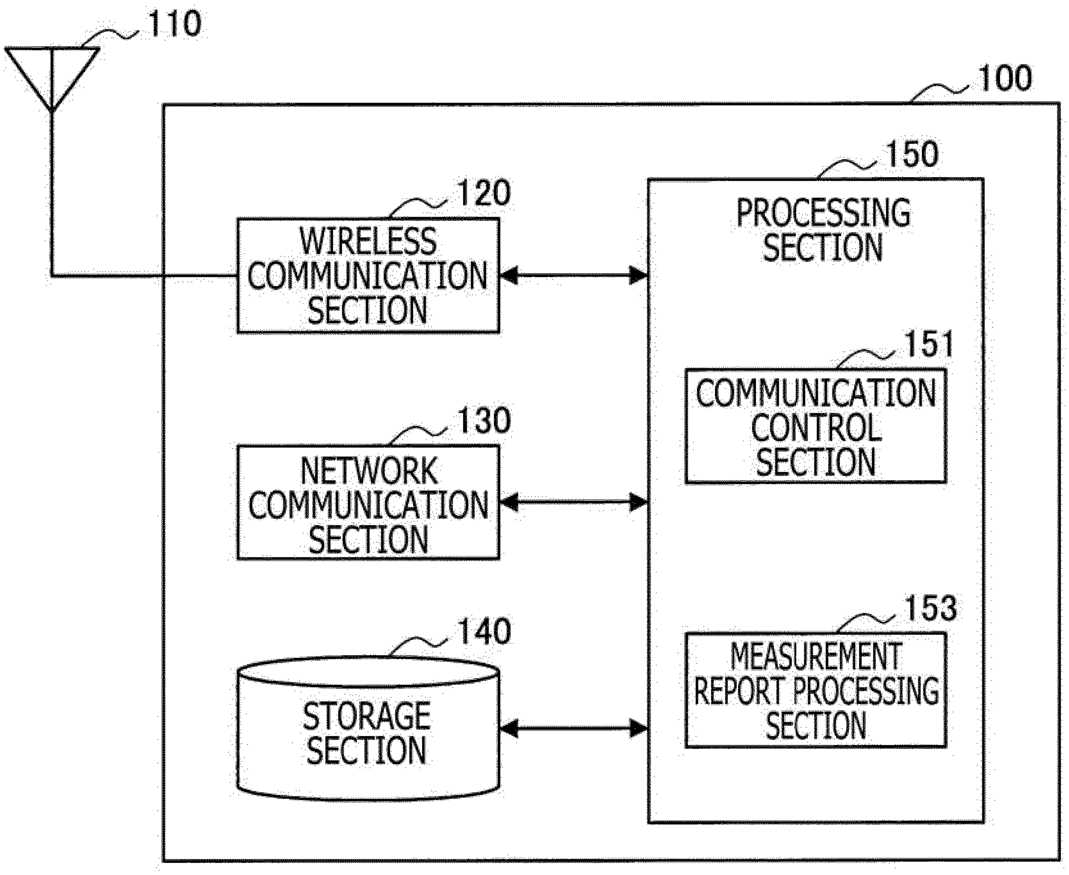
110
100
150
PROCESSING SECTION
120
WIRELESS COMMUNICATION SECTION
151
COMMUNICATION CONTROL SECTION
130
NETWORK COMMUNICATION SECTION
140
153
MEASUREMENT REPORT PROCESSING SECTION
STORAGE SECTION

FIG.6

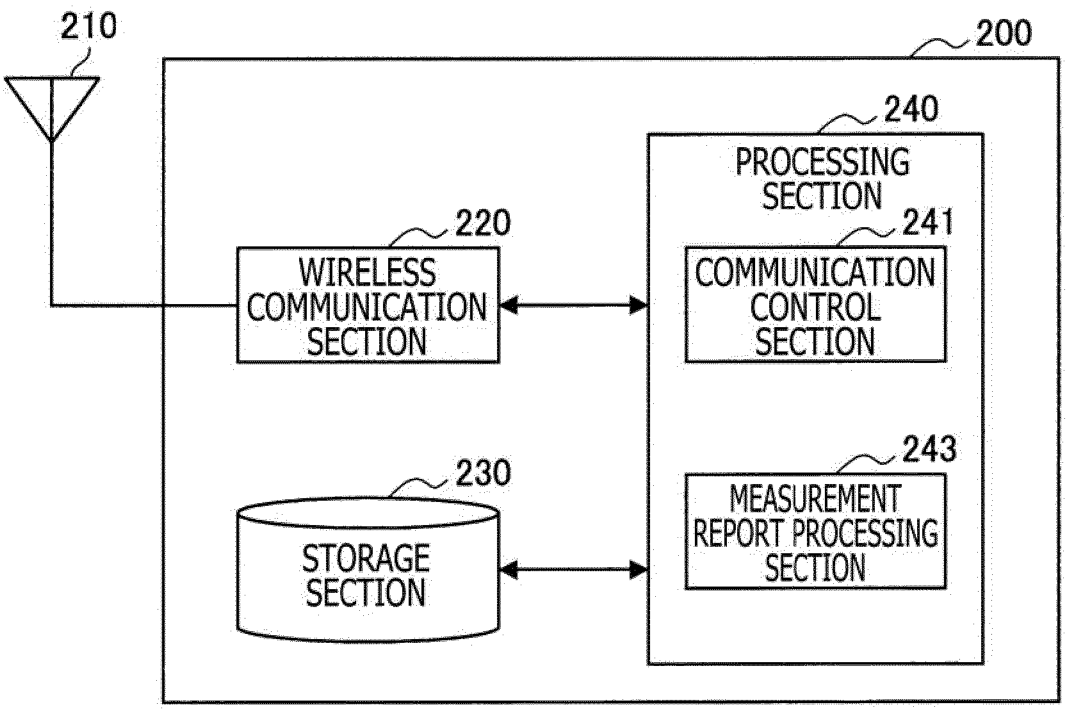
210
200
240
PROCESSING SECTION
220
241
WIRELESS COMMUNICATION SECTION
COMMUNICATION CONTROL SECTION
230
243
MEASUREMENT REPORT PROCESSING SECTION
STORAGE SECTION

FIG.7

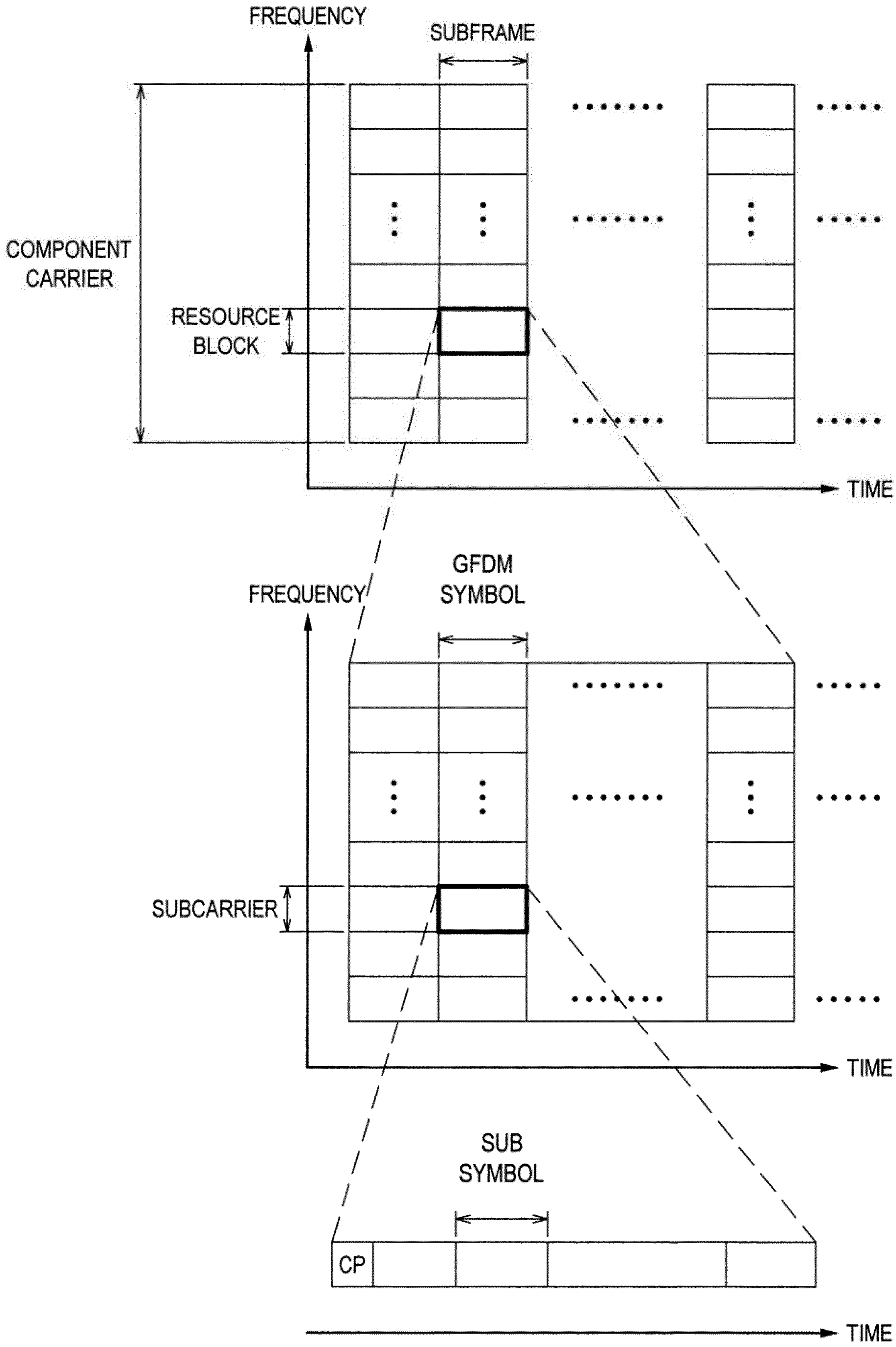
FREQUENCY
SUBFRAME
COMPONENT CARRIER
RESOURCE BLOCK
TIME
FREQUENCY
GFDM SYMBOL
SUBCARRIER
TIME
SUB SYMBOL
CP
TIME

FIG. 8

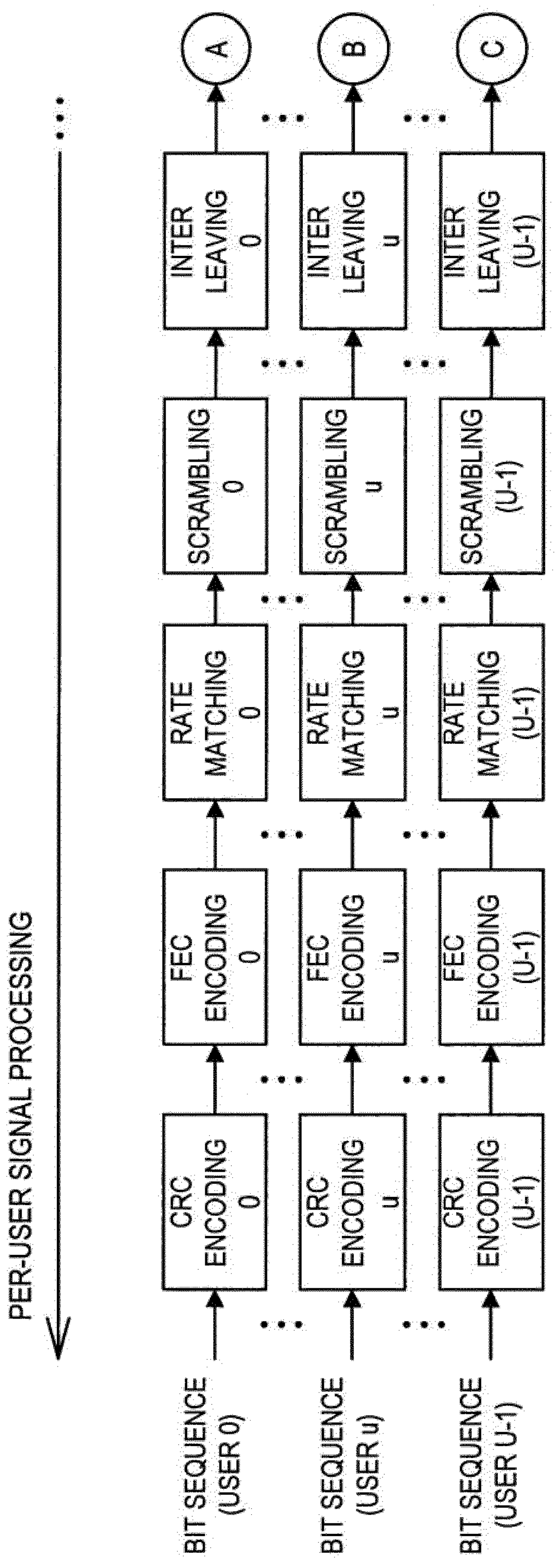
PER-USER SIGNAL PROCESSING
BIT SEQUENCE (USER 0)
BIT SEQUENCE (USER u)
BIT SEQUENCE (USER U-1)
CRC ENCODING 0
CRC ENCODING u
CRC ENCODING (U-1)
FEC ENCODING 0
FEC ENCODING u
FEC ENCODING (U-1)
RATE MATCHING 0
RATE MATCHING u
RATE MATCHING (U-1)
SCRAMBLING 0
SCRAMBLING u
SCRAMBLING (U-1)
INTER LEAVING 0
INTER LEAVING u
INTER LEAVING (U-1)
A
B
C

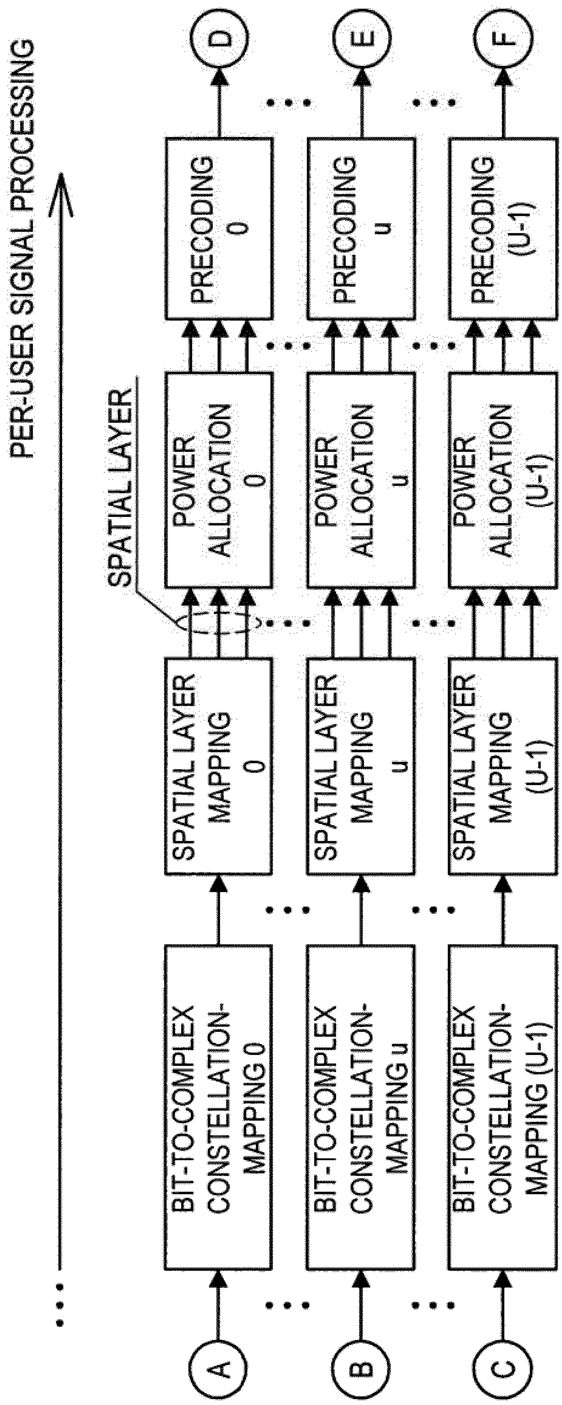

PER-USER SIGNAL PROCESSING
SPATIAL LAYER
BIT-TO-COMPLEX CONSTELLATION-MAPPING 0
BIT-TO-COMPLEX CONSTELLATION-MAPPING u
BIT-TO-COMPLEX CONSTELLATION-MAPPING (U-1)
SPATIAL LAYER MAPPING 0
SPATIAL LAYER MAPPING u
SPATIAL LAYER MAPPING (U-1)
POWER ALLOCATION 0
POWER ALLOCATION u
POWER ALLOCATION (U-1)
PRECODING 0
PRECODING u
PRECODING (U-1)
A
B
C
D
E
F


FIG.9

FIG.10

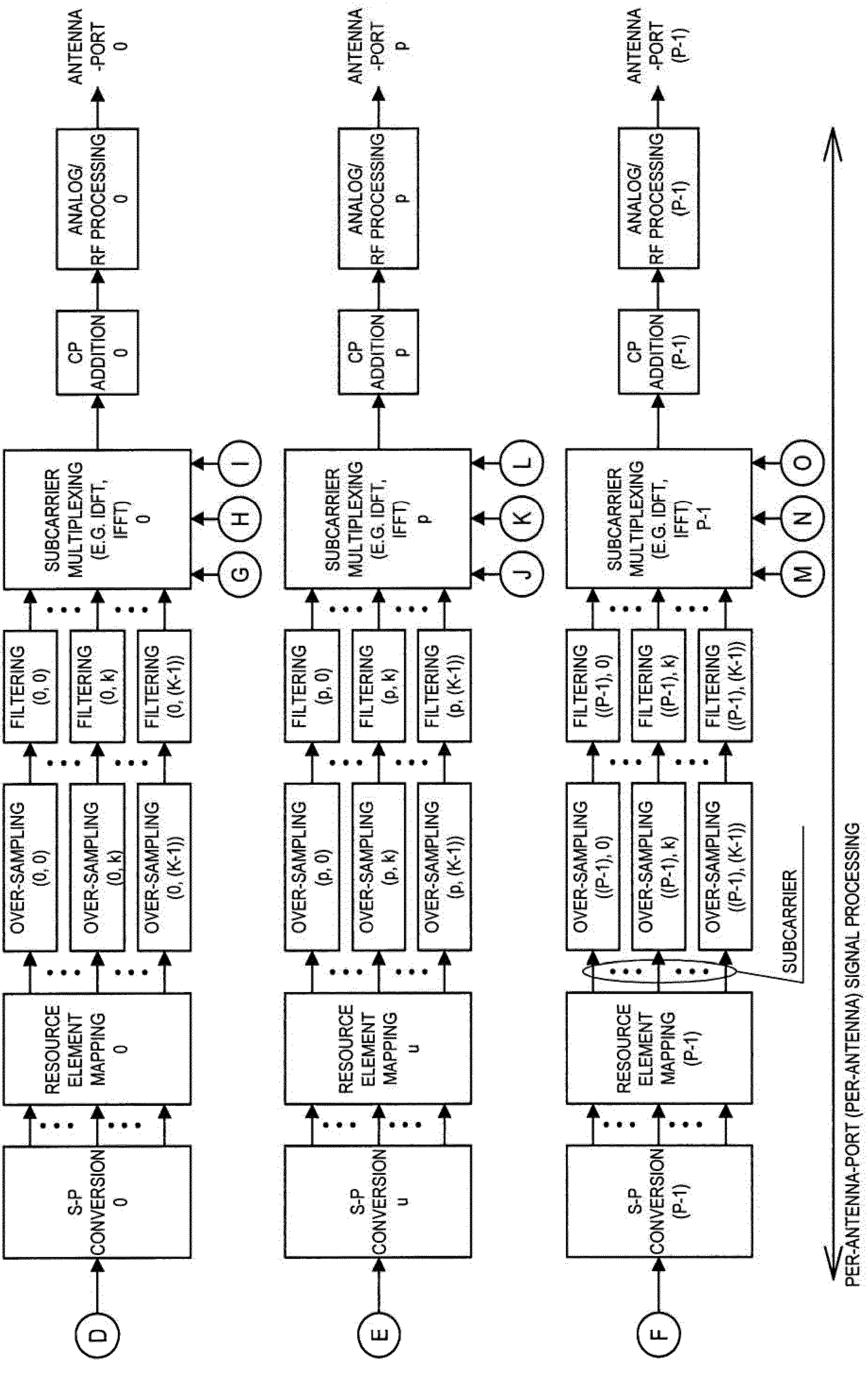
D
S-P CONVERSION 0
RESOURCE ELEMENT MAPPING 0
OVER-SAMPLING (0, 0)
OVER-SAMPLING (0, k)
OVER-SAMPLING (0, (K-1))
FILTERING (0, 0)
FILTERING (0, k)
FILTERING (0, (K-1))
SUBCARRIER MULTIPLEXING (E.G. IDFT, IFFT) 0
G
H
I
CP ADDITION 0
ANALOG/ RF PROCESSING 0
ANTENNA -PORT 0
E
S-P CONVERSION u
RESOURCE ELEMENT MAPPING u
OVER-SAMPLING (p, 0)
OVER-SAMPLING (p, k)
OVER-SAMPLING (p, (K-1))
FILTERING (p, 0)
FILTERING (p, k)
FILTERING (p, (K-1))
SUBCARRIER MULTIPLEXING (E.G. IDFT, IFFT) p
J
K
L
CP ADDITION p
ANALOG/ RF PROCESSING p
ANTENNA -PORT p
F
S-P CONVERSION (P-1)
RESOURCE ELEMENT MAPPING (P-1)
OVER-SAMPLING ((P-1), 0)
OVER-SAMPLING ((P-1), k)
OVER-SAMPLING ((P-1), (K-1))
FILTERING ((P-1), 0)
FILTERING ((P-1), k)
FILTERING ((P-1), (K-1))
SUBCARRIER MULTIPLEXING (E.G. IDFT, IFFT) P-1
M
N
O
CP ADDITION (P-1)
ANALOG/ RF PROCESSING (P-1)
ANTENNA -PORT (P-1)
SUBCARRIER
PER-ANTENNA-PORT (PER-ANTENNA) SIGNAL PROCESSING

FIG. 11

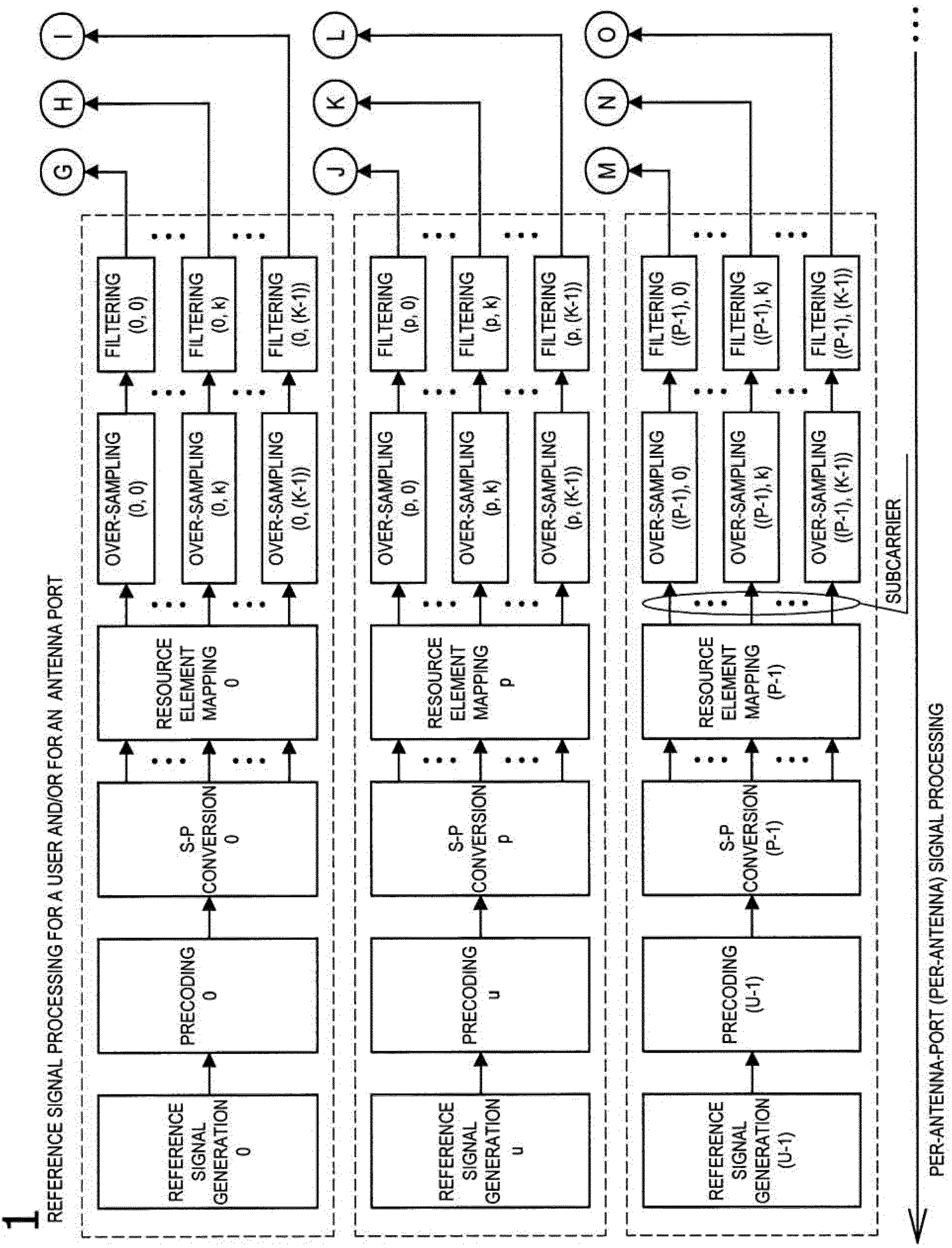
REFERENCE SIGNAL PROCESSING FOR A USER AND/OR FOR AN ANTENNA PORT
REFERENCE SIGNAL GENERATION 0
PRECODING 0
S-P CONVERSION 0
RESOURCE ELEMENT MAPPING 0
OVER-SAMPLING (0, 0)
OVER-SAMPLING (0, k)
OVER-SAMPLING (0, (K-1))
FILTERING (0, 0)
FILTERING (0, k)
FILTERING (0, (K-1))
G
H
I
REFERENCE SIGNAL GENERATION u
PRECODING u
S-P CONVERSION p
RESOURCE ELEMENT MAPPING p
OVER-SAMPLING (p, 0)
OVER-SAMPLING (p, k)
OVER-SAMPLING (p, (K-1))
FILTERING (p, 0)
FILTERING (p, k)
FILTERING (p, (K-1))
J
K
L
REFERENCE SIGNAL GENERATION (U-1)
PRECODING (U-1)
S-P CONVERSION (P-1)
RESOURCE ELEMENT MAPPING (P-1)
OVER-SAMPLING ((P-1), 0)
OVER-SAMPLING ((P-1), k)
OVER-SAMPLING ((P-1), (K-1))
FILTERING ((P-1), 0)
FILTERING ((P-1), k)
FILTERING ((P-1), (K-1))
M
N
O
SUBCARRIER
PER-ANTENNA-PORT (PER-ANTENNA) SIGNAL PROCESSING

FIG. 12

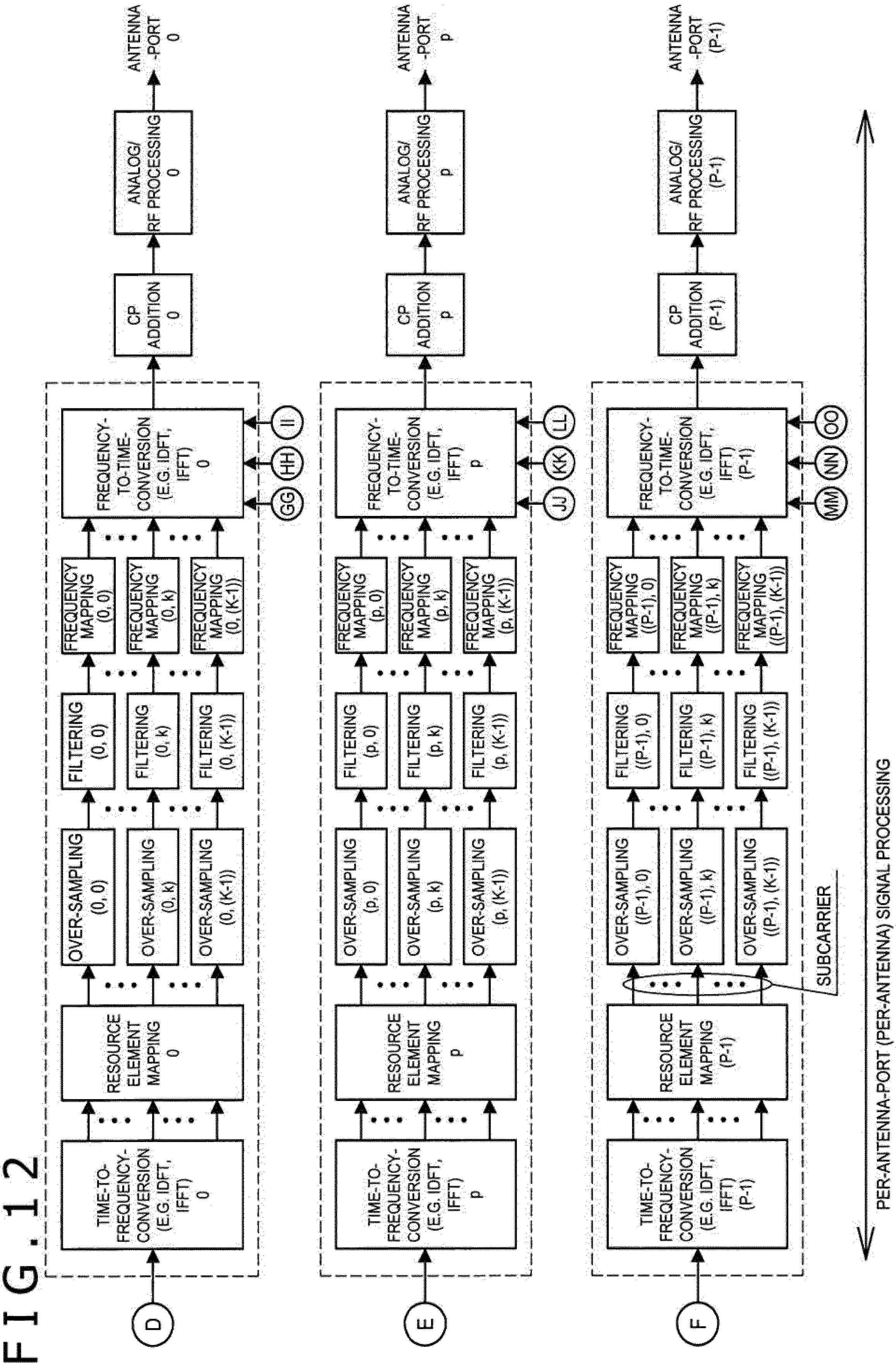
D
TIME-TO-FREQUENCY-CONVERSION (E.G. IDFT, IFFT) 0
RESOURCE ELEMENT MAPPING 0
OVER-SAMPLING (0, 0)
OVER-SAMPLING (0, k)
OVER-SAMPLING (0, (K-1))
FILTERING (0, 0)
FILTERING (0, k)
FILTERING (0, (K-1))
FREQUENCY MAPPING (0, 0)
FREQUENCY MAPPING (0, k)
FREQUENCY MAPPING (0, (K-1))
FREQUENCY-TO-TIME-CONVERSION (E.G. IDFT, IFFT) 0
GG
HH
II
CP ADDITION 0
ANALOG/ RF PROCESSING 0
ANTENNA -PORT 0
E
TIME-TO-FREQUENCY-CONVERSION (E.G. IDFT, IFFT) p
RESOURCE ELEMENT MAPPING p
OVER-SAMPLING (p, 0)
OVER-SAMPLING (p, k)
OVER-SAMPLING (p, (K-1))
FILTERING (p, 0)
FILTERING (p, k)
FILTERING (p, (K-1))
FREQUENCY MAPPING (p, 0)
FREQUENCY MAPPING (p, k)
FREQUENCY MAPPING (p, (K-1))
FREQUENCY-TO-TIME-CONVERSION (E.G. IDFT, IFFT) p
JJ
KK
LL
CP ADDITION p
ANALOG/ RF PROCESSING p
ANTENNA -PORT p
F
TIME-TO-FREQUENCY-CONVERSION (E.G. IDFT, IFFT) (P-1)
RESOURCE ELEMENT MAPPING (P-1)
SUBCARRIER
OVER-SAMPLING ((P-1), 0)
OVER-SAMPLING ((P-1), k)
OVER-SAMPLING ((P-1), (K-1))
FILTERING ((P-1), 0)
FILTERING ((P-1), k)
FILTERING ((P-1), (K-1))
FREQUENCY MAPPING ((P-1), 0)
FREQUENCY MAPPING ((P-1), k)
FREQUENCY MAPPING ((P-1), (K-1))
FREQUENCY-TO-TIME-CONVERSION (E.G. IDFT, IFFT) (P-1)
MM
NN
OO
CP ADDITION (P-1)
ANALOG/ RF PROCESSING (P-1)
ANTENNA -PORT (P-1)
PER-ANTENNA-PORT (PER-ANTENNA) SIGNAL PROCESSING

FIG.13

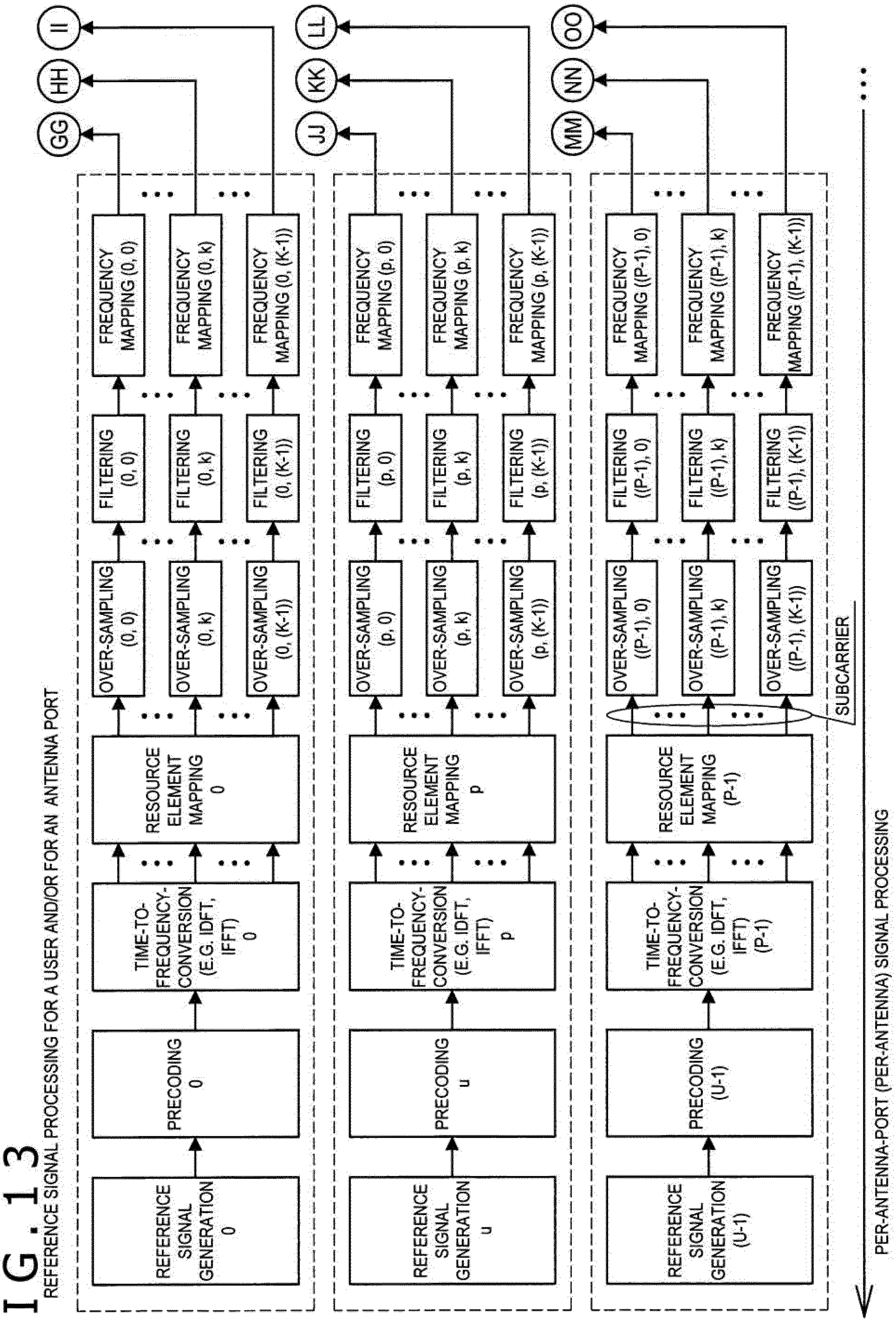
REFERENCE SIGNAL PROCESSING FOR A USER AND/OR FOR AN ANTENNA PORT
REFERENCE SIGNAL GENERATION 0
PRECODING 0
TIME-TO-FREQUENCY-CONVERSION (E.G. IDFT, IFFT) 0
RESOURCE ELEMENT MAPPING 0
OVER-SAMPLING (0, 0)
OVER-SAMPLING (0, k)
OVER-SAMPLING (0, (K-1))
FILTERING (0, 0)
FILTERING (0, k)
FILTERING (0, (K-1))
FREQUENCY MAPPING (0, 0)
FREQUENCY MAPPING (0, k)
FREQUENCY MAPPING (0, (K-1))
GG
HH
II
REFERENCE SIGNAL GENERATION u
PRECODING u
TIME-TO-FREQUENCY-CONVERSION (E.G. IDFT, IFFT) p
RESOURCE ELEMENT MAPPING p
OVER-SAMPLING (p, 0)
OVER-SAMPLING (p, k)
OVER-SAMPLING (p, (K-1))
FILTERING (p, 0)
FILTERING (p, k)
FILTERING (p, (K-1))
FREQUENCY MAPPING (p, 0)
FREQUENCY MAPPING (p, k)
FREQUENCY MAPPING (p, (K-1))
JJ
KK
LL
REFERENCE SIGNAL GENERATION (U-1)
PRECODING (U-1)
TIME-TO-FREQUENCY-CONVERSION (E.G. IDFT, IFFT) (P-1)
RESOURCE ELEMENT MAPPING (P-1)
OVER-SAMPLING ((P-1), 0)
OVER-SAMPLING ((P-1), k)
OVER-SAMPLING ((P-1), (K-1))
FILTERING ((P-1), 0)
FILTERING ((P-1), k)
FILTERING ((P-1), (K-1))
FREQUENCY MAPPING ((P-1), 0)
FREQUENCY MAPPING ((P-1), k)
FREQUENCY MAPPING ((P-1), (K-1))
MM
NN
OO
SUBCARRIER
PER-ANTENNA-PORT (PER-ANTENNA) SIGNAL PROCESSING

FIG.14

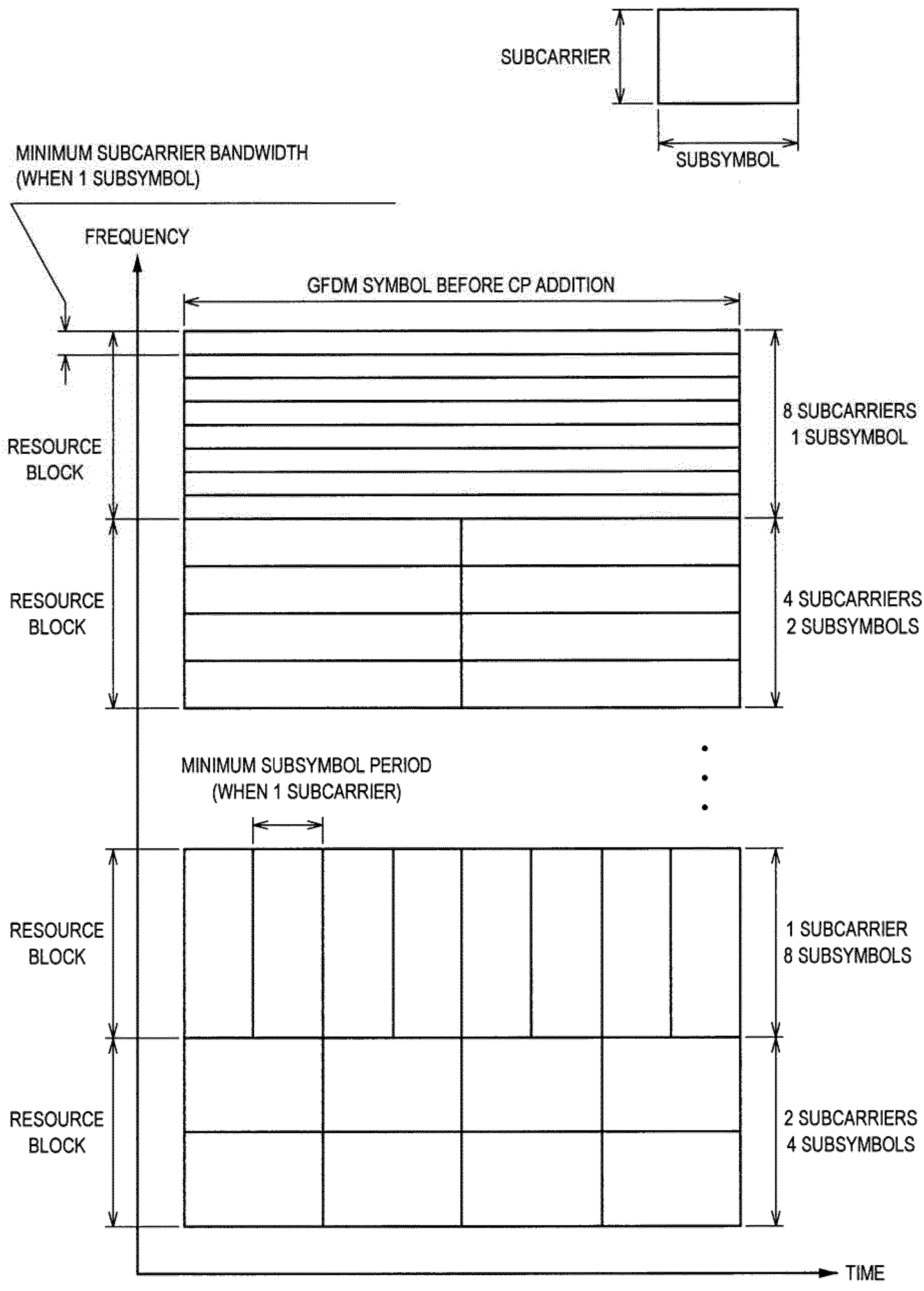
SUBCARRIER
SUBSYMBOL
MINIMUM SUBCARRIER BANDWIDTH
(WHEN 1 SUBSYMBOL)
FREQUENCY
GFDM SYMBOL BEFORE CP ADDITION
RESOURCE
BLOCK
8 SUBCARRIERS
1 SUBSYMBOL
RESOURCE
BLOCK
4 SUBCARRIERS
2 SUBSYMBOLS
MINIMUM SUBSYMBOL PERIOD
(WHEN 1 SUBCARRIER)
RESOURCE
BLOCK
1 SUBCARRIER
8 SUBSYMBOLS
RESOURCE
BLOCK
2 SUBCARRIERS
4 SUBSYMBOLS
TIME

FIG. 15

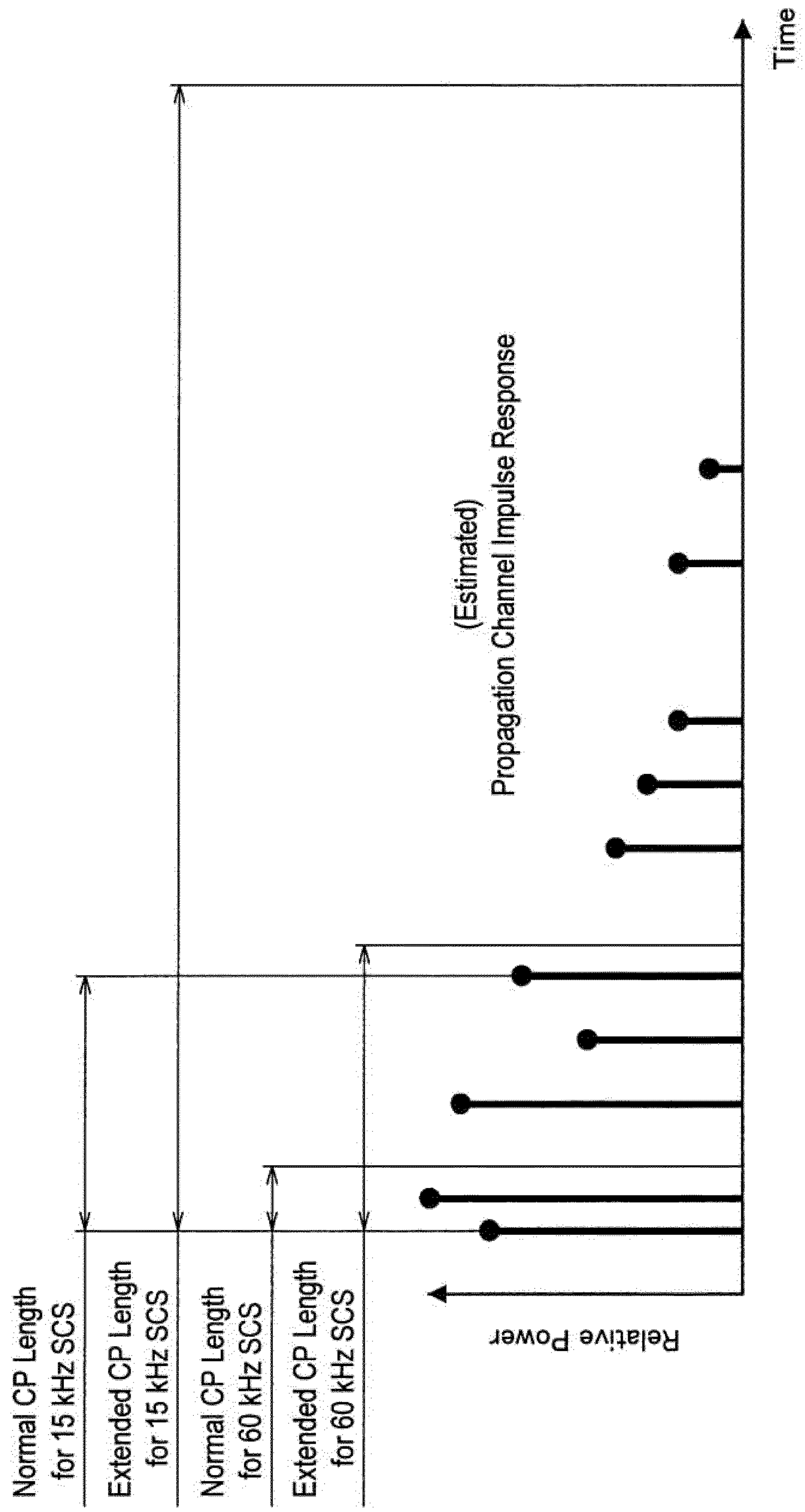
Normal CP Length for 15 kHz SCS
Extended CP Length for 15 kHz SCS
Normal CP Length for 60 kHz SCS
Extended CP Length for 60 kHz SCS
Relative Power
(Estimated) Propagation Channel Impulse Response
Time

FIG. 16

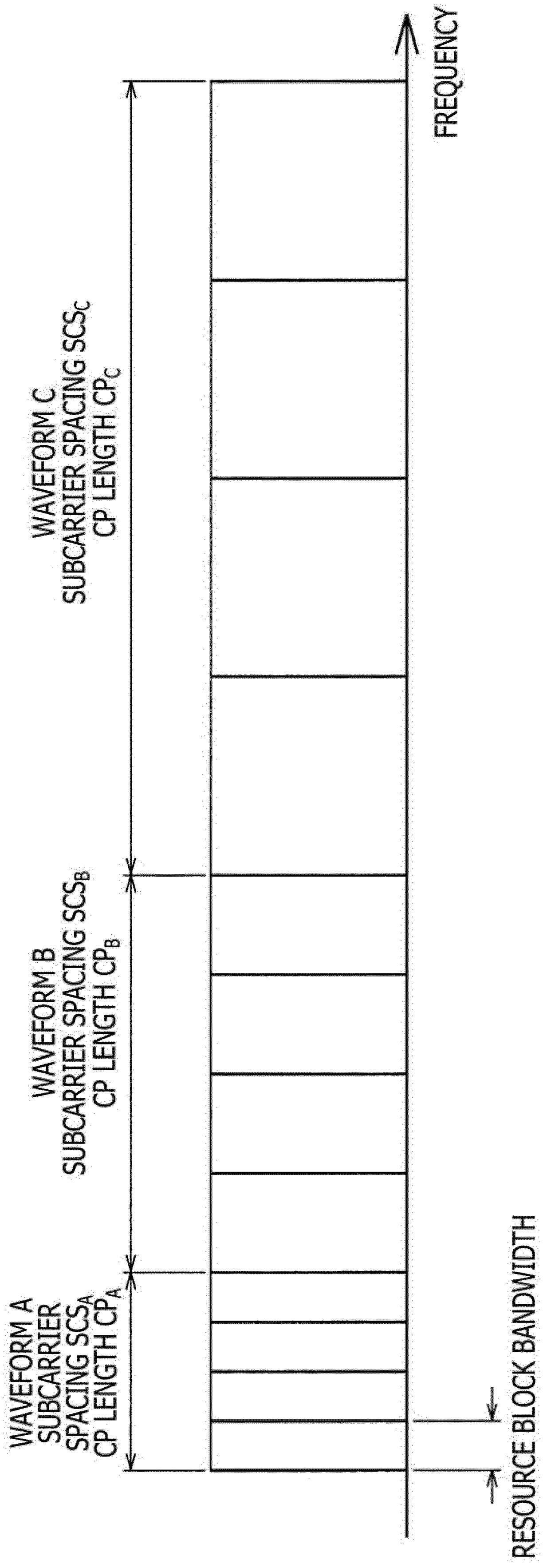
FREQUENCY
WAVEFORM C
SUBCARRIER SPACING $SCS_C$
CP LENGTH $CP_C$
WAVEFORM B
SUBCARRIER SPACING $SCS_B$
CP LENGTH $CP_B$
WAVEFORM A
SUBCARRIER
SPACING $SCS_A$
CP LENGTH $CP_A$
RESOURCE BLOCK BANDWIDTH

FIG.17

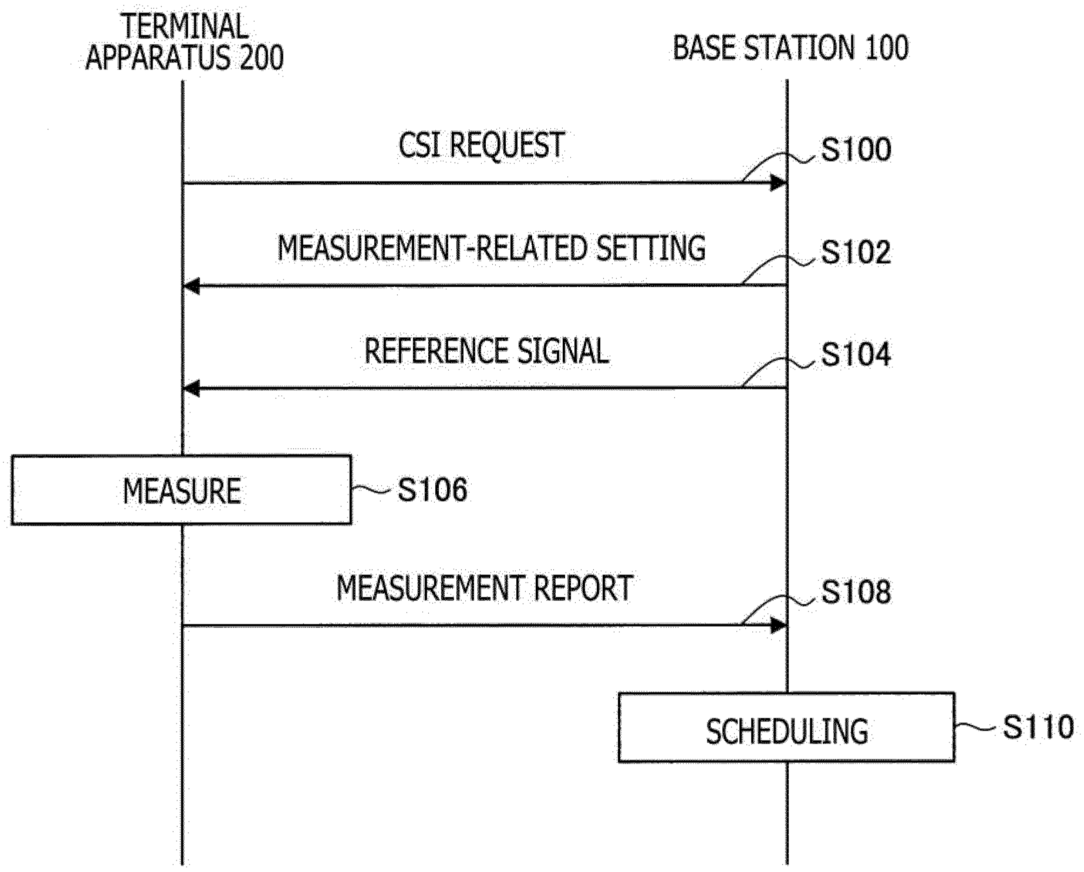
TERMINAL
APPARATUS 200
BASE STATION 100
CSI REQUEST
S100
MEASUREMENT-RELATED SETTING
S102
REFERENCE SIGNAL
S104
MEASURE
S106
MEASUREMENT REPORT
S108
SCHEDULING
S110

FIG.18

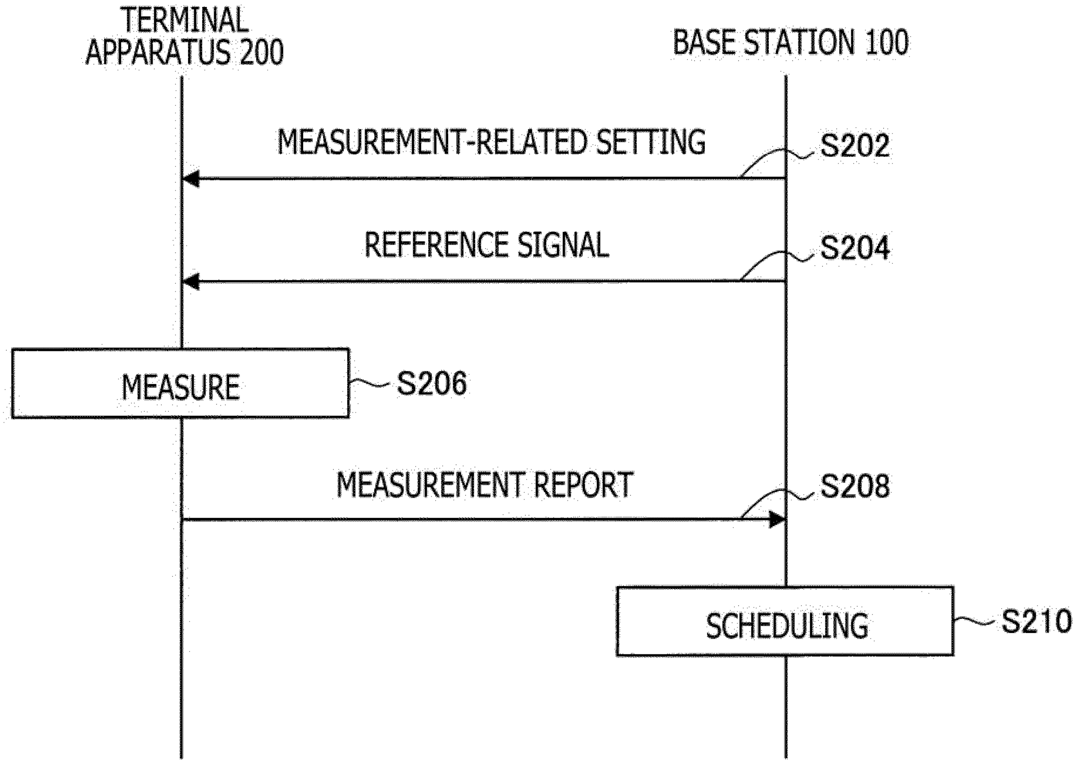
TERMINAL
APPARATUS 200
BASE STATION 100
MEASUREMENT-RELATED SETTING
S202
REFERENCE SIGNAL
S204
MEASURE
S206
MEASUREMENT REPORT
S208
SCHEDULING
S210

FIG.19

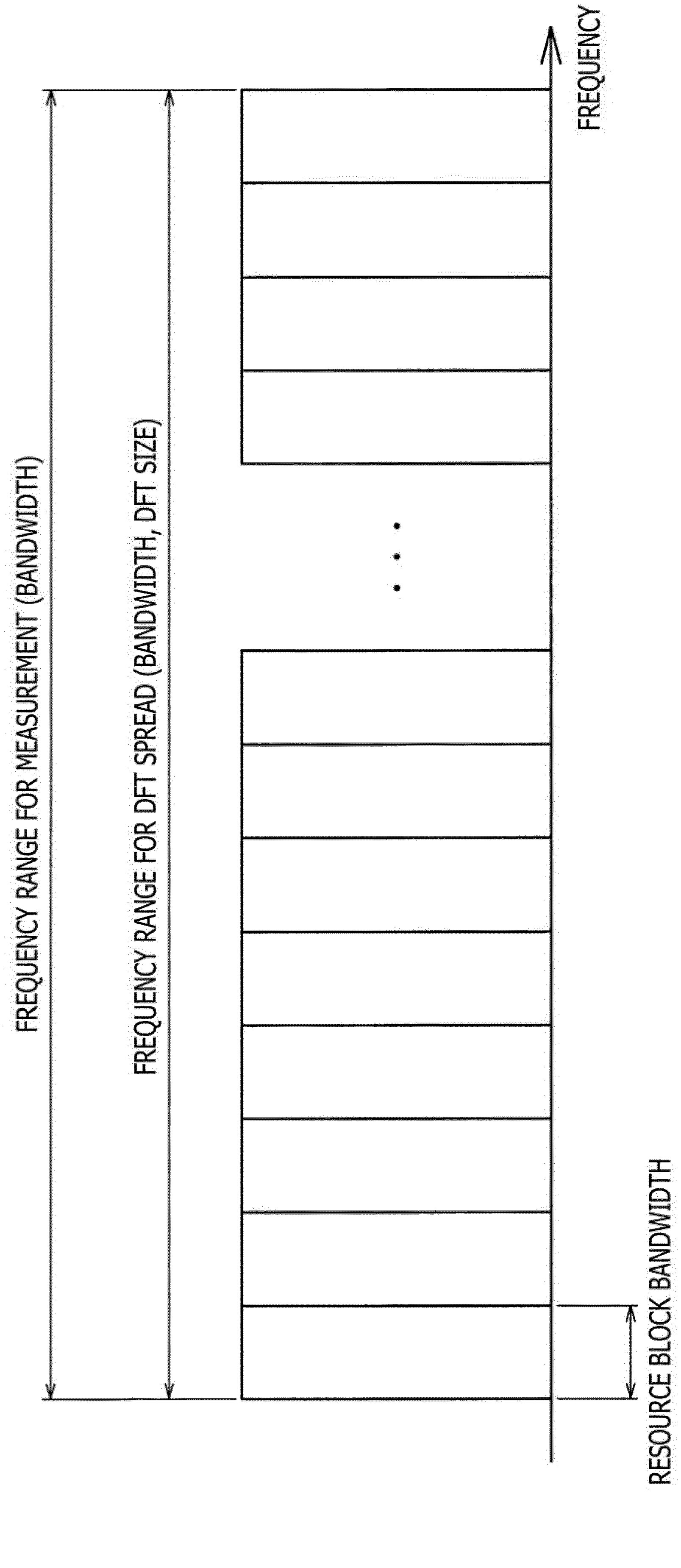
FREQUENCY RANGE FOR MEASUREMENT (BANDWIDTH)
FREQUENCY RANGE FOR DFT SPREAD (BANDWIDTH, DFT SIZE)
FREQUENCY
RESOURCE BLOCK BANDWIDTH

FIG.20

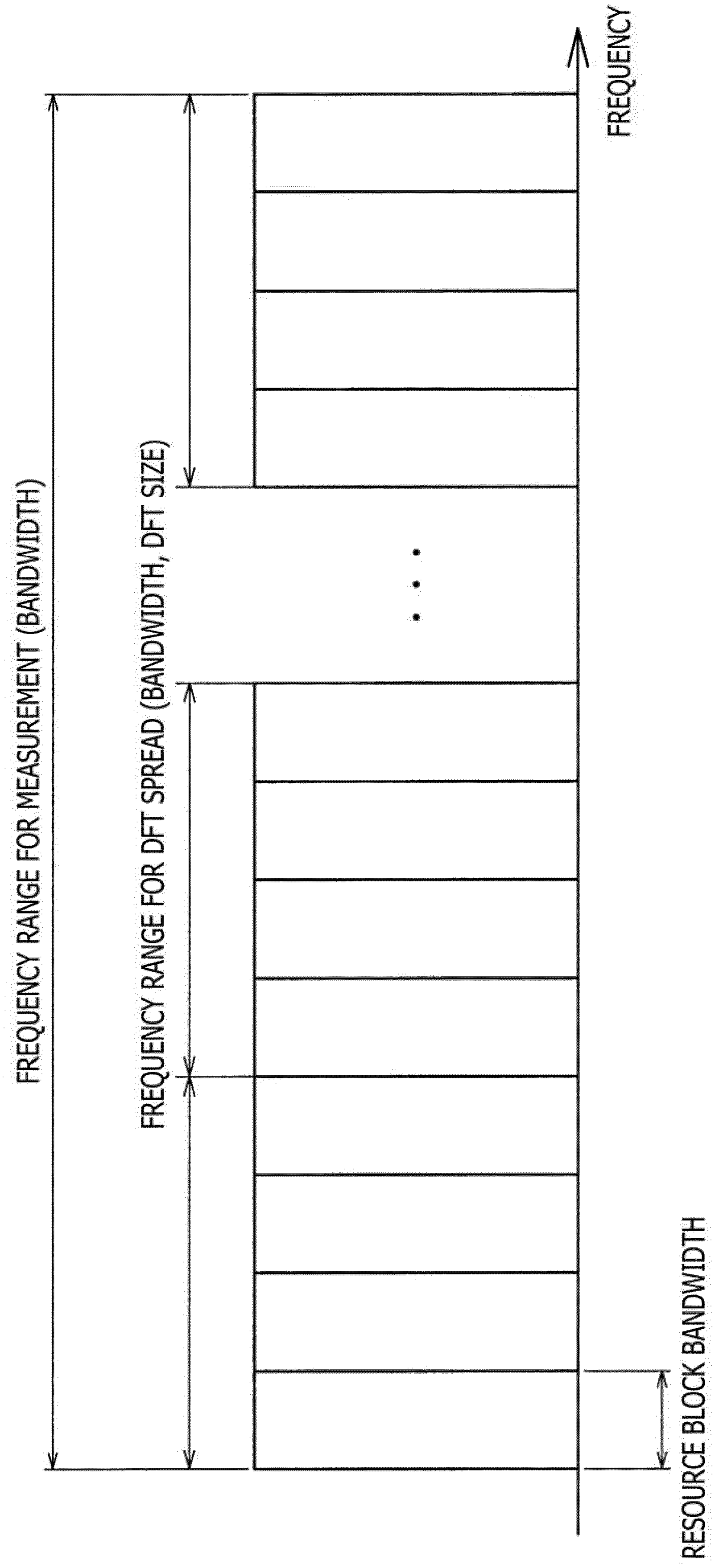
FREQUENCY RANGE FOR MEASUREMENT (BANDWIDTH)
FREQUENCY RANGE FOR DFT SPREAD (BANDWIDTH, DFT SIZE)
FREQUENCY
RESOURCE BLOCK BANDWIDTH

FIG. 21

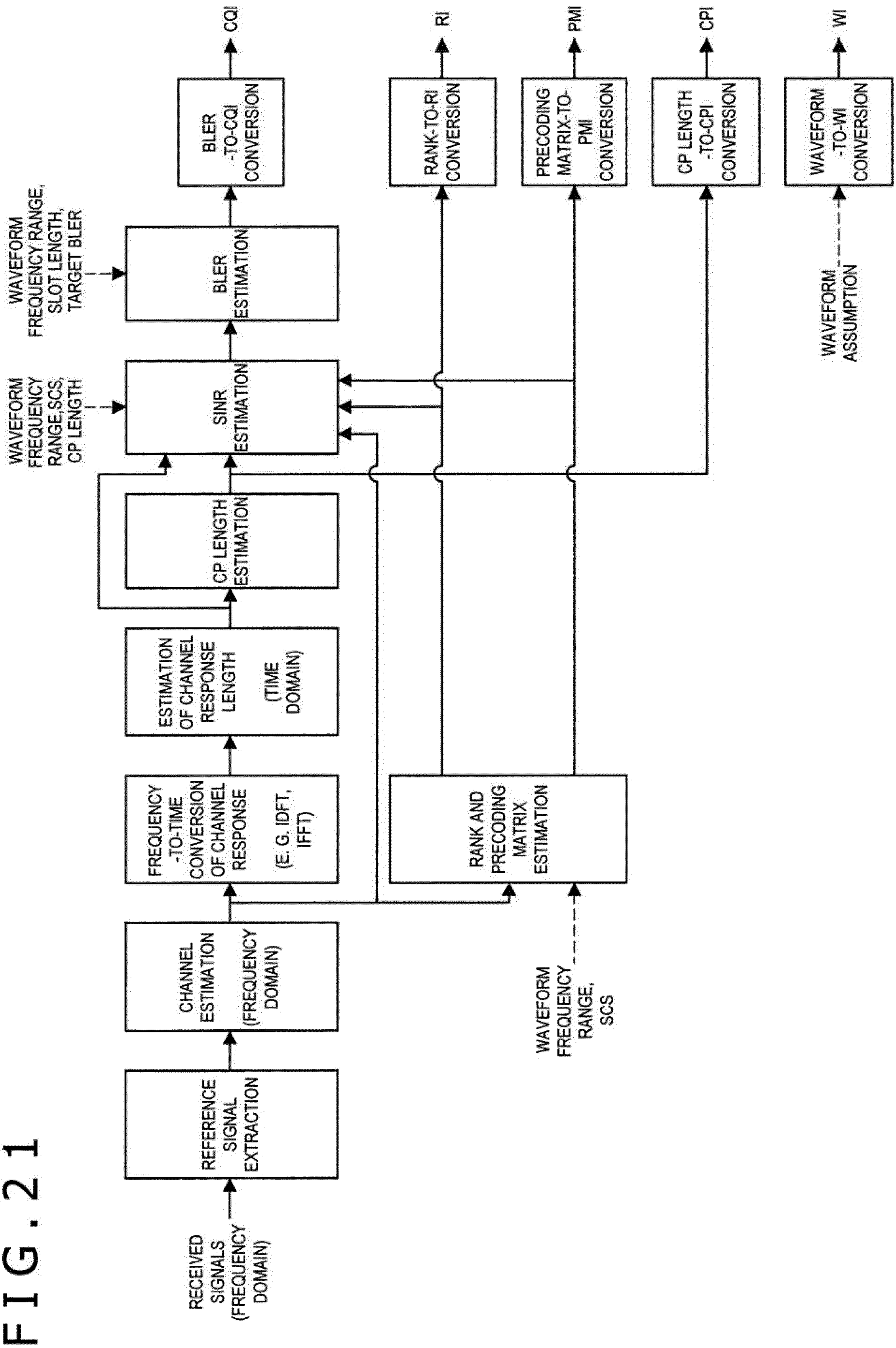
RECEIVED SIGNALS (FREQUENCY DOMAIN)
REFERENCE SIGNAL EXTRACTION
CHANNEL ESTIMATION (FREQUENCY DOMAIN)
FREQUENCY -TO-TIME CONVERSION OF CHANNEL RESPONSE (E. G. IDFT, IFFT)
ESTIMATION OF CHANNEL RESPONSE LENGTH (TIME DOMAIN)
CP LENGTH ESTIMATION
SINR ESTIMATION
WAVEFORM FREQUENCY RANGE,SCS, CP LENGTH
BLER ESTIMATION
WAVEFORM FREQUENCY RANGE, SLOT LENGTH, TARGET BLER
BLER -TO-CQI CONVERSION
CQI
RANK AND PRECODING MATRIX ESTIMATION
WAVEFORM FREQUENCY RANGE, SCS
RANK-TO-RI CONVERSION
RI
PRECODING MATRIX-TO-PMI CONVERSION
PMI
CP LENGTH -TO-CPI CONVERSION
CPI
WAVEFORM -TO-WI CONVERSION
WI
WAVEFORM ASSUMPTION

FIG.22

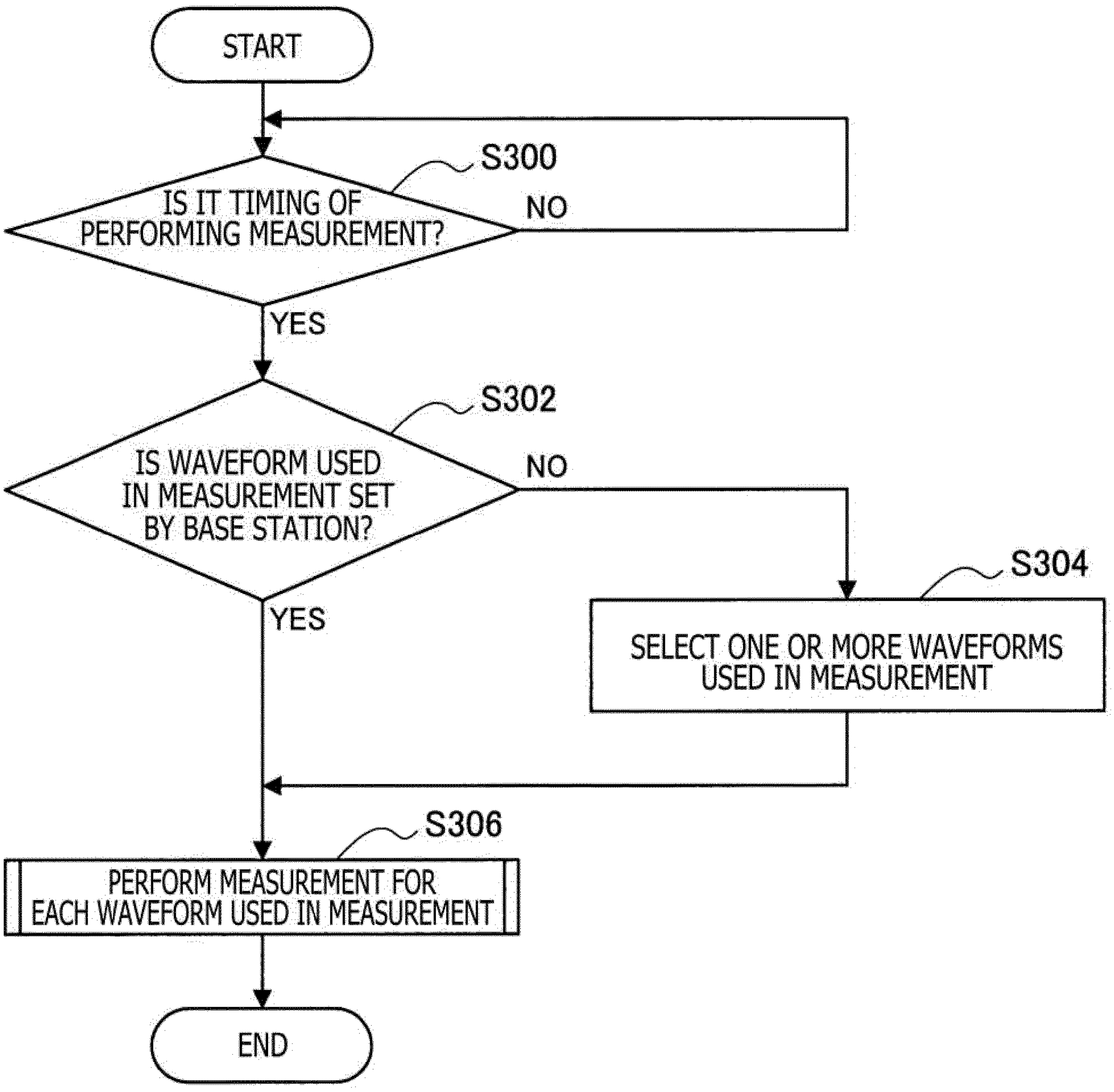
START
S300
IS IT TIMING OF PERFORMING MEASUREMENT?
NO
YES
S302
IS WAVEFORM USED IN MEASUREMENT SET BY BASE STATION?
NO
YES
S304
SELECT ONE OR MORE WAVEFORMS USED IN MEASUREMENT
S306
PERFORM MEASUREMENT FOR EACH WAVEFORM USED IN MEASUREMENT
END

FIG.23

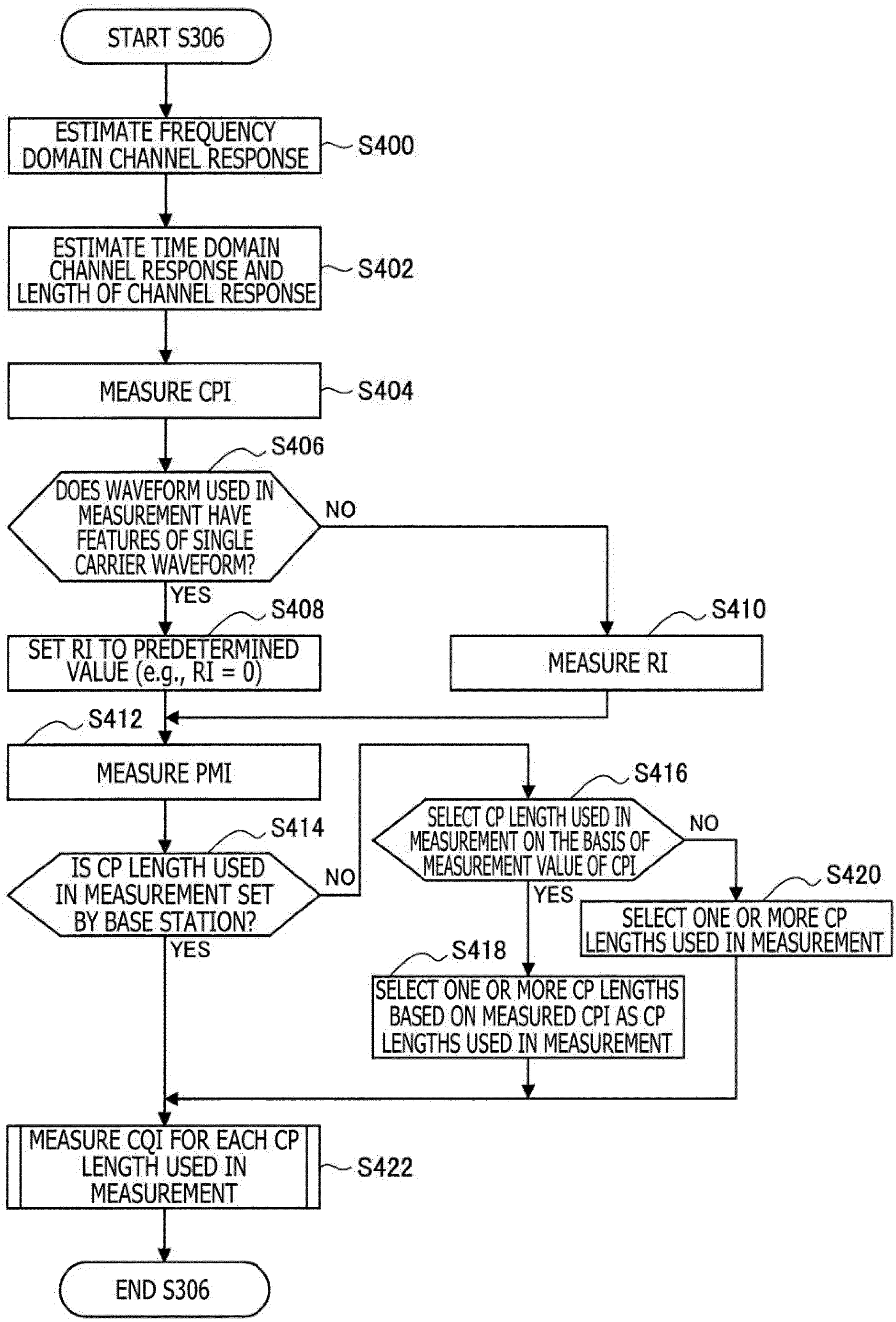
START S306
ESTIMATE FREQUENCY DOMAIN CHANNEL RESPONSE
S400
ESTIMATE TIME DOMAIN CHANNEL RESPONSE AND LENGTH OF CHANNEL RESPONSE
S402
MEASURE CPI
S404
S406
DOES WAVEFORM USED IN MEASUREMENT HAVE FEATURES OF SINGLE CARRIER WAVEFORM?
NO
YES
S408
SET RI TO PREDETERMINED VALUE (e.g., RI = 0)
S410
MEASURE RI
S412
MEASURE PMI
S414
IS CP LENGTH USED IN MEASUREMENT SET BY BASE STATION?
NO
YES
S416
SELECT CP LENGTH USED IN MEASUREMENT ON THE BASIS OF MEASUREMENT VALUE OF CPI
NO
YES
S418
SELECT ONE OR MORE CP LENGTHS BASED ON MEASURED CPI AS CP LENGTHS USED IN MEASUREMENT
S420
SELECT ONE OR MORE CP LENGTHS USED IN MEASUREMENT
MEASURE CQI FOR EACH CP LENGTH USED IN MEASUREMENT
S422
END S306

FIG.24

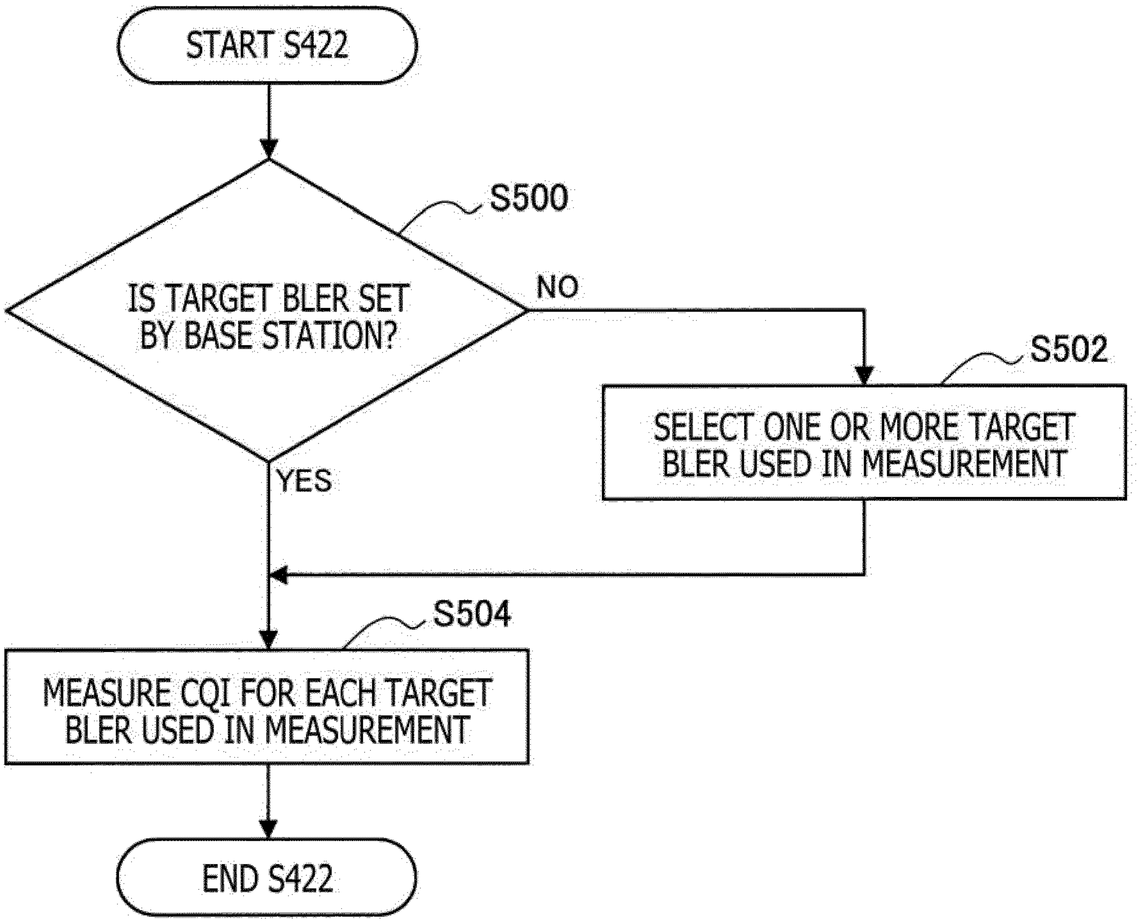
START S422
S500
IS TARGET BLER SET BY BASE STATION?
NO
YES
S502
SELECT ONE OR MORE TARGET BLER USED IN MEASUREMENT
S504
MEASURE CQI FOR EACH TARGET BLER USED IN MEASUREMENT
END S422

FIG.25

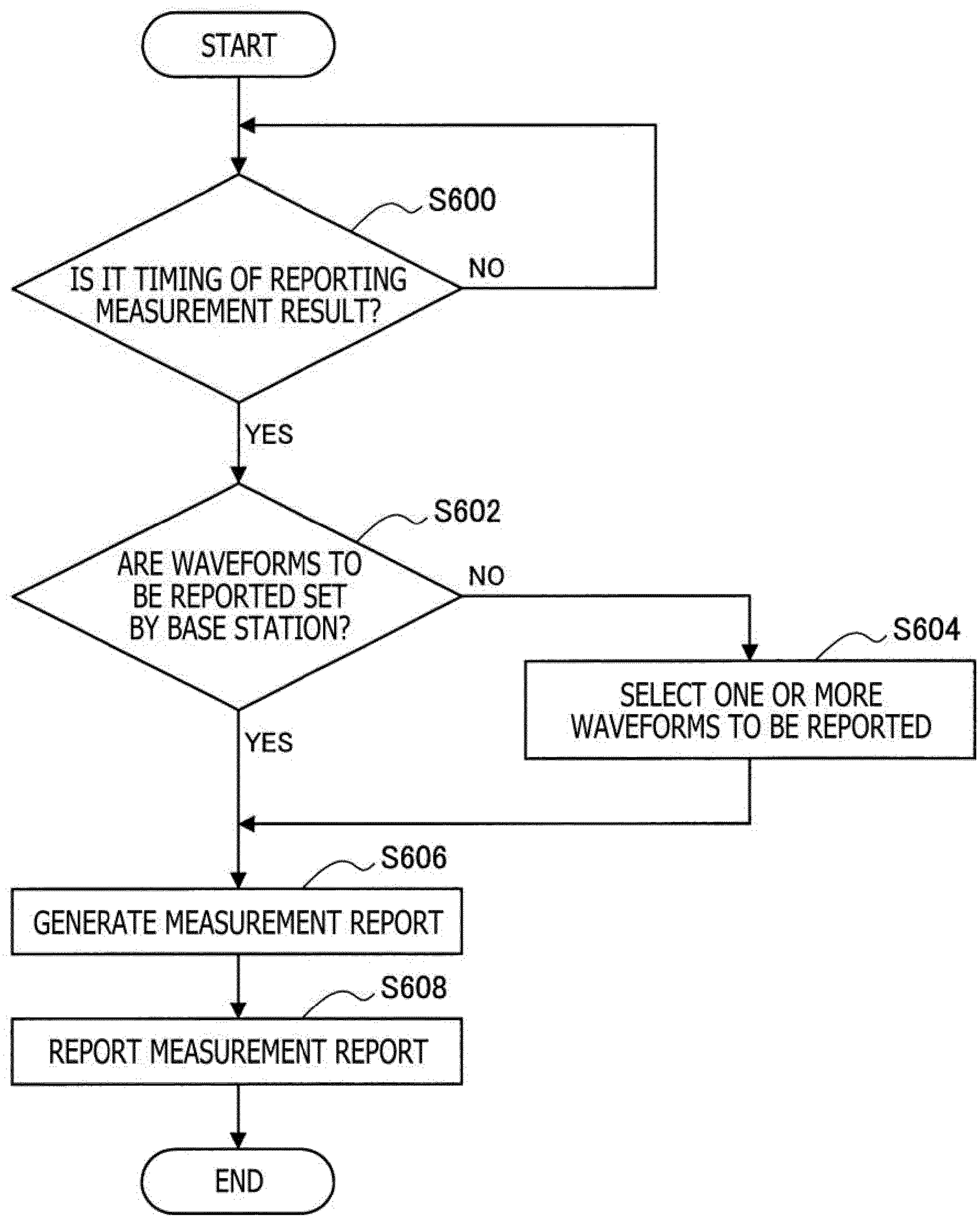
START
S600
IS IT TIMING OF REPORTING MEASUREMENT RESULT?
NO
YES
S602
ARE WAVEFORMS TO BE REPORTED SET BY BASE STATION?
NO
S604
SELECT ONE OR MORE WAVEFORMS TO BE REPORTED
YES
S606
GENERATE MEASUREMENT REPORT
S608
REPORT MEASUREMENT REPORT
END

FIG.26

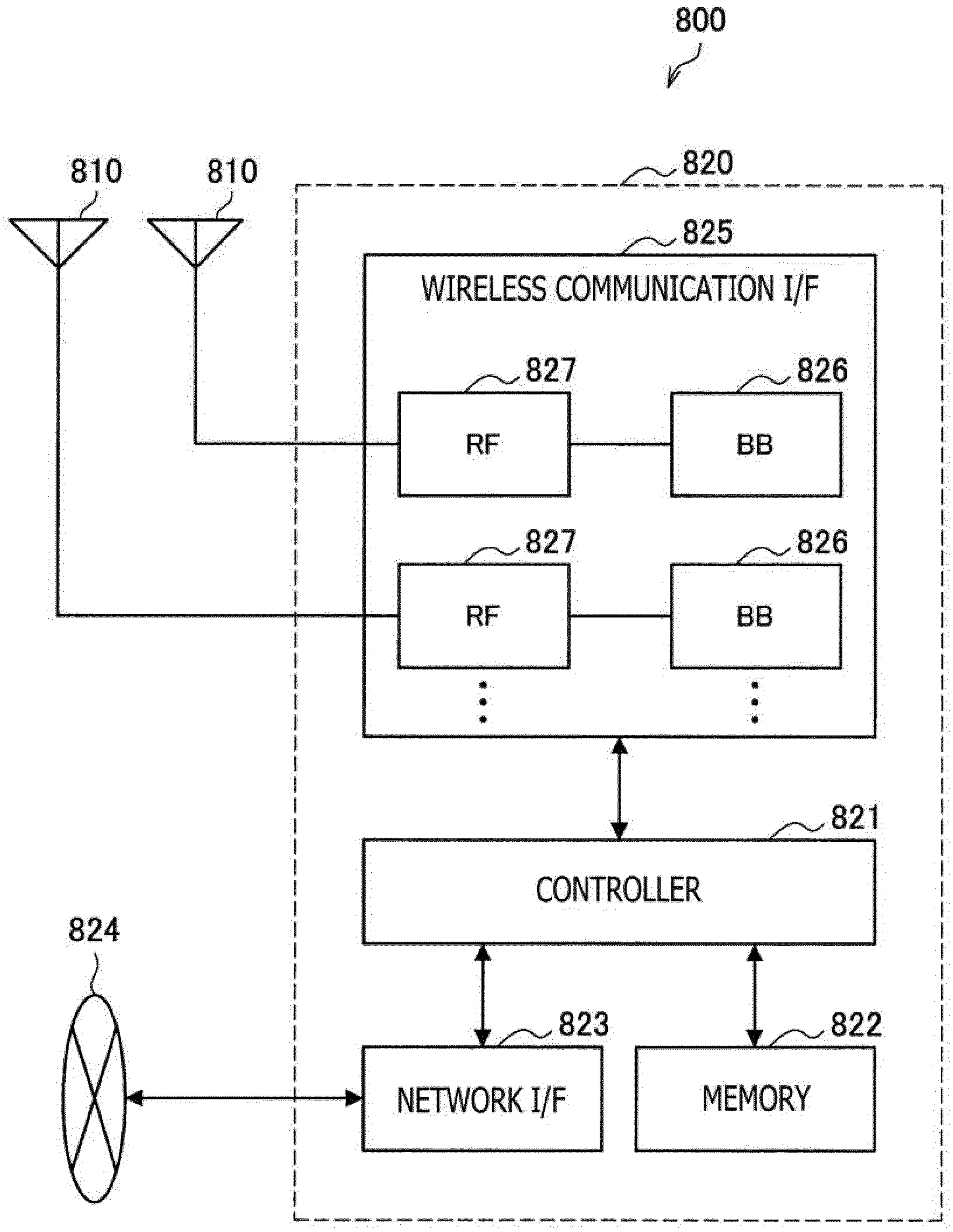
800
810
810
820
825
WIRELESS COMMUNICATION I/F
827
826
RF
BB
827
826
RF
BB
821
CONTROLLER
824
823
822
NETWORK I/F
MEMORY

FIG. 27

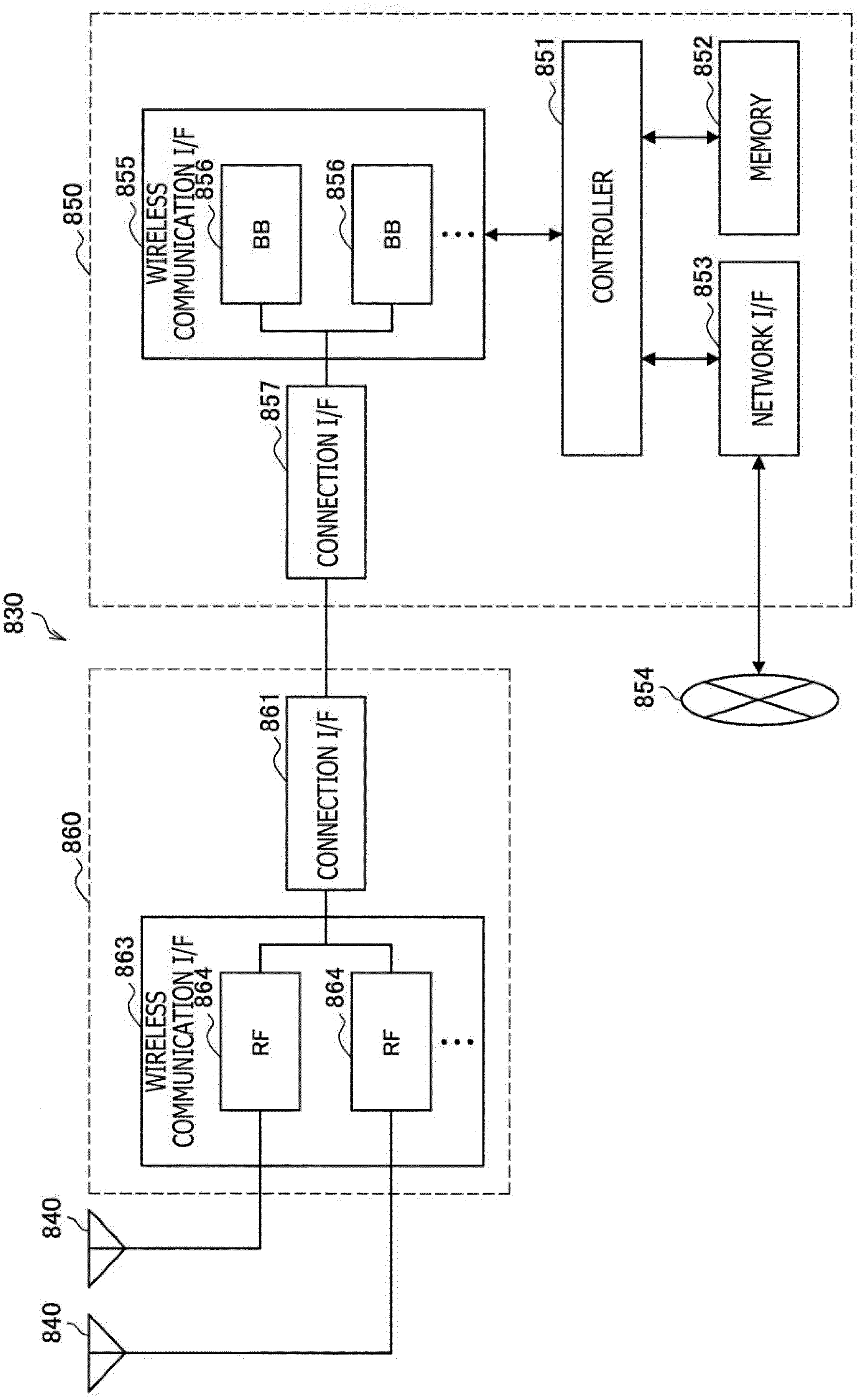
830
850
855
WIRELESS COMMUNICATION I/F
856
BB
856
BB
857
CONNECTION I/F
851
CONTROLLER
852
MEMORY
853
NETWORK I/F
854
860
861
CONNECTION I/F
863
WIRELESS COMMUNICATION I/F
864
RF
864
RF
840
840

FIG. 28

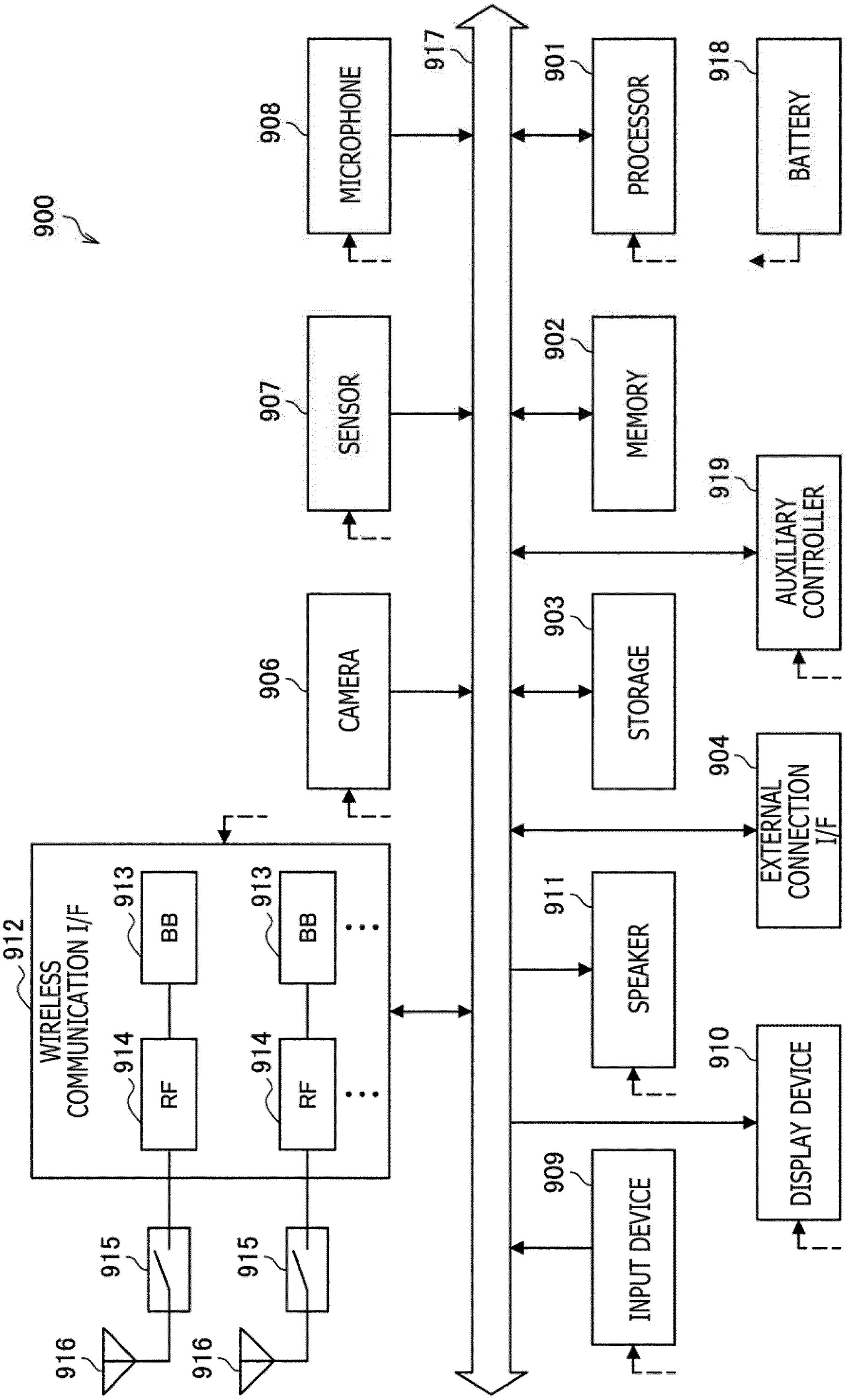
900
908
MICROPHONE
907
SENSOR
906
CAMERA
912
WIRELESS COMMUNICATION I/F
913
BB
913
BB
914
RF
914
RF
915
915
916
916
917
901
PROCESSOR
918
BATTERY
902
MEMORY
919
AUXILIARY CONTROLLER
903
STORAGE
904
EXTERNAL CONNECTION I/F
911
SPEAKER
910
DISPLAY DEVICE
909
INPUT DEVICE

FIG. 29

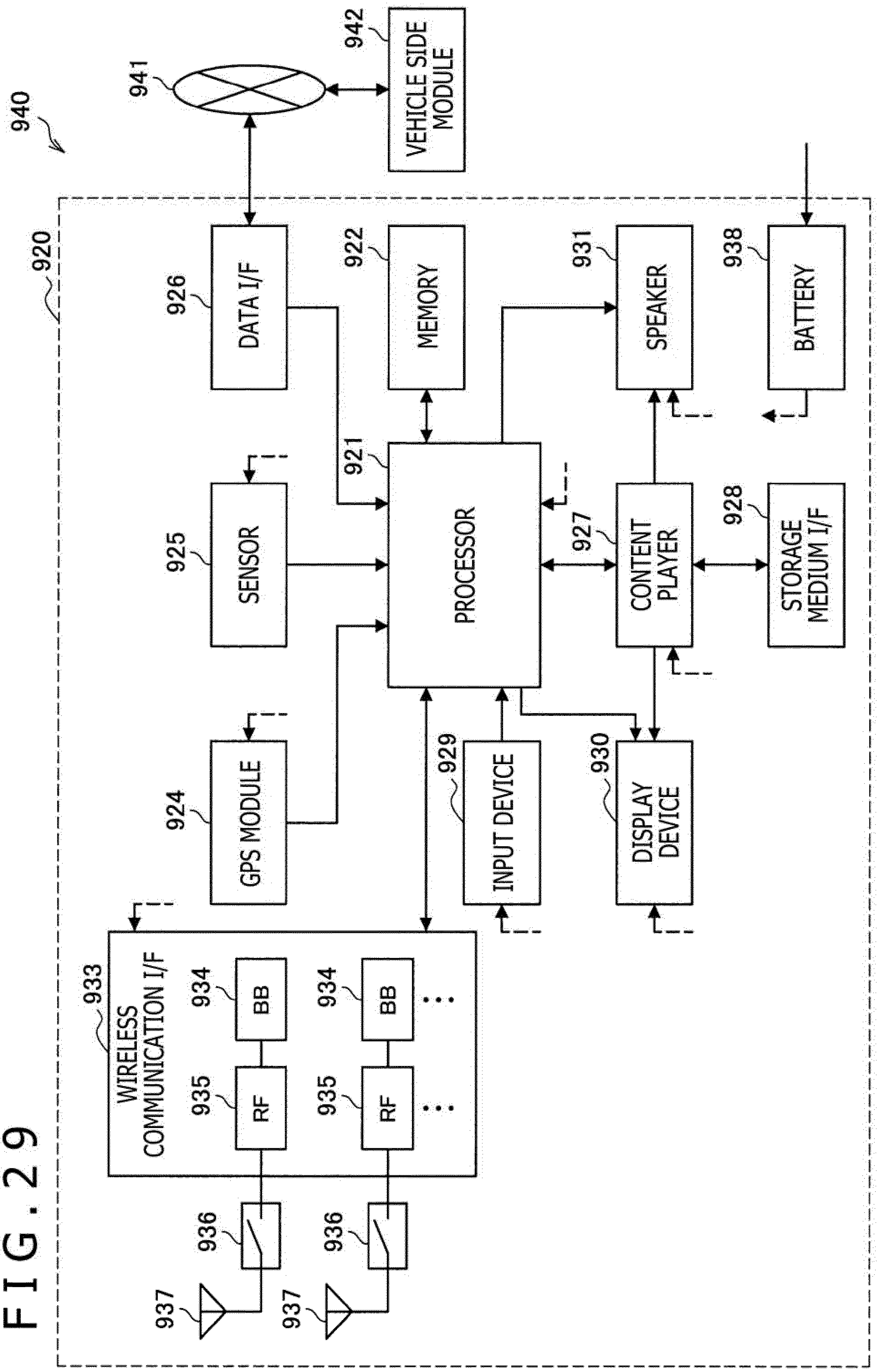

940
941
942
VEHICLE SIDE MODULE
920
926
DATA I/F
922
MEMORY
931
SPEAKER
938
BATTERY
925
SENSOR
921
PROCESSOR
927
CONTENT PLAYER
928
STORAGE MEDIUM I/F
924
GPS MODULE
929
INPUT DEVICE
930
DISPLAY DEVICE
933
WIRELESS COMMUNICATION I/F
934
BB
935
RF
936
937

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017056796 A
- EP 3282632 A1